# EUROPEAN PATENT APPLICATION

(11) **EP 4 454 459 A1**
(43) Date of publication of application: **30.10.2024**
(21) Application number: 24179027.8
(22) Date of filing: 21.05.2021
(51) Int. Cl.: A01K 61/60

(54) **FISH FARMING SYSTEM**

(30) Priority: 22.05.2020 NO 20200609; 26.06.2020 NO 20200755; 12.01.2021 NO 20210040
(62) Divisional of application: 21732602.4
(71) Applicant: Aker Solutions AS, 1325 Lysaker (NO)
(72) Inventor: MOHN, Marthe Almeland, 1165 OSLO (NO); LINDSTAD, Pål, 1364 FORNEBU (NO); STRAND, Erik, 0273 OSLO (NO); MO, Frode, 0375 OSLO (NO); PAULSHUS, Bjørn, 2007 KJELLER (NO); ALMELAND, Inge Bertin, 1166 OSLO (NO); FREDBORG, Andreas Jo Falk, 1384 ASKER (NO); ERSDAL, Svein, 0674 OSLO (NO); JAKOBSEN, Kristoffer Kjellså, 0372 OSLO (NO); BRUUN, Per Kristian, 0464 OSLO (NO); BJERKNES, Ole Johan, 0786 OSLO (NO); HANNUS, Henrik, 1363 HØVIK (NO)
(74) Representative: Zacco Norway AS

(57) **Abstract**

A fish farm (1100) comprising: a first enclosure (1130), a second enclosure (1140);the first enclosure (1130) being connected to the second enclosure (1140) by an access arrangement (1150) for selectively permitting movement of a fish between the first enclosure (1130) and the second enclosure (1140); and the first enclosure (1130) and the access arrangement (1150) being positioned within the fish farm (1100) such that both the first enclosure (1130) and the access arrangement (1150) are fully submergible when positioned in a body of water.

## Description

Some described examples relate to a fish farm, and particularly to a semi-submersible offshore fish farm. Further described are examples relating to a fish farming system or systems, and methods of operation thereof, a fish examination system, an extraction system for fish, and a variable buoyancy arrangement for a floating fish farm.

### BACKGROUND

The recent years have seen a considerable growth in the fish farming industry in various countries, and it is projected that fish farming will continue to play a key role in the provision of food in the future. A continual focus on safety, fish welfare and the environmental impacts of fish farming, however, drives a demand for improved methods and solutions for fish farming. Various such improvements have been suggested over the recent years.

The use of fish farms to rear fish is widely known, and such farms are often used to rear large numbers of fish within an enclosure, thereby reducing strain and reliance on wild fish populations to satisfy consumer demand for fish products. Fish farms may be arranged offshore, such as in the sea or ocean, or in some cases a fish farm may be positioned in a river or in another body of water, e.g. in a natural lake, in an artificially created body of water, or in an inshore, nearshore or coastal location.

For conventional fish farming, there exists several types of fish pens, but one of the most common technologies used in fish farming is to use a floating flexible collar with a suspended net. The fish pens are often moored in a grid mooring system. A nearby feed barge may be used for providing the required support systems for the fish pens.

Due to the continuous increasing demand for sea food and the limited number sheltered locations suitable for fish farming, there is a need to develop new solutions that can, for example, be used outside these sheltered areas, where environmental influence may be more severe, or which provide advantages in relation to production efficiency, fish welfare, or other parameters.

Publications which may be useful to understand the field of technology include WO17153417A1.

The objective of the present invention is to provide systems and methods which further improve on conventional solutions and techniques in the above or other areas.

### SUMMARY

The detailed description, claims and appended drawings outline various further embodiments and features.

One aspect relates to a fish farming system comprising a ring- or polygonal shaped floating collar, and an enclosure for fish suspended from and supported by the floating collar.

### BRIEF DESCRIPTION OF THE DRAWINGS

These and other characteristics will become clear from the following description of illustrative embodiments, given as non-restrictive examples, with reference to the attached drawings, in which:
Fig. 1 shows a perspective view of a fish farming system.
Fig. 2 shows a cross-section of the fish farming system of Fig. 1.
Fig. 3 shows a perspective view of a fish farming system.
Fig. 4 shows a top view of the fish farming system of Fig. 3.
Fig. 5 shows a side view of the fish farming system of Fig. 3.
Fig. 6 shows a cross-sectional perspective view of the fish farming system of Fig. 3.
Fig. 7 shows a cross-sectional perspective view of another fish farming system.
Fig. 8 shows a schematic cross-sectional view of the fish farming system of Fig. 7.
Fig. 9 shows parts of the fish farming system of Fig. 6.
Fig. 10 shows details of a lower buoyancy member according to an embodiment.
Figs 11 and 12 illustrate parts of a floating collar according to an embodiment.
Figs 13-16 illustrate parts of a floating collar according to embodiments.
Figs 17 and 18 illustrate a double net having spacers.
Figs 19-26 illustrate various steps in a fish crowding operation.
Figs 27 and 28 illustrate details of optional embodiments.
Figs 29-32 illustrate embodiments of systems for feed handling.
Fig. 33 shows a perspective view of a fish farming system.
Fig. 34 shows a cross-section of the fish farming system of Fig. 33.
Fig. 35 shows a cross-sectional elevation of a further example of a fish farming system.
Fig. 36 shows a plan view of the fish farming system of Fig. 35.
Fig. 37 shows a cross-sectional elevation of a further example of a fish farming system.
Fig. 38 shows a cross-sectional elevation of another example of a fish farming system.
Figs. 39 and 40 show various cross-sectional views of a collar for a fish farming system.
Fig. 41 shows a cross-sectional elevation of a fish farming system comprising a deflection module.
Fig. 41a is a cross-sectional view of a reinforced collar for a fish farming system.
Fig. 42 is a cross-sectional elevation of a further fish farming system comprising a deflection module.
Fig. 43 is a cross-sectional elevation of yet another example of a fish farming system.
Figs. 44 and 45 are schematic illustrations of a collar of a fish farming system.
Fig. 46 is a plan view of a fish farming system.
Figs. 47 and 48 are elevation and plan views of the fish farming system of Figure 46 showing operations performed within the system.
Figs. 49-52 are perspective views showing various aspects of collars for fish farming systems.
Figs. 53-55 illustrate a further example of a fish farming system having a triangular shaped collar.
Fig. 56 is a top view of a fish farming system in an embodiment.
Figure 57 illustrates a simplified sectional perspective view of a fish farm.
Figures 58-60 illustrate a side view of a fish farm and operation thereof.
Figures 61a-c illustrate an access unit of the fish farm.
Figure 62 illustrates a top view of the enclosures and access units of a fish farm.
Figure 63 illustrates a side view and operation of another example of a fish farm.
Figures 64-70 show an example of a volume restriction device.
Figures 71-77 show various examples of a fish farm and operation thereof.
Figures 78-80 illustrates a further example of a fish farm.
Figures 81 and 82 schematically illustrate a further example of a fish farm and equipment thereof.
Figures 83 and 84 illustrate an example of a fish examination system.
Figure 85 schematically illustrates a fish farm comprising a fish extraction system.
Figures 86-90 are further schematic illustrations of fish farms comprising fish extraction systems.
Figure 91a shows a perspective view of a fish farming system.
Figure 91b shows a cross-section of the fish farming system of Figure 91a.
Figure 92 is a schematic illustration of a fish farm comprising a ballasting system.
Figures 93 and 94 are schematic illustrations of the fish farm of Figure 1, showing the ballasting system in different configurations.
Figures 95 and 96 are a second illustration of an example of a fish farm comprising a ballasting system.
Figure 97-100 illustrate various examples of fish farms having differing ballasting systems.

### DETAILED DESCRIPTION

The following description may use terms such as "horizontal", "vertical", "lateral", "back and forth", "up and down", "upper", "lower", "inner", "outer", "forward", "rear", etc. These terms generally refer to the views and orientations as shown in the drawings and that are associated with a normal use of the invention. The terms are used for the reader's convenience only and shall not be limiting.

Aspects of the present disclosure relate to a fish farming installation with a semi-submersible floating collar for a submersible fish pen. This installation may operate on two or more operational drafts such that the top of the net cage can be in a surface or near-surface position, or completely submerged. The top of the net cage can, for example, be submerged to a depth of 5-10 meters or more below the water surface, in order to reduce the exposure to, for example, sea lice, algae, and jellyfish and also reduce the environmental loads from ocean currents and waves or from impacts from floating objects. The installation may optionally be designed for deeper submergence to further reduce environmental loads.

The fish farming system may be designed with a favourable ratio between water line area and displacement to provide an effective construction for handling bending moments from waves and ocean currents, less movement of the floating collar during bad weather conditions, Since the effect of waves tends to be less in deeper water, less movement will be transferred from the floating collar to the net cage, which in turn reduces the change of damage to the net cage and escape of fish.

A semi-submersible fish-farming system, such as a fish pen, according to aspects described herein may be operable between at least two different semi-submerged positions, a first position and a second position, by ballasting and de-ballasting. The system may comprise a rigid floating collar comprising a ring-shaped or polygonal lower buoyancy member, a ring-shaped or polygonal upper buoyancy member, a plurality of pillars connecting the buoyancy members, a net cage suspended from the floating collar and a net roof closing off the top of the net cage, the net cage with the net roof forming an enclosure for fish.

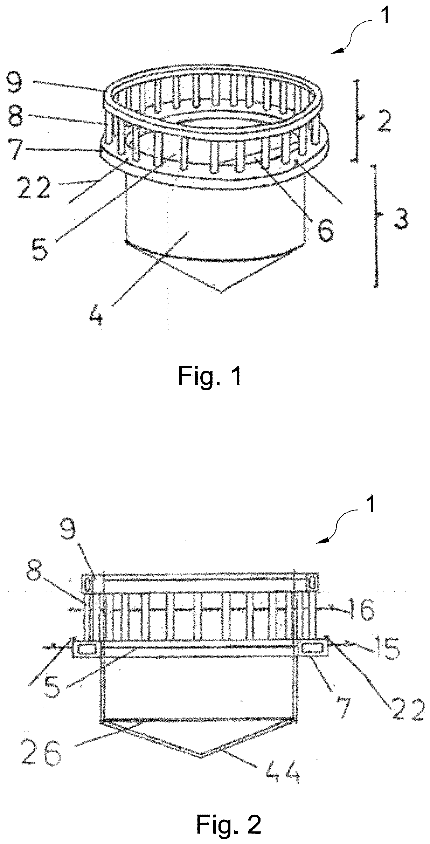

Fig. 1 is a principle drawing showing some elements of a fish farming system according to an aspect and Fig. 2 is a cross-section of the system shown in Fig. 1. In a preferred embodiment, the system comprises a fish pen 1 with a floating collar 2 comprising a lower buoyancy member 7, an upper buoyancy member 9 and a plurality of columns 8 which are mounted to the lower buoyancy member 7 and the upper buoyancy member 9. The columns 8 connect the lower and upper buoyancy members 7,9. The upper and lower buoyancy members 7,9 and columns 8 are preferably made of a rigid material, such as steel. For additional stiffness, for example to restrict torsion, bending or shear, tie struts or plates may be placed between some of the pillars. The upper and/or the lower buoyancy members 7,9 can, for example, have a circular or polygonal shape.

The lower buoyancy member 7 is a continuous, closed pontoon encircling the central portion of the fish pen 1 in which a net cage 3 is suspended, the net cage 3 forming an enclosure 3 for the fish and the net cage 3 being supported by the floating collar 2. The enclosure 3 is defined by sides 4 and a bottom 44, either or both of which can be flexible, such as a pliable net, or a stiff or semi-stiff construction. Further, the enclosure 3 can have a closed roof 5, arranged to close a top section of the enclosure 3, thereby preventing fish from leaving the enclosure 3 and/or preventing predators from entering the enclosure 3. The roof 5 may be a net, grid, or other suitable arrangement. The roof 5 may be of the same material as the sides 4 and/or bottom 44. Even if phrased a "net" here, this does not preclude other types of materials used in the roof 5, sides 4 or bottom 44. These elements can be separate elements or an integrated construction. The enclosure 3 may also comprise a bottom ring 26, which may be temporarily or permanently installed and which can be pulled towards the surface using winches and wires or other mechanical means for example for fish crowding. The bottom ring 26 may also provide weight to keep the enclosure 3 in a desired form (e.g. keeping the sides 4 substantially vertical), and it may be arranged semi-stiff or stiff in order to assist keeping the shape and form of the enclosure 3 in the case of water currents or other loads.

The bottom ring 26 may be connected to an outer net, an inner net, or both an outer and an inner net defining the enclosure 3, described in further detail below. In such a case, the bottom ring 26 may be arranged to support either the outer net or the inner net, or both the outer net and the inner net.

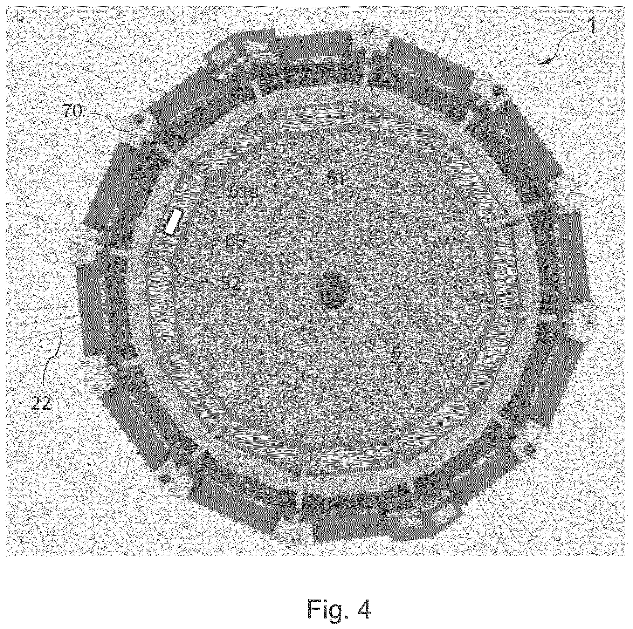

The lower buoyancy member 7 can, for example, have a circular, square, hexagonal octagonal or another design (for example such as that shown in Figure 4). The cross-section of the lower buoyancy member can for instance be circular, square or have another form. The interior of the lower buoyancy member 7 can, for example, be divided into one or more sections by means of partition walls. Further, the cross-section area and shape of the lower buoyancy member 7 does not need to be uniform. The upper buoyancy member 9 may have any of the above stated configurations and may also have a different design compared to the lower buoyancy member 7. The upper buoyancy member 9 and/or the lower buoyancy member 7 may be arranged with dedicated space for storage, operational equipment or the like. Such space may, for example, be in one or more partitioned sections in the structure.

The cross-section of the columns 8 can be circular, square or any other shape. Further, the columns 8 can each be identical or have different sizes and cross-sections. The distance between the columns 8 can be uniform or varying. The distance from a column 8 to the centre of the fish pen 1 can also be uniform or varying. The interior of at least some of the columns 8 is preferably in fluid communication with the interior of the lower buoyancy member 7. For trimming, water may be supplied or removed from the interior of the lower buoyancy member 7 and possible also the interior of some or all the columns 8. There may, optionally, be not multiple, but only one single column connecting the lower buoyancy member 7 and the upper buoyancy member 9.

The interior of one or more of the columns 8 may be may be arranged with dedicated space for storage, operational equipment or the like. One or more of the columns 8 can, for example, be divided into one or more sections by means of partition walls for this purpose. Such space may, for example, be in one or more partitioned sections in the structure.

To lower the fish pen 1 to an operational or submerged position 16, wherein the water line at the operational or submerged position 16 is indicated, water can be pumped into the interior of the lower buoyancy member 7 and possibly also into whole or parts of some or all of the columns 8, until the desired draft is achieved. The interior of the upper buoyancy member 9 and/or the columns 8 or parts thereof can, if desirable, be closed and filled with air or a foam material that provides buoyancy when the fish pen 1 is submerged. In this position, the roof 5 of the enclosure 3 can be kept at a certain depth to avoid or reduce the exposure to sea lice, jellyfish and algae. By submerging the enclosure 3, also the environmental impact of waves and currents can be reduced, since these impacts in general are more pronounced at or near the water surface and are reduced with increasing depth. By submerging the enclosure 3 a distance below the water surface, the movements transferred to the enclosure 3 from the collar 2 can also be reduced and the risk for damaging the enclosure 3 and escape of fish be reduced, due to less movement of the floating collar 2 and consequently less movement of the enclosure 3.

In order to raise the fish pen to a service position 15, wherein the water line at the service position 15 may be as indicated in Fig. 2, water can be pumped out of the lower buoyancy member 7 and/or the columns 8. The service position 15 may be a position wherein the lower buoyancy member 7 is at or near the water surface. In the service position 15, the floating collar 2 may then be floating with the lower buoyancy member 7 on the water surface such that the roof 5 of the enclosure 3 can be at or above the water surface. By removing the roof 5 (or parts thereof) of the enclosure 3 when the floating collar 2 is in service position 15, access to the enclosure 3 can be obtained for inspection, maintenance and different operations such as crowding and delousing. The upper buoyancy member 9 can function as support for travelling cranes, winches, personnel basket to facilitate operations in enclosure 3. All necessary tubes, hoses, cables etc. can be connected to the upper buoyancy member 9, led down the columns 8 to the lower buoyancy member 7 and out into the enclosure 3. Consequently, there is no need to take the enclosure 3 to surface for inspection or connection and the operation is not relying on divers/ROV.

The construction of the fish pen 1 may be so robust and strong that it is possible to utilize a direct-coupled mooring system 22 (see Figs 1-5) and it is not necessary to use a frame mooring, such as used for conventional systems with flexible plastic rings. This involves that each individual fish pen 1 can move independent of each other, if more fish pens 1 are placed in the same area, and the distance between each fish pen can be larger for increased safety and improved water quality.

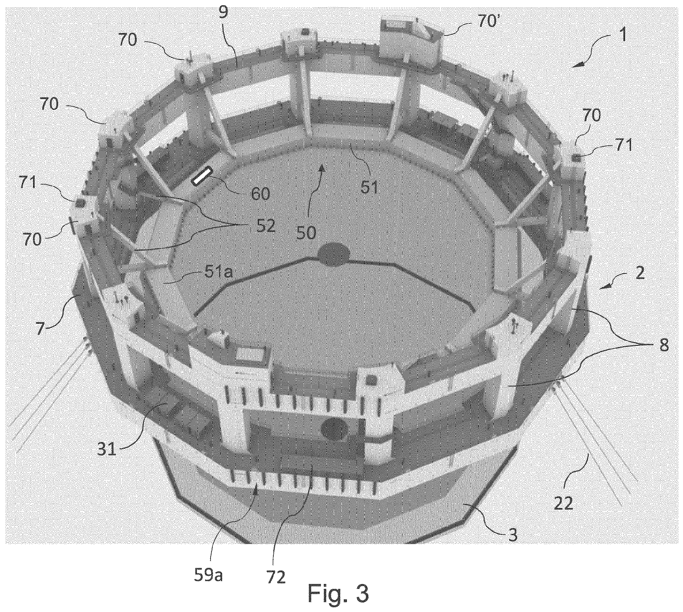

Illustrated in Figs 3-8 multiple embodiments with a similar structure are disclosed, showing preferable and/or optional implementations.

Referring to Figs 3-5, a fish farming system 1 comprises a ring- or polygonal shaped floating collar 2. Similarly as described above, the floating collar 2 may comprise a lower buoyancy member 7, an upper buoyancy member 9 and a plurality of pillars 8 interconnecting the upper and lower buoyancy members 7,9. Alternatively, the floating collar 2 may be made out of an integrated structure having other configurations.

An enclosure 3 for fish is suspended from and supported by the floating collar 2.

The system 1 further comprises an inner structure 50 fixed to and extending inwardly from the floating collar 2.

In this embodiment, the inner structure 50 is fixed to at least one of the upper buoyancy member 9 or one or more of the plurality of pillars 8. The inner structure 50 may, additionally, also be fixed to the lower buoyancy member 7.

The inner structure 50 comprises a ring- or polygonal shaped first inner structure part 51. In the shown embodiment, the first inner structure part 51 is supported by a plurality of second inner structure parts 52 extending between the first inner structure part 51 to the floating collar 2. The second inner structure parts 52 may extend from the first inner structure part 51 to one or more of the pillars 8, and/or to the upper buoyancy member 9. In the shown embodiment, the second inner structure parts 52 are angular members extending between the first inner structure part 51 and the pillars 8 and between the first inner structure part 51 to utility rooms 70 arranged on or as part of the upper buoyancy member 9. In another embodiment, the second inner structure parts 52 may extend between the first inner structure part 51 and any of the pillars 8, the utility rooms 70, the upper buoyancy member 9.

The roof 5 may be fixed to the inner structure 50. Preferably, the roof 5 is arranged such as to be enclosed by the first inner structure part 51 and arranged to close an opening defined by the first inner structure part 51 as shown in Figs 3-4. More preferably, the inner structure 50 is submerged in an operational or submerged position 16 (shown in Fig 1). In this position, the roof 5 of the enclosure 3 can be kept at a certain depth to avoid or reduce the exposure to e.g. sea lice, jellyfish and algae. By submerging the enclosure 3, also the environmental impact of waves and currents is reduced, since these impacts in general are more pronounced at the water surface and are reduced with increasing depth.

The inner structure 50 may, optionally, comprise beams or another structure extending diagonally or substantially diagonally across the enclosure 3. This can be used as, for example, a gangway for inspection or work operations, supporting equipment such as feeding systems or measurement/monitoring equipment, and/or for supporting the roof 5.

The inner structure 50 may comprise an opening 60,61 into the enclosure 3.

Advantageously, the opening 60,61 extends through the first inner structure part 51. As illustrated in Figs 3 and 4, the first inner structure part 51 may comprise a work deck 51a for an operator and an opening 60. The opening 60 may, for example, be a hatch arranged in the work deck 51a. The work deck 51a can be arranged to be non-submerged when the system 1 is in an upper draft position, such that operators can work on the work deck 51a. Advantageously, the opening 60,61 is arranged on the work deck 51a or is arranged such as to be accessible from the work deck 51a.

The opening 60,61 may, for example, allow an operator to access the enclosure 3 via the opening 60,61.

In any embodiment, the first inner structure part 51 may comprise a work deck 51a also without the opening 60 shown in Figs 3 and 4. This can allow an operator to access the enclosure 3 from above, for example via the area enclosed by the first inner structure part 51, and/or to access the roof 5.

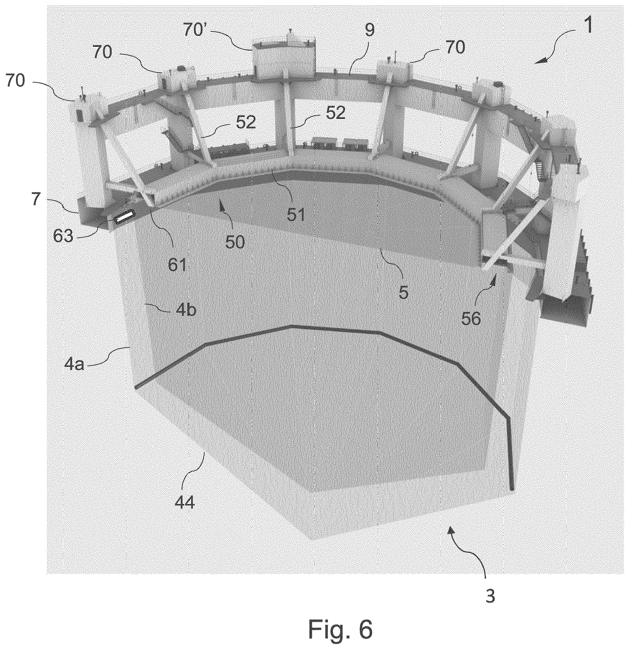

Alternatively, or additionally, the opening 60,61 may be accessible through a second inner structure part 52. Illustrated in Fig. 6, an opening 61 may for example allow access to the interior of the enclosure 3 from a utility room 70 on the floating collar 2. Advantageously, the second inner structure part 52 extends through the first inner structure part 51. The second inner structure part 52 may, for this purpose, be arranged hollow or with a feed-through channel or equivalent. There may, for example, be systems associated with feed distribution arranged in the upper buoyancy member 9 and/or the utility rooms 70. One or more feeding pipes may be provided from the utility rooms 70 (or alternatively from the pillars 8), via the second inner structure part 52, and into the enclosure 3. In this manner, direct access for feeding can be provided in a protected manner, and wherein feed can be provided more targeted to a desired region within the enclosure. The feeding pipes may be provided inside the inner structure part 52 or fixed partially or fully on the outside of the inner structure part 52. Advantageously, feed pipes are provided into the enclosure at multiple locations around the circumference of the floating collar, such that feeding can be carried out at multiple locations and/or feeding, for example, may be suspended at selected locations in case of strong water currents or other reasons.

Advantageously, a corresponding outlet can be provided at an outside of the floating collar 2, i.e. outside the outer net 4b. Such an outlet can be provided, for example, from one of the utility rooms 70, from an interior of the upper buoyancy member 9, a column 8 or from/via the lower buoyancy member 7. The outlet can, for example, be provided by means of a shaft, similar to the second inner structure part 52. Such an outlet can be used to launch equipment or tools to an outside of the floating collar 2, for example an inspection robot or a cleaning robot.

The second inner structure part 52 may, additionally or alternatively, be arranged hollow or with a feed-through channel or equivalent for introduction of tools or equipment therethrough. This may include tools or equipment needed for the operation of the fish farm system 1, such as inspection robots (e.g., an ROV), cleaning equipment (e.g. a net cleaner), or other items.

In any of the embodiments described or claimed herein, the second inner structure part 52 may advantageously be fixed to the columns 8, the upper buoyancy member 9 or the utility rooms 70 in a position which is above the waterline in all operational positions of the fish farm system 1.

One or more of the utility rooms 70 may have multiple internal storeys or be arranged higher than other utility rooms 70, as can be seen, for example, in Fig. 6. This can provide a higher freeboard on the particular utility room 70, for example in the case of work outside on the roof of the utility room 70 in question.

In any of the embodiments described or claimed herein, the utility rooms 70 may be arranged on the upper buoyancy member 9 and may be arranged to provide reserve buoyancy to the floating collar 2. In other words, the utility rooms 70 are not normally contributing to the buoyancy of the floating collar 2, but are dimensioned to provide reserve buoyancy, for example to meet regulatory requirements for such reserve buoyancy.

In any of the embodiments described or claimed herein, the first inner structure part 51 may be arranged such as to be fully above the waterline in a service position 15 of the fish farming system 1.

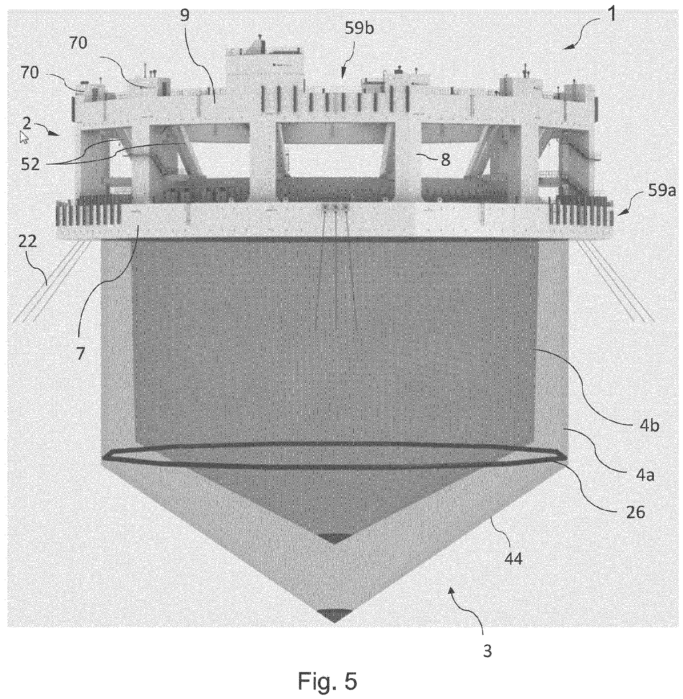

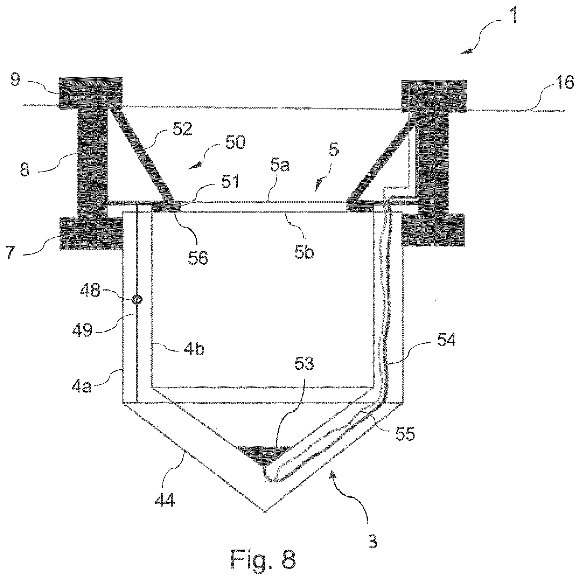

Now referring to Figs 5, 6, 7 and 8, the enclosure 3 may comprises a double net 4a,4b, wherein an outer net 4a is fixed to and suspended from the floating collar 2 and an inner net 4b is fixed to and suspended from the inner structure 50. Optionally, the outer net 4a can be suspended from the second inner structure parts 52 and the inner net 4b suspended from the first inner structure part 51. Advantageously, this can allow access between the inner and outer nets 4a,b, for example for inspection or maintenance. This access can be done in appropriate openings between the first inner structure part 51 and the floating collar 2. For example, such inspection may be carried out by means of a submersible camera or a remotely controlled vehicle. Optionally, other equipment such as lights or sensors may be permanently or semi-permanently installed in the annulus between the inner and outer nets 4a,b. This can be done by suspending the equipment in the annulus, or, optionally, by having a carrier arrangement permanently or semi-permanently installed in the annulus. Such a carrier arrangement, illustrated schematically in Fig. 8, may for example comprise a carrier 48 for holding the equipment, the carrier 48 being vertically movable along a wire or rod 49. The carrier arrangement may, alternatively or additionally, be arranged for horizontal movement within the annulus between the inner and outer nets 4a,b. For example, the carrier arrangement may be arranged on tracks which allow it to be moved about the inner net 4b.

Advantageously, a gap or an opening between the inner structure 50 and the floating collar 2 is provided at regular intervals about the outer circumference or outer sides of the inner structure 50.

Advantageously, a continuous gap or opening is arranged around the first inner structure part 51 and between the first inner structure part 51 and the floating collar 2.

Illustrated in Fig. 6, the lower buoyancy member 7 may comprise an opening 63 opening into an annulus or space between the inner and outer nets 4a,b. The opening 63 may, for example, be used for work operations or for launching tools or equipment into the annulus, such as inspection or cleaning tools.

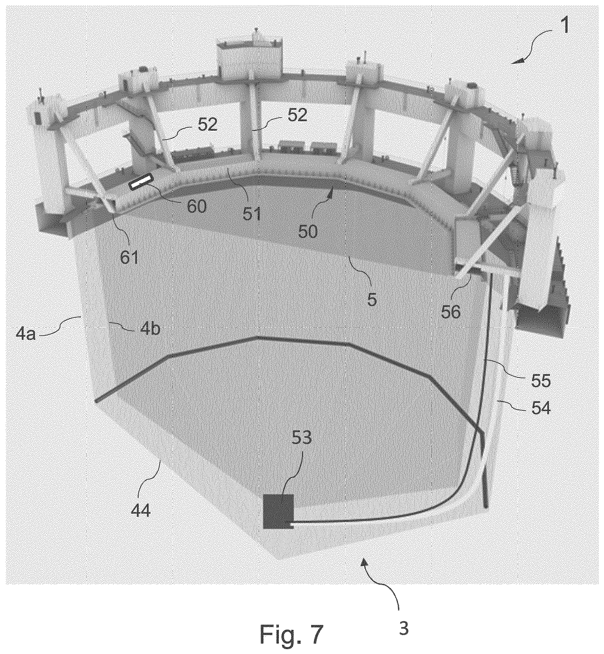

Optionally, as illustrated in Figs 7 and 8, the inner net 4b comprises a mort collector 53 connected to a mort collection pipe 54 arranged between the inner and outer nets 4a,b and extending from the mort collector 53 to the floating collar 2. The mort collector 53 may be a cone-shaped structure arranged at the bottom of the inner net 4b such as to collect faeces, dead fish, debris or other components. The mort collection pipe 54 may be arranged to receive anything collected by the collector 53. The mort collection pipe 54 may, for example, be connected to a pump for conveying the collected matter, or, as illustrated, an air lift system where an air hose 55 is provided to a lower part of the collection pipe 54. The air hose 55 may be arranged between the inner and outer nets 4a,b. Advantageously, this configuration provides protected positioning of the collection pipe 54 and, if applicable, the air hose 55, as well as the connection between the collection pipe 54 and the mort collector 53. One or both the air hose 55 and collection pipe 54 may be fixed to either the inner or outer net 4a,b for support and for holding the pipe/hose in place. For example, one of the inner or outer nets 4a,b may have hooks or the like to which the pipe and/or hose is connected, or sewn-in pockets through which the pipe and/or hose extends.

In some embodiments, the fish farming system 1 may comprise equipment for handling dead fish. This may include an ensilage system for processing such dead fish collected from the enclosure 3. The equipment may also comprise, for example, testing equipment. When a dead fish is retrieved from the collector 53, it can be processed for example by counting parasites which may be on the fish, by carrying out other tests on the dead fish, by weighing or otherwise measuring the fish, etc. Data from such processing can be stored and, for example, provided to a shore location. This can provide better knowledge of the state of the fish in the enclosure 3. Equipment to carry out such operations may, for example, be arranged in one of the utility rooms 70.

Additionally or alternatively, a fish pumping arrangement may be arranged in the annulus between the inner and outer nets 4a,b. For example, crowding of fish may be done downwardly or to a side of the inner net 4b and towards an opening with a hose connected to it. The hose may be similar to the collection pipe 54, to collect and pump live fish, for example to a well boat or another fish pen. The opening may be at the bottom, similar to the mort collector 53, or at some other position on the inner net 4b. This may provide a more effective method to collect live fish from the enclosure 3, with enhanced safety.

An UPS system may be provided to enable a controlled shut-down in the case power supply to or on the fish farming system 1 is interrupted.

The inner structure 50 may comprise an air-filled dome 56 accessible from inside the enclosure 3. This allows fish, such as salmon, access to air to trim its swim bladder also when the system 1 is submerged. Compressed air lines may be provided to the air-filled dome 56, for example arranged inside or outside the second inner structure parts 52, and connected to a compressor in a utility room 70 or arranged elsewhere on the floating collar 2.

The air-filled dome 56 may be arranged to be above the waterline in the service position 15. In this manner, access to the air-filled dome 56 can be arranged for cleaning or other purposes.

Alternatively, or additionally, the inner structure 50 may comprise one or more openings, for example hatches, through which access to the air-filled dome 56 can be obtained. Illustrated in Fig. 28, a hatch 66 may be provided in a wall of the first inner structure part 51 which defines the air-filled dome 56. The hatch 66 may be provided in a vertical section of the wall of the first inner structure part 51. The hatch 66 may be provided at a vertical elevation which is below a design water level 67 which defines the target water level in the dome 56 during normal operation. This water level may be arranged such that the vertical walls of the first inner structure part 51 which define the dome 56 extend farther down than the target water level in order to prevent wash-out of the air in the dome 56. By providing the hatch 66 below the target water level 67 one can reduce the risk of air leakage from the dome 56 during operation. In the de-ballasted / service position 15, the hatch 66 can be arranged to be above the waterline, along with the rest of the first inner structure part 51, such that access to the interior of the dome 56 can be obtained through the hatch 66.

As can be seen in e.g. Figs 7 and 8, the inner net 4b can be arranged radially outwardly from the air-filled dome 56 and the opening 60, 61, such that the air dome 56 and the opening 60, 61 face the interior volume of the enclosure 3.

This may, for example, be used for access during inspections, for example with a submersible camera or a remotely operated vehicle which can be introduced into the enclosure 3 via the opening 60, 61.

In any of the embodiments described or claimed herein, the upper buoyancy member 9 may be provided with an internal gangway or other type of communication path for an operator along at least a part of its length. The internal gangway may, for example, be provided between at least two of the utility rooms 70 and/or at least two of the columns 8, whereby an operator can access the internal space of the utility rooms 70 and/or the columns 8 from the internal gangway.

In any of the embodiments described or claimed herein, the fish farming system 1 may comprise one or more equipment modules 31 (see Fig. 3) fixed on the lower buoyancy member 7. The equipment modules 31 may advantageously be fixed on the lower buoyancy member 7 such that in an operational position 16 (see Fig. 2) the equipment modules 31 are submerged, while in a service position 15, the equipment modules 31 are above the waterline. The equipment modules 31 may, for example, be positioned on an upward-facing surface of the lower buoyancy member 7, as illustrated.

The equipment modules 31 may, for example, be arranged as water-tight containers which can house operational equipment for the fish farming system 1. Advantageously, the equipment modules 31 may house batteries.

By arranging equipment modules 31 on the lower buoyancy member 7, one can obtain improved cooling, for example passive cooling or direct access to sea water for active cooling, when the fish farming system 1 is in its operational draft, while securing easy access to the equipment modules 31 when the fish farming system 1 is in its service draft.

In any of the embodiments described or claimed herein, the operational position 16 may be such that the upper buoyancy member 9 is in contact with the water such as to provide buoyancy. Alternatively, the upper buoyancy member 9 may be above the waterline when in the operational position 16, as indicated in Fig. 2. In this case, the regular buoyancy for the fish farming system 1 is provided by the lower buoyancy member 7 and the columns 8. Optionally, the fish farming system 1 may be provided with more than two draft positions, whereby the fish farming system 1 can be selectively operated in a service position 15, in a first operational position 16 wherein the upper buoyancy member 9 is above the waterline, and a second operational position wherein the upper buoyancy member 9 is in contact with the waterline. This may add operational flexibility to the system, in that a suitable draft can be used according to the type of operation carried out, for example in order that the motion of the fish farming system structure in the water is suitable. This may be, for example, if carrying out an operation on the structure itself or on the fish, when mooring a ship or boat to the fish farming system 1, or for other reasons during conditions when full submergence is not required.

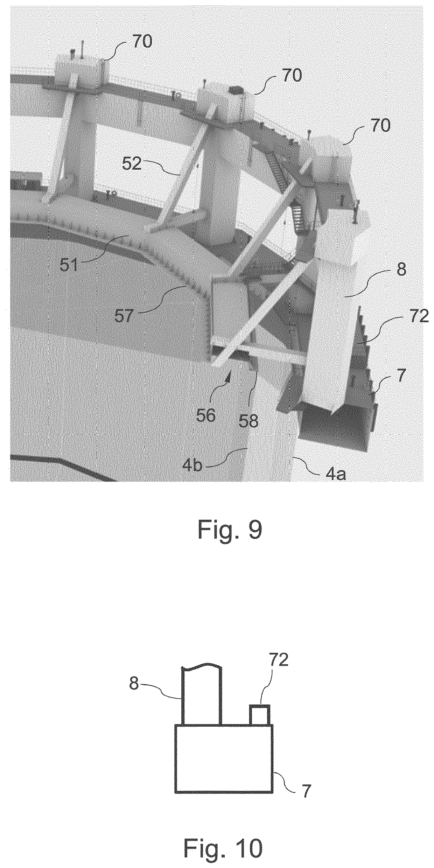

Illustrated in Fig. 9, in any of the embodiments described or claimed herein, the first inner structure part 51 may have an inner flange 57, an outer flange 58, or both an inner and an outer flange 57,58. The inner and/or the outer flange 57,58 may be arranged as a gangway or accessway so as to provide a work platform for an operator. This work platform may be used, for example, for inspections of the roof 5, the net 4a,b, the annulus between an inner and outer net 4a,b (if a double net is used), structural parts of the fish farm system 1, or other things. The gangway/accessway may also be used for inspecting the fish volume in the enclosure 3, or as a platform to carry out operations towards this volume. For this purpose, the gangway/accessway may have a fixation arrangement for tools or equipment, for example to allow tools/equipment to be temporarily fixed to the gangway/accessway while carrying out operations. There may, for example, be equipment or tool holders on or under the flange 57 or 58.

Parts of the inner structure 50, for example flange 57 or 58, can be used as support and/or hang-off for permanent and temporary equipment inside or outside the enclosure 3.

The roof 5 may be fixed to the inner flange 57, or optionally to other parts of the inner structure 50.

In any of the embodiments herein, the roof 5 can be a double net 5a,5b as illustrated in Fig. 8. The individual nets 5a,5b of the double net roof net are preferably attached at two elevations on the inner structure 50, as illustrated.

The net, or the inner net 4b, may be suspended from the outer flange 58.

Advantageously, the fish farming system 1 is designed such that the inner and/or outer flange 57,58 are above the waterline when the fish farming system is in the service position 15.

The first inner structure part 51 may also comprise a storage space for equipment, for example for wet storage of equipment. This will described in further detail below.

Illustrated in among other Fig. 5, the fish farming system 1 may have a boat access 59a,b at an outer periphery of the floating collar 2. Each boat access 59a,b may be fendered or otherwise prepared for service vessels, transport vessels or other types of vessels to dock at the floating collar 2. An upper boat access 59b may be provided at the upper buoyancy member 9, suitable for use in the operational position 16. A lower boat access 59a may be provided at the lower buoyancy member 7, suitable for use in the service position 15.

As is visible in among other Figs 6 and 9, the outer net 4a may be suspended from an inner periphery of the lower buoyancy member 7. Optionally, the outer net 4a may be suspended from an underside of the lower buoyancy member 7, or from an outer periphery of the lower buoyancy member 7. This may, for example, be desirable to obtain a larger distance between the inner and outer nets 4a,b.

Illustrated in Fig. 3, in any of the embodiments described or claimed herein, the utility room or rooms 70 may comprise a top opening 71. The top opening 71 may have a hatch or equivalent for selectively providing access into the respective utility room 70. The top opening 71 may be utilised for example to provide supplies, such as fish feed, fuel, or other necessities for the operation of the fish farming system 1.

Advantageously, the utility room or rooms 70 and/or the upper buoyancy member 9 may be arranged for receiving a container or equivalent landed onto the utility room 70 or upper buoyancy member 9. The container may carry equipment, for example a net for crowding, testing equipment, fish treatment equipment, or other items required for the operation of the fish farming unit 1 but which do not need to be permanently available.

The utility room or rooms 70 may comprise a top opening 71 and be arranged for a container or equivalent to be landed on the top opening 71. For example, by landing a container with an opening or a hatch at its bottom, direct access into the utility room 70 can be provided through the top opening 71 from inside the container after it has been landed on top of the utility room 70.

Alternatively, the top opening 71 may be arranged on the upper buoyancy member 9, equivalently.

A guiding structure (not shown) may be arranged on the upper buoyancy member 9 and/or the utility room or rooms 70 for guiding a container or equivalent which is to be landed thereon.

The utility room or rooms 70 may, additionally or alternatively, be arranged for landing personnel thereon. For example, a vessel with a heave compensated gangway can be used to land on the roof or top of the utility room 70 and a door or opening (which can be the top hatch) can be used for personnel to move inside the utility room 70. In this manner, safer landing of personnel can be achieved in that the utility room 70 may have a higher freeboard than other parts of the collar 2.

In any of the embodiments described or claimed herein, the columns 8 may be arranged on the lower buoyancy member 7 in a position which is shifted radially inwardly compared to a mid-point on the lower buoyancy member 7. (The term "radial" should be understood as a line extending from the horizontal centre point of the floating collar 2, even if the collar is polygonal and not circular.) Fig. 8 illustrates an embodiment in which the columns 8 are positioned approximately at a mid-point on the lower buoyancy member 7. Alternatively, as can be seen for example in Fig. 9, the columns 8 may be shifted inwardly so to be positioned closer to the enclosure 3. This may provide structural advantages and improved functionality for the fish farming system 1.

In any of the embodiments described or claimed herein, the columns 8 may be angled inwardly or outwardly. In other words, they do not necessarily need to be arranged vertically. This may be the case if, for example, the upper and lower buoyancy members 7,9 have different diameter, or if the placement of the columns 8 on the buoyancy members 7,9 otherwise dictate an angled orientation of the columns 8.

Illustrated in Figs 3, 9 and 10, in any of the embodiments described or claimed herein the lower buoyancy member 7 may have an elevated deck 72 for an operator. The elevated deck 72 may be arranged in conjunction with the boat access 59a on the lower buoyancy member 7. The elevated deck 72 may be provided for an operator to walk or move from a boat or ship docked at the floating collar 2, and/or for an operator to carry out manual operations such as operating the fish farm system 1, carrying out maintenance, or other required tasks. By providing an elevated deck 72, a required freeboard may be provided between the waterline and the deck at which the operator is present, for example in order to ensure appropriate safety of the operator. Providing an elevated deck 72 may avoid the need to de-ballast the floating collar 2 to a position at which the upper surface of the lower buoyancy member 7 itself has the required freeboard or height above the waterline, as that may not be necessary from an operational point of view.

In any of the embodiments described or claimed herein, the floating collar 2 may be substantially polygonal, having, for example, more than 6 sides, 8 sides, 10 sides, 12 sides, 16 sides, or more than 16 sides. A floating collar 2 according to embodiments described here may, for example, allow for efficient manufacturing and assembly. During construction, individual parts, such as each column 8, may share a common geometry, providing efficient manufacturing and assembly processes.

Advantageously, a horizontal cross-section of at least one of the columns 8 may have a polygonal shape. The polygonal shape may have four, five, six, or more than six sides.

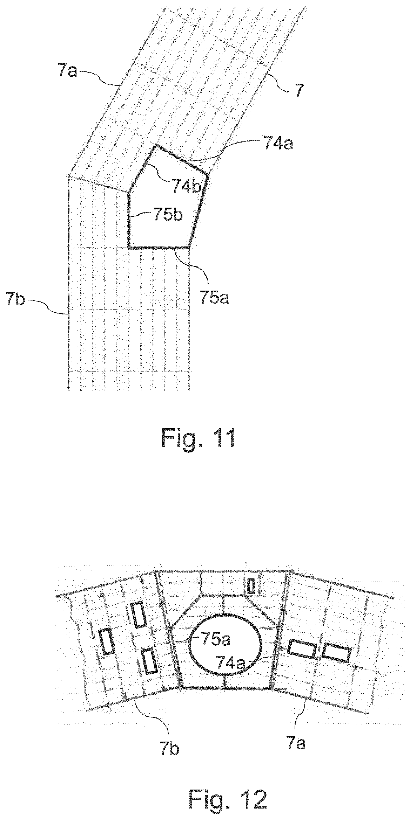

Illustrated in Figs 11 and 12, the column 8 may be positioned at the intersection of two parts 7a,7b making up the polygonal lower buoyancy member 7.

The polygonal shape of the column 8 may comprise at least one side 74a which is perpendicular to a longitudinal direction of the first part 7a.

Alternatively, or in addition, the polygonal shape of the column 8 may comprise at least one side 74b which is parallel with a longitudinal direction of the first part 7a.

Alternatively, or in addition, the polygonal shape of the column 8 may comprise at least one side 75a which is perpendicular to a longitudinal direction of the second part 7b.

Alternatively, or in addition, the polygonal shape of the column 8 may comprise at least one side 75b which is parallel with a longitudinal direction of the second part 7b.

By providing the column 8 as a polygonal structure with at least one side perpendicular to or parallel with the longitudinal direction of the lower buoyancy member 7 provides structural advantages in the interconnection between the column 8 and the lower buoyancy member 7. For example, the parts 7a,b can be provided with strengthening members extending longitudinally and/or transversely on the inside of the lower buoyancy member 7. Providing sides of the column 8 which align with the strengthening members can provide enhanced structural stability and avoid local regions of high stress concentration in the interface between the column 8 and the lower buoyancy member 7.

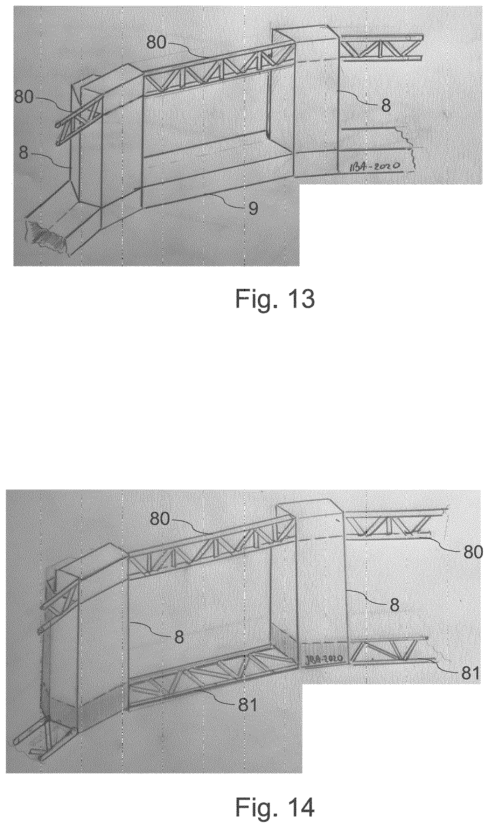

Illustrated in Figs 13-16, in any of the embodiments described or claimed herein, the upper buoyancy member 7, the lower buoyancy member 9, or both the upper and lower buoyancy members 7,9 may be entirely or partially replaced by a truss structure.

As illustrated in Fig. 13, the upper buoyancy member 7 may be replaced by an upper truss structure 80, which may extend between upper parts of the columns 8.

Optionally, or additionally, as illustrated in Fig. 14, the lower buoyancy module 9 may be replaced by a lower truss structure 81. Figs 13 and 14 illustrate the truss structures 80,81 as being a predominantly flat, two-dimensional structure, however other designs may also be suitable, such as a truss structure also having a depth / a more three-dimensional, elongate structure. Either of the truss structures 80,81 may be arranged upright (as truss structure 80) or horizontal (as truss structure 81), according to any particular design requirements.

Advantageously, in any of these embodiments, the lower truss structure 81 may be arranged so as to be positioned above the water surface in the service position 15 of the floating collar 2. In such a case, the lower truss structure 81 may, for example, be available for inspection when in the service position 15.

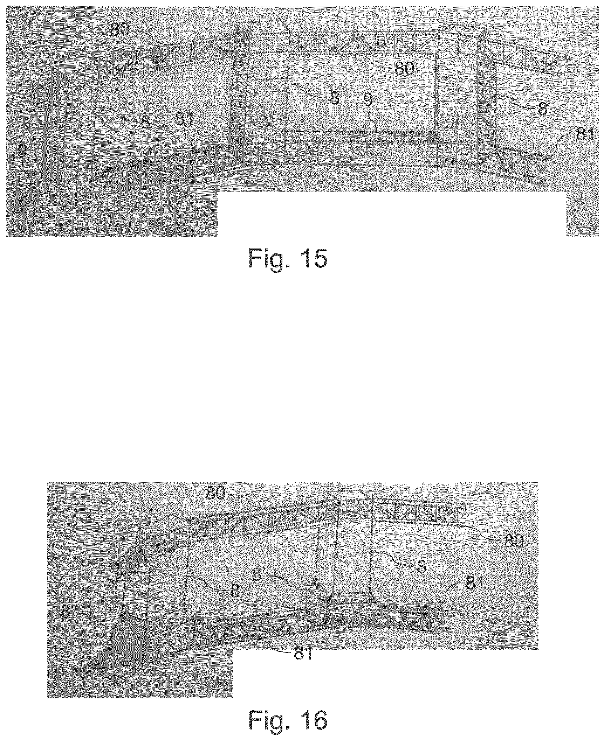

Illustrated in Fig. 15, the floating collar 2 may also comprise a combination of truss structure 81 and lower buoyancy module 9, for example alternately or with a portion of the floating collar 2 being made up of a truss structure 81 and part of the floating collar 2 being made up of a truss structure 81. The same may be the case for the upper buoyancy module 7 and upper truss structure 80, as appropriate.

Illustrated in Fig. 16, the shape of the columns 8 may be adapted to the overall design, for example the columns 8 may comprise an increased volume 8' at a lower part thereof in order to provide additional buoyancy, if required.

Optionally, the columns 8 may be arranged as a truss structure, or some of the columns 8 may be arranged as a truss structure. In this manner, some (or all) columns 8 may be arranged to provide structural support but not significantly contribute buoyancy to the collar 2.

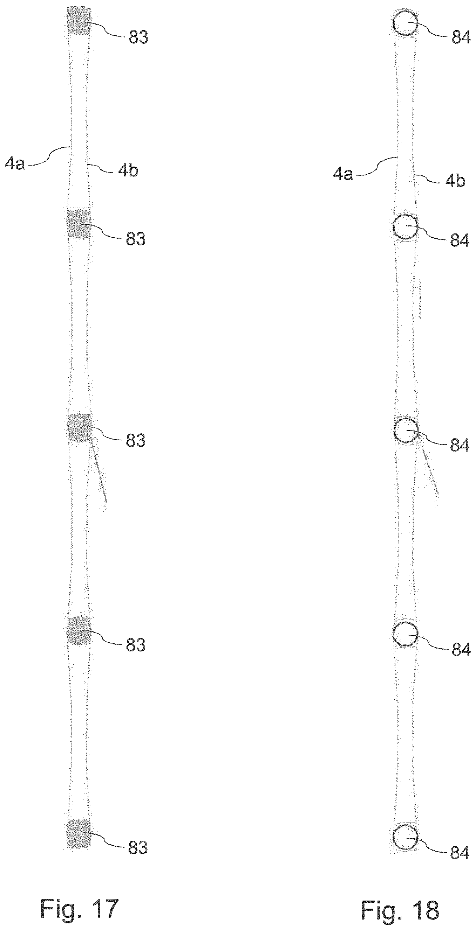

In any of the embodiments described or claimed herein, if using a double net 4a,b, the fish farming system 1 may be provided with spacers 83,84 provided between the inner net 4b and the outer net 4a. This is illustrated in Figs 17 and 18. In Fig. 17, spacers 83 are provided between the inner and outer nets 4a,b, wherein the spacers 83 are made up of an elongate, pliable water-tight container filled with liquid. The container may advantageously be filled with sea water. Due to the water-tight structure, the container may have enhanced stiffness (even if not completely rigid), such as to provide stability and support to the nets 4a,b. Being positioned between the nets 4a,b, the container prevents the nets 4a,b from contacting each other, for example due to water currents, which may otherwise have led to increased wear and potential damage. The spacers 83 may be fixed to one or both of the nets 4a,b, form a part of one of the nets 4a,b (e.g. be sown into the net), or simply be positioned between the nets 4a,b without being fixed to either of them.

In Fig. 18, the spacers 84 are provided by flexible or rigid pipes arranged between the nets 4a,b, for example PE pipes. The pipes may be positioned in holders in one of the nets 4a,b, for example sewn-in pockets in the nets 4a,b. Optionally, the spacers may simply be positioned between the nets 4a,b without being fixed to either of them.

Advantageously, the spacers 83,84 are suspended between the nets from the collar 2, between the lower buoyancy member 7 or from the first or second inner structure parts 51,52.

The spacers 83,84 may extend predominantly vertically between the nets 4a,b, they may be arranged predominantly horizontally between the nets 4a,b, or arranged in another shape or pattern, as appropriate.

Figs 19-26 illustrate further embodiments, wherein a crowding net 85 is provided into the enclosure 3 through one of the second inner structure parts 52. The crowding net 85 can, for example, be provided to the floating collar 2 in temporarily provided container 89 landed on the upper buoyancy member 9 and/or the column 8, or it may be present as regular equipment on the fish farming system 1. Providing a crowding net 85 as shown here is another example of accessing the enclosure 3 via the second inner structure parts 52, as also described above.

In any of the embodiments described or claimed herein, the first inner structure part 51 may comprise an actuator arrangement to handle fish handling equipment and to move fish handling equipment inside the enclosure 3.

In the illustrated embodiment of Fig. 19, the fish handling equipment is the crowding net 85, however the fish handling equipment may be other items, such as test equipment, fish treatment equipment, inspection and measurement equipment (e.g. cameras and sensors), cleaning equipment, equipment to prevent disease or parasites, equipment to remove dead fish or debris, or any other item which may be required during the operation of the fish farming system 1.

The actuator arrangement may cooperate with at least one of the second inner structure parts 52 when introducing and handling the equipment into and inside the enclosure 3.

In this embodiment, the actuator arrangement is a movable trolley 86 operable to move along the first inner structure part 51 inside the enclosure 3. The trolley 86 may, for example, be movable on tracks or rails 87 (see e.g. Fig. 20) arranged for this purpose, and motorised appropriately. In this manner, the fish handling equipment, in this case the crowding net 85, can be moved around inside the enclosure 3 substantially around the outer perimeter of the enclosure 3 if desired.

Other fish handling equipment may have other requirements, for example a trolley 86 could be used in conjunction with a winch-and-rope system to position particular equipment at a desired position within the enclosure 3, with the trolley 86 holding an end or a loop of the rope, on which the equipment can be moved inside the enclosure 3.

Figs 20-26 illustrate steps in a crowding process, whereby the crowding net 85 is moved about the outer perimeter of the enclosure 3 by the trolley 86, and then retrieved through the second inner structure part 52. The purpose of such crowding is well-known in the art, being employed for example for delivery of fish for slaughtering or treatment, or for moving fish between fish pens.

A transport pipe or tube 88 can be used to remove fish from the enclosure 3. The tube 88 may also extend through the second inner structure part 52 and into the enclosure 3. Alternatively, the crowded fish can be removed from the enclosure 3 via an opening on the side of the enclosure 3 or at the bottom (see Figs 7 and 8 and described in relation to Fig. 27 below) wherein the fish is crowded towards this opening.

As can be seen from Figs 20-26, the crowding net 85 is pulled around the enclosure 3 to capture a part of or substantially all the fish therein (Figs. 21-22). The front end of the crowding net 85 is then pulled out through the second inner structure part 52 and the upper and lower edges are also pulled in towards the second inner structure part 52 to crowd the capture fish and to provide a closed enclosure by the crowding net 85 (Figs. 23-24). As the fish is removed from the crowding net 85, this can be pulled in even further to reduce the size of the enclosure. As the operation is completed with all or the required amount of fish removed from the enclosure, the crowding net 85 is again released into the enclosure 3 by reversing the movement of the trolley 86 and pulling the crowding net 85 out of the enclosure 3 again (Figs 25-26).

Advantageously, by embodiments provided herein, operations such as crowding and other activities may, if desirable, be carried out with the floating collar 2 in an operational or submerged position 16 (see also Fig. 2), whereby the enclosure 3 is positioned a distance below the water surface. This may provide advantages in that the fish is not exposed to the higher water regions, which can contain higher concentration of parasites, algae or the like. Also, carrying out such operations inside the enclosure 3 in the submerged position 16 may reduce stress on the fish, thereby improving fish welfare and the efficiency of the operations.

Consequently, in any of the embodiments described or claimed herein a method of removing fish from an enclosure 3 of the fish farming system 1 may include introducing a crowding net 85 into the submerged enclosure 3 via an access channel. The access channel may be a second inner structure part 52 as described above or another channel which provides access from a surface location into the submerged enclosure 3.

The method may include removing fish from the enclosure 3 via the access channel.

The method may include driving or pulling the crowding net 85 inside the enclosure 3 to catch at least a part of the fish in the enclosure 3, and to form a closed net defined by the crowding net 85.

The method may include removing fish from the closed net via a tube 88 which extends through the access channel and into the closed net.

Figure 27 illustrates how the transport pipe or tube 88 may, alternatively, be provided from a lower opening 91 or a side opening 90 of the enclosure 3. In this manner, crowding can be carried out towards one of these openings and fish can be removed through it, for example to a well boat.

Figure 28 illustrates a cut cross-section of the first inner structure part 51 according to an optional embodiment. In addition to the air-filled dome 56, the first inner structure part 51 may comprise a compartment 92 in which a crowding net 85 can be stored. The compartment 92 may extend circumferentially about the entire inner structure part 51 or only partially about the first inner structure part 51. An activation mechanism 93, for example comprising wires or ropes for releasing and positioning the crowding net 85 within the enclosure 3 may be provided. Optionally, other equipment may be stored in the compartment 92 alternatively to or in addition to a crowding net 85.

In other embodiments, the fish farming system 1 may comprise an integrated feed storage and handling system. Fig. 29 illustrates the floating collar 2 having four storage silos 100a-d for fish feed (the silos are illustrated only schematically here). The feed may be, for example, dry pellets as is conventionally used in fish farming.

Illustrated in relation to Figs 29-32, embodiments according to the present disclosure may include combinations as outlined in the following numbered A-clauses:
CLAUSE A1. A fish farming system (1) as described or claimed anywhere in this disclosure, further comprising a plurality of feed storage silos (100a-d) disposed about the floating collar (2).
CLAUSE A2. A fish farming system according to clause A1, further comprising a feed conveyor (101a,b) operable to move feed between at least two of the feed storage silos (1 00a-d).
CLAUSE A3. A fish farming system according to the preceding clause, wherein the feed conveyor (101a,b) is operable to move feed between all feed storage silos (100a-d).
CLAUSE A4. A fish farming system according to any preceding clause, comprising at least two feed storage silos (100a-d) arranged at opposite sides of the enclosure (3).
CLAUSE A5. A fish farming system according to any preceding clause, wherein the feed storage silos (100a-d) is disposed inside respective columns (8).
CLAUSE A6. A fish farming system according to any preceding clause, comprising a filling receiver (102) arranged in communication with at least one of the feed storage silos (100a-d).
CLAUSE A7. A fish farming system according to the preceding clause, wherein the filling receiver (102) is in communication with the feed conveyor (101a,b).
CLAUSE A8. A fish farming system according to any preceding clause, wherein the filling receiver (102) is in communication with at least one feed storage silo (100a-d) via the feed conveyor (101a,b).
CLAUSE A9. A fish farming system according to any preceding clause, wherein the filling receiver (102) is in communication with at least one feed storage silo (100a-d) via a buffer tank (103).
CLAUSE A10.A fish farming system according to any preceding clause, wherein the conveyor (101a,b) is arranged substantially horizontally inside the upper buoyancy member (9).
CLAUSE A11.A fish farming system according to any preceding clause, wherein each feed storage silo (100a-d) comprises an elevator mechanism (104) operable to move feed from the feed storage silo (100a-d) to at least one of:
   a mixing unit (105)
   the buffer tank (103), or
   the conveyor (101a,b).
CLAUSE A12.A fish farming system according to any preceding clause, comprising a mixer (105) for mixing feed and water.
CLAUSE A13.A fish farming system according to the preceding clause, wherein the mixer (105) is arranged to receive feed from the buffer tank (103).
CLAUSE A14.A fish farming system according to the preceding clause, wherein the mixer (105) is arranged at a lower elevation than the buffer tank (103) and arranged to receive feed from the buffer tank (103) by means of gravity.

As illustrated in Fig. 29, the plurality of feed storage silos 100a-d can be disposed about the floating collar 2. For example, it may be advantageous to arrange pairs of silos 100a-d at opposite sides on the floating collar 2, for access and/or stability reasons, as described in further detail below. A feed conveyor 101a,b is operable to move feed between at least two of the feed storage silos 100a-d.

Fig. 29 illustrates the conveyor 101a,b being arranged to move feed between silos 100a,b, and conveyor 101c,d being arranged to move feed between silos 100c,d. in an advantageous alternative, one conveyor may be arranged to be able to move feed between all feed storage silos 100a-d. This can, for example, be done by arranging the conveyor as a "ring line" or, in the example of Fig. 29 having four silos 100a-d, by adding a conveyor which is arranged to move feed between silos 100b and 100c.

Fig. 30 shows a partially cut view of a part of the floating collar 2 of one embodiment. Illustrated in Fig. 30, the feed storage silos 100a-d are disposed inside respective columns 8. This can provide advantages in terms of space utilisation and stability. The column 8 may be arranged with a central space to accommodate feed.

A filling receiver 102 can be arranged in communication with at least one of the feed storage silos 100a-d. The filling receiver 102 can be arranged on the upper buoyancy member 9, or, as illustrated in Fig. 30, on a utility room 70 arranged on the upper buoyancy member 9.

The filling receiver 102 may be in direct communication with one or more of the silos 100a-d such as to lead the received feed to the silo. This can be done by means of gravity or by active conveyance, e.g. with the conveyor 101a-d. For this purpose the filling receiver 102 can be in communication with the feed conveyor 101a,b and with at least one feed storage silo 100a-d via the feed conveyor 101a,b.

Also illustrated in Fig. 30, a buffer tank 103 may be arranged in communication with one or more of the filling receiver, silos 100a-d and conveyor 101a,b. The buffer tank 103 may for example be directly connected to the filling receiver 102 such that feed received from e.g. a supply ship via the filling receiver 102 is first led into the buffer tank 103. The buffer tank 103 may then be in communication with one or more silos 100a-d which receive the feed for storage. This may be done by means of gravity, if the buffer tank 103 is arranged above the silo as in Fig. 30, and/or by means of the conveyor 101a-d.

In any of the embodiments herein, the conveyor 101a-d may have a plurality of individual conveyor lines such as to increase capacity, provide redundancy, and/or to allow conveyance to or from more than one silo simultaneously. For example when receiving feed from a supply ship, parts of the feed may be led from the buffer tank 103 to different silos simultaneously via different conveyor lines.

The conveyor 101a-d may, as illustrated, be arranged substantially horizontally inside the upper buoyancy member 9. This provides advantages that the conveyor 101a-d is protected inside the column structure.

Each feed storage silo 100a-d may comprise an elevator mechanism 104 operable to move feed from the feed storage silo 100a-d to at least one of: a mixing unit 105, described below, the buffer tank 103, or the conveyor 101a-d. Optionally, each feed storage silo 100a-d may comprise more than one elevator mechanism 104, for example to provide increased capacity and/or redundancy.

Figure 31 illustrates schematically an operational configuration in one embodiment. A silo 100a is arranged to store feed. An elevator 104 is arranged to provide feed from the silo 100a to the buffer tank 103. A mixer 105 is arranged to receive feed from the buffer tank and sea water from a sea water supply 110, such as a sea water pump arrangement, and mix the feed into the sea water. Optionally the mixer 105 may receive water from another source, such as a fresh water source. The mixer 105 makes up part of a feed distribution system and is further arranged to provide the water-feed mixture to a distribution line 111 which extends to feeding outlets in the enclosure 3. In this manner, waterborne feed can be provided to the enclosure 3 via the feeding system.

Also, the conveyor 101a-d can be seen. The conveyor 101a-d can have a discharge 112, such as a hatch which is selectively open or closed, whereby feed transported in the conveyor 101a-d can be led into silo 100a by means of gravity. (Similar discharges 112 can be arranged in the other silos 100b-d, whereby the conveyor 101a-d can discharge feed into the respective silo 100a-d via a top opening and by means of gravity.)

In an alternative, the conveyor 101a-d may be provided at a higher elevation than the buffer tank 103 such as to allow the conveyor 101a-d to discharge feed directly into a top opening of the buffer tank 103. (The mechanism for this can be similar to the discharge 112.) This may allow feed from other silos to be provided directly to the buffer tank 103 for feeding, without first providing it to silo 100a. Additionally or alternatively, the other silos may be provided with dedicated buffer tanks and/or mixers for the same purpose.

Figure 32 illustrates another alternative configuration in which two silos 100a,b can both supply feed to and receive feed from one buffer tank 103. The two silos 100a,b may be arranged in the same column 8 on the floating collar 2 or in different columns 8, or at a different position on the floating collar 2.

In all embodiments described here, one or more of the silos 100a-d may have a receiving line 113 (see Fig. 32) from the buffer tank 103, or from more than one buffer tank 103 if applicable. The receiving line 113 may allow the buffer tank 103 to distribute feed to the respective silo 100a-d, for example feed received via the filling receiver 102, or to return unused feed to a silo 100a-d, for example when feeding stops. The receiving line 113 may be a simple pipe and the transfer of feed may be based on gravity, or it may be actively conveyed. The return line 113 may be made up of the conveyor 101a-d and this functionality provided by the conveyor 101a-d. Alternatively a dedicated line may be provided. For silos positioned spaced from the buffer tank 103, active conveyance may be used, indicated by dashed lines in Fig. 32.

As can also be seen in Fig. 32, the provision of feed from the buffer tank 103 may be by means of active conveyance via a mixer supply line 114 and not by gravity as in Fig. 31.

It may be an advantage to have more than one filling receiver 102 in the system 1. For example, there may be two, three, or more receivers 102 arranged at different position of the floating collar 2. This provides an advantage that the most appropriate receiver 102 can be selected by a feed supply ship based on e.g. weather conditions or other activities being carried out on the system 1. By means of a conveyor 101a-d according to one of the examples described above, feed can be distributed to the desired silo 100a-d independent of which receiver 102 is used.

The feed storage and distribution system may consist of one or more nodes, where each node may contain one or more of the following items: feed silo(s) 100a-d, a filling system for the feed silo(s), e.g. receiving line 113; a feed mixing and distribution system 104, 111, 114; a transport system for bringing feed out of a silo 100a-d, e.g. elevator 104; buffer tank(s) 103 in-between any of the other items.

As described, the nodes (if more than one) can advantageously be connected by an internodal feed transportation system, such as a conveyor 101a-d as described. Each node does not need to be identical in design or capacity. For example, one node may contain the silo and the filling system, while another node contains one or more feed distribution systems.

The internodal feed transportation system or other active conveyance arrangements as described above, e.g. conveyor 101a-d, receiving line 113 or elevator 104, can be a screw type conveyor, a conveyor belt, pressurized air conveyance, or any other suitable type. Particularly suitable conveyance systems may include tube chain conveyors, tubular cable conveyor systems, chain disk systems, drag chain conveyors, cable conveyor systems or tubular drag conveyors.

The internodal feed transportation system can consist of several transportation systems operating in series or parallel to increase transportation length, capacity or redundancy. Different types of transportation systems can be combined and the feed can be transported horizontally, vertically or both. The internodal feed transportation system can be used to transport feed between nodes during feeding operation, to distribute feed to several silos during loading operation from a feed transportation vessel, for emptying the feed system or to move feed from one silo to another for balancing or weigh distribution of the collar 2. Moving feed from one silo to another can be used to balance the trim and heel of the collar 2 or to redistribute feed in case of uneven feeding rates between the nodes (e.g. if one node is less used due to dominant current headings). It can also be used for emptying one silo for inspection, maintenance and repair. The internodal feed transportation system can preferably be equipped with a cleaning and/or disinfectant system that is either operating continuously or in predetermined sequences.

The internodal feed transportation system can be arranged with two or more inlets and two or more outlets such that the same system can transport feed in both directions simultaneously.

Although the silos 100a-d are here presented as being positioned in the columns 8 of the floating collar 2, it should be understood that they can be positioned elsewhere, for example in the upper buoyancy member 9, in the lower buoyancy member 7, or as a separate structure fixed onto one of these elements. Feed silos can be arranged on deck, inside pontoons, inside columns or inside equipment rooms 70. Feed silos can advantageously be integrated into the columns 8 such that the column walls make up the silo walls. Stiffeners may then be shaped suitably in order to avoid traps for feed, for example in a laying trapeze shape. Feed is preferably collected and transported from the bottom of the silo. To avoid the need for penetrations to the hull and need for access below a silo, an internal lifting system, which may make up part of elevator 104, can be used to transport the feed from the bottom of the silo to above the silo. The internal lifting system can be arranged inside a channel (circular or rectangular or any other shape) which typically can be arranged vertically or near vertically inside the silo. The internal lifting system can e.g. be a lifting screw, a conveyor bucket elevator system or a drag chain system. Optionally, the internal lifting system can be retrieved from a above for maintenance and repair.

Feed silos may be connected to a HVAC system to control temperature and humidity in the silo.

The feed distribution system 105,111,114 may consist of a dosing system to control the amount of feed and the feed rate, and a transportation system to transport the feed to the feeding point inside the enclosure 3. Feed distribution could be water borne feeding, air born feeding or a mechanical system for transporting the feed to the feeding point. Feed transportation systems can be continuous or operate intermittently. A separate, dedicated system may be used to inject the feed from the dosing system to transportation system, e.g. if the feed is mixed into the flow of a transportation fluid. This is sometimes called the mixing system, and may be combined with the dosing system. One feed distribution system can serve several feeding outlets in the enclosure 3. In such cases, the system may also include a selection system (e.g. valves) for controlling which feed outlets are being used.

For waterborne systems the feed can e.g. be injected into a water flow after a pump, it can be mixed with water in an atmospheric tank before the mixture pass through the pump, or if the atmospheric mixing tank is placed sufficiently high above the water surface the gravity force can be sufficient to transport the mixture to the feeding outlet without pumping. Suitable pumps may be centrifugal pumps, ejector pumps or any other type of pump.

Buffer tanks 103 can be used to reduce variations in a feed flow between two systems that may not be operating at the same rate or with fluctuations on the flow. For example, a buffer tank 103 can be placed between the filling receiver 102 for feed distribution system and the silo, to provide a more steady flow of feed without clogging the filling system. The loading system on the feed transportation vessel can then control the flow of feed by measuring the level in the buffer tank and stopping the transfer at a predefined max level.

By arranging several inlets and/or outlets to a buffer tank 103 (see e.g. Fig 32), the same buffer tank 103 can function between several subsystems. If the buffer tank 103 is equipped with valves or other means for opening and closing, the buffer tank 103 can function as a focal point inside a node, where every inlet to the node and outlet from the node goes through the buffer tank 103: feed supplied from a feed transportation vessel can be led to the buffer tank 103 before it is directed to the silo 100a-d. Feed from the silo 100a-d can be led to the buffer tank 103 before it is led to the feed distribution system 105,111,114. Both the inlet and outlet of the internodal transportation system can be at the buffer tank 103 in the connected nodes. The flow of feed through the buffer tank 103 can be between two or more systems at the same time. E.g. when receiving feed from a feed transportation vessel, the buffer tank 103 may open valves to drop feed to a silo 100a-d in the same node, but also open a valve to an inlet of the internodal transportation system and the valve to the feed distribution system 105,111,114. For example, as shown in Fig. 32, while receiving feed through receiver 102 the system may operate to distribute feed from the buffer tank 103 to one or both silos 100a,b via lines 113 and, if desirable, also supply feed from the buffer tank 102 to the mixer supply line 114. This can allow the feed transportation vessel to offload into two or more silos simultaneously, and without interrupting the feeding of the fish. This can be particularly advantageous if weather or other conditions give constraints on which node the feed transportation vessel can operate at.

If the buffer tank 103 is located at a higher elevation than the silo 100a-d, the inlet of the internodal transportation system and the feed distribution system, it may be possible to arrange for most or all feed transfer internally within the node except for the lifting of feed from the silo 100a-d to be performed by gravity flow.

The nodes can be arranged substantially on the outer circumference the fish cage. If there are four nodes, as illustrated in Fig. 29, three internodal systems may be sufficient to transport feed between any two nodes.

While the different components of the systems shown in Figs 29-32 are shown in relative elevated position in relation to each other, it should be understood that such placement is not mandatory and other arrangements may be possible, for example arranging the buffer tank 103 at the same height as the silos 100a-d and/or arranging the mixer 105 at a higher or lower elevation compared to that indicated.

As alternative arrangements for the fish farming system 1 and associated systems, the fish farming system 1 may be provided with supplies such as fish feed from elsewhere, for example a land location or another floating unit. The other floating unit may be a feeding barge, having the relevant feeding equipment, for example those components shown in Figs 31 and 32, thereon. In such a case, the floating collar 2 may not need to carry all such equipment. In another alternative, several fish farming systems 1 may be installed in proximity such that the feeding equipment can be arranged on one fish farming system 1 and serve more than one system 1. One may for example arrange one floating collar 2 with the capacity to serve more than one fish farming system 1 with feed. Hoses or pipes may be arranged between the fish farming systems 1 if there are more than one and feeding is provided from one system to others.

In any of the embodiments described or claimed herein, the fish farming system 1 may optionally comprise a plurality of inner nets 4b or an inner net having several separate compartments, arranged inside the outer net 4a. For example, by providing several inner nets 4b which each define a separate pen for fish, one may optimise production between different groups of fish. The same may be achieved by arranging the inner net 4b with several different compartments, for example by vertical separation nets extending from one side to the other or, for example, in a cross shape to provide four compartments. A cross shape to support the nets can be provided as part of the inner structure 50. A corresponding cross shape for lower support may, optionally, be arranged as part of the bottom ring 26.

By having a common outer net 4a, all the inner nets or inner net compartments can be protected from e.g. predators by the outer net 4a, and the outer net 4a may provide a common barrier in case of fish escaping from the inner nets or inner net compartments.

A second grouping of aspects, as illustrated in Figures 33 to 56 will now be described. As will become evident from the description thereof, similarities exist between this grouping of aspects, and that as previously described.

Aspects of the second grouping of aspects relate to a fish farming installation with a semi-submersible floating collar for a submersible fish pen. This installation may operate on two or more operational drafts such that the top of a net cage can be in a surface or near-surface position, or completely submerged. The top of the net cage can, for example, be submerged to a depth of 155-160 meters or more below the water surface, in order to reduce the exposure to, for example, sea lice, algae, and jellyfish and also reduce the environmental loads from ocean currents and waves or from impacts from floating objects. The installation may optionally be designed for deeper submergence to further reduce environmental loads.

The fish farming system may be designed with a favourable ratio between water line area and displacement to provide an effective construction for handling bending moments from waves and ocean currents, less movement of the floating collar during bad weather conditions. Since the effect of waves tends to be less in deeper water, less movement will be transferred from the floating collar to the net cage, which in turn reduces the change of damage to the net cage and escape of fish.

A semi-submersible fish-farming system, such as a fish pen, according to aspects described herein may be operable between at least two different semi-submerged positions, a first position and a second position, by ballasting and de-ballasting. The system may comprise a rigid floating collar comprising a ring-shaped or polygonal lower buoyancy member, a ring-shaped or polygonal upper buoyancy member, a plurality of columns connecting the buoyancy members, a net cage suspended from the floating collar and a net roof closing off the top of the net cage, the net cage with the net roof forming an enclosure for fish.

Fig. 33 is a principle drawing showing some elements of a fish farming system according to an aspect and Fig. 34 is a cross-section of the system shown in Fig. 33. In a preferred embodiment, the system comprises a fish pen 151 with a floating collar 152 comprising a lower buoyancy member 157, an upper buoyancy member 159 and a plurality of columns 158 which are mounted to the lower buoyancy member 157 and the upper buoyancy member 159. The columns 158 connect the lower and upper buoyancy members 157,159. The upper and lower buoyancy members 157,159 and columns 158 are preferably made of a rigid material, such as steel. For additional stiffness, for example to restrict torsion, bending or shear, tie struts or plates may be placed between some of the columns. The upper and/or the lower buoyancy members 157,159 can, for example, have a circular or polygonal shape.

The lower buoyancy member 157 is a continuous, closed pontoon encircling the central portion of the fish pen 151 in which a net cage 153 is suspended, the net cage 153 forming an enclosure 153 for the fish and the net cage 153 being supported by the floating collar 152. The enclosure 153 is defined by sides 154 and a bottom 194, either or both of which can be flexible, such as a pliable net, or a stiff or semi-stiff construction. Further, the enclosure 153 can have a closed roof 155, arranged to close a top section of the enclosure 153, thereby preventing fish from leaving the enclosure 153 and/or preventing predators from entering the enclosure 153. The roof 155 may be a net, grid, or other suitable arrangement. The roof 155 may be of the same material as the sides 154 and/or bottom 194. Even if phrased a "net" here, this does not preclude other types of materials used in the roof 155, sides 154 or bottom 194. These elements can be separate elements or an integrated construction. The enclosure 153 may also comprise a bottom ring 176, which may be temporarily or permanently installed and which can be pulled towards the surface using winches and wires or other mechanical means for example for fish crowding. The bottom ring 176 may also provide weight to keep the enclosure 153 in a desired form (e.g. keeping the sides 154 substantially vertical), and it may be arranged semi-stiff or stiff in order to assist keeping the shape and form of the enclosure 153 in the case of water currents or other loads.

The bottom ring 176 may be connected to an outer net, an inner net, or both an outer and an inner net defining the enclosure 153, described in further detail below. In such a case, the bottom ring 176 may be arranged to support either the outer net or the inner net, or both the outer net and the inner net.

The lower buoyancy member 157 can, for example, have a circular, square, hexagonal or octagonal design. The cross-section of the lower buoyancy member can for instance be circular, square or have another form. The interior of the lower buoyancy member 157 can, for example, be divided into one or more sections by means of partition walls. Further, the cross-section area and shape of the lower buoyancy member 157 does not need to be uniform. The upper buoyancy member 159 may have any of the above stated configurations and may also have a different design compared to the lower buoyancy member 157. The upper buoyancy member 159 and/or the lower buoyancy member 157 may be arranged with dedicated space for storage, operational equipment or the like. Such space may, for example, be in one or more partitioned sections in the structure.

The cross-section of the columns 158 can be circular, square or any other shape. Further, the columns 158 can each be identical or have different sizes and cross-sections. The distance between the columns 158 can be uniform or varying. The distance from a column 158 to the centre of the fish pen 151 can also be uniform or varying. The interior of at least some of the columns 158 is preferably in fluid communication with the interior of the lower buoyancy member 157. For trimming, water may be supplied or removed from the interior of the lower buoyancy member 157 and possible also the interior of some or all the columns 158. There may, optionally, be not multiple, but only one single column connecting the lower buoyancy member 157 and the upper buoyancy member 159.

The interior of one or more of the columns 158 may be may be arranged with dedicated space for storage, operational equipment or the like. One or more of the columns 158 can, for example, be divided into one or more sections by means of partition walls for this purpose. Such space may, for example, be in one or more partitioned sections in the structure.

To lower the fish pen 151 to an operational or submerged position 166, wherein the water line at the operational or submerged position 166 is indicated, water can be pumped into the interior of the lower buoyancy member 157 and possibly also into whole or parts of some or all of the columns 158, until the desired draft is achieved. The interior of the upper buoyancy member 159 and/or the columns 158 or parts thereof can, if desirable, be closed and filled with air or a foam material that provides buoyancy when the fish pen 151 is submerged. In this position, the roof 155 of the enclosure 153 can be kept at a certain depth to avoid or reduce the exposure to sea lice, jellyfish and algae. By submerging the enclosure 153, also the environmental impact of waves and currents can be reduced, since these impacts in general are more pronounced at or near the water surface and are reduced with increasing depth. By submerging the enclosure 153 a distance below the water surface, the movements transferred to the enclosure 153 from the collar 152 can also be reduced and the risk for damaging the enclosure 153 and escape of fish be reduced, due to less movement of the floating collar 152 and consequently less movement of the enclosure 153.

In order to raise the fish pen to a service position 165, wherein the water line at the service position 165 may be as indicated in Fig. 34, water can be pumped out of the lower buoyancy member 157 and/or the columns 158. The service position 165 may be a position wherein the lower buoyancy member 157 is at or near the water surface. In the service position 165, the floating collar 152 may then be floating with the lower buoyancy member 157 on the water surface such that the roof 155 of the enclosure 153 can be at or above the water surface. By removing the roof 155 (or parts thereof) of the enclosure 153 when the floating collar 152 is in service position 165, access to the enclosure 153 can be obtained for inspection, maintenance and different operations such as crowding and delousing. The upper buoyancy member 159 can function as support for travelling cranes, winches, personnel basket to facilitate operations in enclosure 153. All necessary tubes, hoses, cables etc. can be connected to the upper buoyancy member 159, led down the columns 158 to the lower buoyancy member 157 and out into the enclosure 153. Consequently, there is no need to take the enclosure 153 to surface for inspection or connection and the operation is not relying on divers/ROV.

The construction of the fish pen 151 may be sufficiently robust and strong that it is possible to utilize a direct-coupled mooring system 172 (see Figs 33-37) and it is not necessary to use a frame mooring, such as used for conventional systems with flexible plastic rings. This involves each individual fish pen 151 moving independent of each other, if more fish pens 151 are placed in the same area, and the distance between each fish pen may be larger for increased safety and improved water quality.

In any of the embodiments described herein, the floating collar 152 may, alternatively or additionally, be configured for changing the vertical position by means of for example a pull-down mechanism, such as a winch arranged at the sea floor or a winch arranged elsewhere which provides a pull-down force via a wire and a sheave mechanism at the sea floor. Such a pull-down mechanism may operate as the main mechanism for adjusting the vertical position of the floating collar 152 in the water, or it may operate in conjunction with ballasting of the floating collar 152.

Illustrated in Figs 35-55, various embodiments of a fish farming system 151 are shown. The embodiments in Figs 35-55 and described below may, for example, be particularly suitable for use in areas where sea ice may be present, such as arctic areas.

Illustrated schematically in Figs 35 and 36, a fish farming system 151 may comprise a ring- or polygonal shaped floating collar 152 having a lower buoyancy member 157, an upper buoyancy member 159 and a plurality of columns 158 interconnecting the upper and lower buoyancy members 157,159, and may bear similarities to the fish pen 151 of Figures 33 and 34. An enclosure 153 for fish may be suspended from and supported by the floating collar 152.

According to this embodiment, the floating collar 152 comprises a plurality of extension members 200 extending upwardly from the floating collar 152. Fig. 35 shows a side elevation view of the fish farming system 151 and Fig. 36 shows a top plan view.

The extension members 200 are in this embodiment provided by vertically arranged structures fixed to or incorporated as a part of the floating collar 152. Optionally, the extension members 200 may extend upwardly at an angle, i.e. they can be, but need not necessarily be, purely vertical structures.

The fish farming system 151 has a first operational position in which the upper buoyancy member 159 is located in or above a waterline 201, equivalent to submerged position 166 illustrated in Fig. 34. In this position, the part of the floating collar 152 which is made up by the upper buoyancy member 159 and/or the columns 158 is positioned in the waterline 201. The fish farming system 151 further has a second operational position, illustrated in Fig. 35, in which the extension members 200 extend above the waterline 201 and the upper and lower buoyancy members 157,159 are submerged.

Moving the floating collar 152 between the operating positions, and, if applicable, further operating positions with other drafts, can be done for example by means of ballasting. For example, the lower buoyancy member 157 (or other parts of the floating collar 152) may be provided with ballast chambers which can be selectively filled with water for this purpose. Although not illustrated, the fish farming system 151 of Figures 34 and 35 may comprise any appropriate system for ballasting, for example comprising a ballasting valve or valves, and a source of ballasting fluid (which may be the water in which the fish farming system 151 is floating), as will be understood by the skilled reader.

The extension members 200 may in the second position be designed to provide reserve buoyancy, i.e. be designed with a sufficient volume in the parts of the extension members 200 which extend above the waterline 201 to provide a desired reserve buoyancy and/or stability for the floating collar 152 in the second position. This can be done, for example, by designing the extension members 200 as a partially hollow structure with a height and/or width to provide the desired buoyancy. Therefore the extension members 200 may be selected or designed to provide the floating collar 152 with a desired minimum level of buoyancy, which may assist to provide stability to the floating collar, and may assist in instances of malfunction of a ballasting system.

Advantageously, a floating collar 152 having extension members 200 may reduce the risk of operational problems or risks in areas with sea ice. In the second position, the water line area or size of the structure located in or near the waterline 201 may be substantially reduced so that the risks associated with sea ice, such as drifting sea ice, to the fish farming system 151 are reduced. This may, for example, allow drifting sea ice to pass the floating collar 152.

Advantageously, the extension members 200 have a circular cross-section. Alternatively the extension members 200 may, for example, have a polygonal cross-section.

Advantageously, the number of extension members 200 is lower than the number of columns 158. The number of extension members 200 may, for example, be two, three, four, five, six, or more than six. Three or four extension members 200 may be particularly advantageous to provide reserve buoyancy and stability to the floating collar 152.

The extension members 200 are preferably distributed symmetrically about a centre of the floating collar 152. The centre of the floating collar 152 may be taken to be a vertical centre line 202 (see Fig. 35) extending in or near the middle of the floating collar 152. In the example of Fig. 36, the floating collar 152 is illustrated having four extension members 200, each with a circular cross-section, symmetrically distributed about a centre of the floating collar, as previously described.

While the top surface of the extension members 200 in Fig. 35 is illustrated as being flat (in this example horizontally oriented), this surface may be inclined at an angle to the horizontal. Having an angled top surface may assist to deflect ice (or other floating debris) away from the floating collar 152 and the fish farming system 151. In some examples, this top surface may provide an additional function, for example the top surface may provide a connection point to a further structure, vessel, device, or the like, which may be used to tow or move the floating collar 152 and the fish farming system 151, for example.

According to these embodiments, various inventive combinations of features are provided, as outlined in the following numbered B-clauses:
CLAUSE B1. A fish farming system (151) comprising:
   a ring- or polygonal shaped floating collar (152) having a lower buoyancy member (157), an upper buoyancy member (159) and a plurality of columns (158)
   interconnecting the upper and lower buoyancy members (157,159);
   an enclosure (153) for fish suspended from and supported by the floating collar (152);
   wherein the floating collar (152) comprises a plurality of extension members (200)
   extending upwardly from the floating collar (152);
   and wherein the fish farming system (151) has a first operational position in which the upper buoyancy member (159) is located in or above a waterline (201) and a second operational position in which the extension members (200) extend above the waterline (201) and the upper and lower buoyancy members (157,159) are submerged.
CLAUSE B2. A fish farming system (151) according to clause B1, wherein the extension members (200) are provided by vertically arranged structures fixed to or incorporated as a part of the floating collar (152).
CLAUSE B3. A fish farming system (151) according to any of clauses B1-B2, wherein the extension members have a circular cross-section.
CLAUSE B4. A fish farming system (151) according to any of clauses B1-B3, wherein the extension members in the second operational position provide a waterline area which is lower than the waterline area of the floating collar in the first operational position.
CLAUSE B5. A fish farming system (151) according to any of clauses B1-B4, wherein the number of extension members (200) is lower than the number of columns (158).
CLAUSE B6. A fish farming system (151) according to any of clauses B1-B5, wherein the number of extension members (200) is two, three, four, five, six, or more than six.
CLAUSE B7. A fish farming system (151) according to any of clauses B1-B6, wherein the extension members (200) are distributed symmetrically about a centre of the floating collar (152).

In another embodiment, illustrated in Figs 37-39, a fish farming system 151 comprises a ring- or polygonal shaped floating collar 152 having a lower buoyancy member 157, an upper buoyancy member 159 and a plurality of columns 158 interconnecting the upper and lower buoyancy members 157,159. An enclosure 153 for fish is suspended from and supported by the floating collar 152.

In this embodiment, the floating collar 152 comprises an angled inward-facing and/or outward-facing surface 210 arranged on the upper buoyancy member 159 and/or the lower buoyancy member 157. In the embodiment shown in Fig. 37, the angled surface 210 is arranged on the upper buoyancy member 159, however the/a surface 210 may alternatively, or additionally, be arranged on the lower buoyancy member 157.

The angled outward-facing surface 210 is advantageously downward-facing, as illustrated in Fig. 37. Alternatively, the surface 210 may be upward-facing as illustrated in Fig. 38.

Fig. 39 illustrates other alternatives, where both an inward-facing and outward-facing side comprise the angled surface. According to the examples a-d as illustrated in Fig. 39, the lower buoyancy member 157 comprises a rectangular cross-section. As in previous examples, the upper buoyancy member 159 is connected to the lower buoyancy member 157 via columns 158. The upper buoyancy member 159 comprises a non-rectangular (or non-square) cross-section. Instead, the upper buoyancy member 159 comprises at least one (in each illustrated case, two) obliquely angled surface relative to the vertical central line 202 (see Fig. 35). While examples a-c illustrate the upper buoyancy member 159 having two horizontally oriented surfaces (relative to central line 202), connected by two obliquely oriented surfaces, example d illustrates the upper buoyancy 159 having two vertically oriented surfaces connected by two obliquely oriented surfaces. In each of the examples a-c, with the collar 152 in the orientation of Figure 38, an obliquely oriented surface is located at the water surface, while in example d, an obliquely oriented surface is located directly below, and directly above the water surface. The skilled reader will understand that other shapes of upper buoyancy member 159 may be used that are not illustrated.

Depending on the cross-sectional shape of the upper buoyancy member 159, the obliquely angled surfaces may be upwards or downwards facing, meaning that the surface assist to deflect ice or other floating debris in an outward and upwards/downwards direction, away from the collar 152.

Fig. 40 illustrates further examples in which the lower buoyancy member 157 comprises angled surfaces 211 equivalently as described above for the upper buoyancy member 159. In each of the examples a-d, the lower buoyancy member 157 comprises two horizontally oriented surfaces connected by two obliquely oriented surfaces. However, the skilled person would also be able to envisage a lower buoyancy member 157 having a configuration similar to that of Figure 39d, having two vertically oriented surfaces, connected by two obliquely oriented surfaces. Where the collar 152 is configured as in Figure 38, the lower buoyancy member 157 would have a location below the water surface. However, as before the obliquely angled surfaces may assist to deflect ice or other floating debris in an outwards and upwards/downwards (depending on the angle of the obliquely oriented surface) and away from the collar 152.

Figs 41 and 42 illustrate an embodiment in which the angled surfaces are arranged on the columns 158. In this example, both the upper and the lower buoyancy members 157, 159 have a rectangular cross-section. However, located approximately at the waterline 201 is a deflection module 206 having an obliquely angled surface relative to central line 202. In the example of Figure 41, the deflection module 206 has a trapezoidal cross-section, illustrating upwardly-facing oblique surfaces on the right-side of Figure 41, and downwardly-facing oblique surfaces on the left-side of Figure 41. The deflection module may extend around each of the columns 158, such that each deflection module is substantially disc-shaped. While it may be possible to have a collar 152 with deflection modules 206 of changing shape on each column 158 around the circumference of the collar 152, the skilled reader will understand that a collar 152 having deflection modules 206 of the same shape around the circumference of the collar 152 is also possible.

Figure 42 illustrates the collar 152 with a deflection module 206 having the same shape around the circumference of the collar 152. In this example, each deflection module 206 is located on a column 158 and has the cross-sectional shape of two identical trapeziums, connected at the longer of the parallel surfaces, which may be considered to form a double-cone shape. As such the example of Figure 42 illustrates deflection modules 206 having both upwardly and downwardly facing obliquely oriented surfaces. Such surfaces may assist to deflect ice or other floating debris away from the collar 152, and may optionally assist to break up larger blocks of ice, thereby further protecting the collar 152 or the system 151 against damage. Although shown as a double-cone shape in this example, the skilled reader will appreciate that other shapes of deflection module 206 are possible, and the deflection module may simply represent any change in the shape of a column 158.

Illustrated in Figure 41a is an example of a column 158 which has a reinforcement structure 208 attached thereto. The reinforcement structure may be made from, for example, metal or durable plastic and fixed to the column 158, and may protect the column 158 from damage due to contact with sea ice or floating debris. As illustrated in Figure 41a, the reinforcement structure may be in the form of a sleeve of material that is fitted around the column 158, and may be applied to one, some or all of the columns of the collar 152. The reinforcement structure 208 may optionally be used in addition to the deflection modules 206 as previously described.

The angled outward-facing surface(s) 210,211 (see Figs 37 and 40, for example) may be a continuous surface extending about the floating collar 152, for example a continuous surface about the outer circumference of a part of the floating collar 152. If the angled surface is arranged on the columns 158, they can advantageously extend about the entire column 158.

Advantageously, the surfaces, if arranged on the columns 158, they can be arranged as a double cone. This provides enhanced effect in that ice (or other floating debris) can be diverted both upwards and downwards. Additionally, a better ice breaking effect can be obtained during movement of the floating collar 152, for example reaction movement of the collar 152 due to wave/weather impact or active movement due to ballasting/de-ballasting or change in ballast distribution. A double cone 205 may enhance performance with an ability to break ice both in an upwards and downwards motion.

While Fig. 42 illustrates the double cone 205 as arranged to have a larger diameter than the columns 158 (i.e. increasing the diameter of the columns 158 in the cone area), the double cone 205 may alternatively be arranged inwardly into the columns 158 such as to reduce the diameter of the columns 158 in the cone area.

In any of the embodiments described or claimed herein, the surfaces 210,211 may be arranged as ice-breaking or ice-resistant surfaces, i.e. surfaces designed to withstand operation in sea ice.

Advantageously, providing an angled outward-facing surface 210,211 on the floating collar 152 can provide improved performance and reduced risk of structural or operational problems when operating in areas where sea ice may be present. For example, the angled outward-facing surface 210 may provide a more advantageous interaction between the floating collar 152 and any present sea ice when ballasting or de-ballasting the floating collar 152 to move between operational positions or drafts. Particularly, the angled surface(s) 210,211 may contribute to break sea ice when changing the vertical position of the floating collar 152. (For example by ballasting/de-ballasting or by another mechanism such as a pull-down winch, if applicable.)

Additionally, or alternatively, the surfaces can provide breaking of sea ice during operation of the fish farming system 151. Drifting sea ice, which engages the floating collar 152, or permanent ice which expands due to temperature changes, can be broken up and/or directed upwards or downwards by the angled surfaces. This can reduce the loading on the floating collar 152, for example loading on the mooring system.

Additionally, or alternatively, these or other embodiments described herein can provide a reduced risk that ice accumulates inside the floating collar 152, above the roof 155. This can create challenges when raising the floating collar 152 to a service positon in which the roof 155 is positioned in the waterline 201 or above the waterline 201.

According to these embodiments, various inventive combinations of features are provided, as outlined in the following numbered clauses:
CLAUSE C1. A fish farming system (151) comprising:
   a ring- or polygonal shaped floating collar (152) having a lower buoyancy member (157), an upper buoyancy member (159) and a plurality of columns (158) interconnecting the upper and lower buoyancy members (157,159);
   an enclosure (153) for fish suspended from and supported by the floating collar (152);
   wherein the floating collar (152) comprises an angled inward-facing and/or outward-facing surface (210) arranged on the upper buoyancy member (159), the lower buoyancy member (157), or on at least some of the columns (158).
CLAUSE C2. A fish farming system (151) according to clause C1, wherein the angled outward-facing surface (210) is arranged:
   on the upper buoyancy member (159),
   on the lower buoyancy member (157), or
   on both the upper and lower buoyancy members (157,159).
CLAUSE C3. A fish farming system (151) according to clause C1 or C2, wherein the angled outward-facing surface (210) is inward-sloping.
CLAUSE C4. A fish farming system (151) according to any of clauses C1-C3, wherein the angled outward-facing surface (210) is a continuous surface extending about the floating collar (152).
CLAUSE C5. A fish farming system (151) according to any of clauses C1-C4, wherein the angled inward-facing and/or outward-facing surface is on each of the plurality of columns (158).
CLAUSE C6. A fish farming system (151) according to any of clauses C1-C5, comprising an angled inward-facing and an angles outward-facing surface location on each of the plurality of columns in the shape of a double cone.
CLAUSE C7. A fish farming system (151) according to clause C6, wherein the double cone increases the diameter of the column (158) at the location of the double cone.
CLAUSE C8. A fish farming system (151) according to clause C6, wherein the double cone decreases the diameter of the column (158) at the location of the double cone.
CLAUSE C9. A fish farming system (151) according to any of clauses C1 to C8, comprising a reinforcement structure (208) located on at least one of the plurality of columns (158).

Illustrated in Fig. 43, is an example of the floating collar 152 comprising an ice protection structure 210. The described ice protection structure may be useable with in combination with any other examples described herein.

As in previous examples, there is illustrated a floating collar 152, which may be ring or polygonal shaped, and which has a lower buoyancy member 157 and an upper buoyancy member 159. The upper and lower buoyancy members 159, 157 are connected together by columns 158, of which there may be a plurality distributed circumferentially around the collar 152.

The ice protection structure 210 functions to protect against drift ice, and may also afford the fish farming system 151 protection against other floating debris. The structure 210 prevents ice from being present in the region 214 inside the collar 152 and above the roof 155, which can create problems e.g. when de-ballasting. In this circumstance, the presence of ice or other floating debris in the region 214 would the settle on the roof 155 as the system 151 was deballasted and thereby floated to the surface. Such ice or debris may damage the roof 155, and therefore this scenario may be undesirable.

The protection structure 210 is coupled to the upper buoyancy member 159, and in this example, extends in a downwards direction where it is also coupled to lower buoyancy member 157. The protection structure extends around the circumference of the collar 152, and may extend around the entire circumferential surface, or only a part of the circumferential surface. In some examples, the protection structure 210 may extend intermittently around the circumference of the collar 152, and there therefore may be breaks in the continuity of the protection structure 210 (e.g., the protection structure 210 may be discontinuous at the location of each of the columns 158. In some examples, the protection structure 210 may additionally couple to one or each of the columns 158. Having the protection structure 210 coupled to the lower buoyancy member 157 and/or at least one/each of the columns 158 may provide more support to the protection structure, and therefore the protection structure 210 may be more able to prevent sea ice or other debris entering into the region 214, and may be able to prevent larger pieces of sea ice/debris from entering the region 214.

As is shown in Figures 41 and 42, there may be a portion of the floating collar 152 comprising the upper buoyancy member 159 and part of the columns 158 that is located above the waterline 201. Since the sea ice or other debris is likely to be located at the waterline 201 by virtue of its buoyancy, it may be beneficial to ensure that the protection structure 210 extends from the upper buoyancy member 159 and towards the waterline 210 at least so that the protection structure 210 meets the waterline 201. The protection structure 210 may therefore be designed to ensure that it is long enough to meet the waterline in all possible configurations of the fish farming system 151, in use. In some examples, the protection structure 210 may extend from the upper buoyancy member 159 towards the lower buoyancy member 157, but may not contact the lower buoyancy member 157. In such examples, the protection structure 210 may be held in place by connection or coupling to at least one of the columns 158. In this configuration, the fish farming system 151 may be lighter because the protection structure 210 is not required to be as big as in some other examples, while still providing a degree of restriction to floating sea ice or other debris inside the collar 152. Further, having a protection structure 210 that extends only until the water line may reduce the impact of underwater currents and tides on the position and stability of the system 151.

The protection structure 210 may be or comprise a net. Alternatively, the protection structure 210 may be or comprise a plate structure, which may or may not comprise apertures therein to permit the passage of a fluid, for example. In some examples, the protection structure 210 may comprise both a net and a plate material. The protection structure 210 may permit passage of a fluid therethrough, and therefore minimally affect the positioning and stability of the system 151, while at the same time preventing or restricting passage of floating sea ice and/or other floating matter into an internal region 214 of the collar 152.

According to these embodiments, various inventive combinations of features are provided, as outlined in the following numbered D-clauses:
CLAUSE D1. A fish farming system (151) comprising:
   a ring- or polygonal shaped floating collar (152) having a lower buoyancy member (157), an upper buoyancy member (159) and a plurality of columns (158) interconnecting the upper and lower buoyancy members (157,159);
   an enclosure (153) for fish suspended from and supported by the floating collar (152);
   a protection structure (210) coupled to the upper buoyancy member (159), the lower buoyancy member (157) and/or to the columns (158), the protection structure being configurable to restrict passage of matter therethrough.
CLAUSE D2. A fish farming system (151) according to clause D1, wherein the protection structure (210) extends around the entire circumference of the collar (152).
CLAUSE D3. A fish farming system (151) according to clause D1 or D2, wherein the protection structure (210) comprises a net or grid.
CLAUSE D4. A fish farming system (151) according to any of clauses D1 to D3, wherein the protection structure (210) comprises a solid plate.
CLAUSE D5. A fish farming system (151) according to any of clauses D1 to D4, wherein the protection structure (210) extends from the upper buoyancy member (159) to the lower buoyancy member (157) and the protection structure (210) is coupled to the lower buoyancy member.
CLAUSE D6. A fish farming system (151) according to any of clauses D1 to D5, wherein the protection structure (210) is coupled to at least one of the plurality of columns (158).
CLAUSE D7. A fish farming system (151) according to any of clauses D1 to D6, wherein the upper buoyancy member (159) is configurable to be located in or above a waterline (201) and the protection structure is coupled to the upper buoyancy member and is configurable to extend from the upper buoyancy member (159) to the waterline (201).
CLAUSE D8. A fish farming system (151) according to any of clauses D1 to D6, wherein the protection structure has a vertical extension.
CLAUSE D9. A fish farming system (151) according to any of clauses B1-B7 or C1-C9 having a protection structure according to any of clauses D1-D8.

In one aspect, we provide a method of operating a fish farming system 151, wherein in a first operational position the upper buoyancy member 159 or the lower buoyancy member 157 is located in the waterline 201. The floating collar 152 may thus "float on" the respective buoyancy member which is located in the waterline 201, which can be the lower buoyancy member 157 if in a service draft or the upper buoyancy member 159 if in a submerged draft.

In response to sea ice conditions, the method may further comprise adjusting the draft of the floating collar 152 and operating the fish farming system 151 in a second operational position, with the lower buoyancy member 157 in a submerged position and the upper buoyancy member 159 above the waterline 201. This position may be the one shown in Figs 41 or 42 (however the design of the floating collar 152 may be any of those shown and described elsewhere in this disclosure and need not be exactly those of Figs 41 and 42). For example, although the columns of Figures 41 and 42 are illustrated as having a deflection module 206 thereon, in some examples the columns with be without a deflection module 206. In other examples, and as is illustrated in Figure 41a, at least one (or all) of the columns 158 may comprise a reinforcement structure 208. The reinforcement structure 208 may be in the form of a sleeve that may fit around a central portion of the column or columns 158, or otherwise as described above.

In some examples, the reinforcement structure 208 may be coupled or affixed or fastened to the column 158 in a region of the column that is likely to be at, or in the vicinity of the waterline 201 during operation, or for an extended period of time. As such, the reinforcement structure 208 may protect the column 158 against damage caused as a result of abutting or rubbing against floating sea ice. The reinforcement structure 208 may be made from any appropriate material, for example metal, or a durable plastic material.

Adjustment of the draft in response to sea ice conditions may be, for example, as a result of an identified risk of sea ice by the operator or identified sea ice in the vicinity of the floating collar 152.

Advantageously, by providing a second operational position the risk and influence of sea ice may be mitigated, for example by reduction of the waterline area of the floating collar 152. This may allow sea ice to pass the floating collar 152 more easily (for example between the columns 158, and may reduce the impact of sea ice on the floating collar 152 and associated systems such as the mooring system by reducing the likelihood of sea ice coming into contact with any part of the floating collar 152.

Advantageously, the waterline area of the floating collar 152 in the second operational position is lower than the waterline area of the floating collar in the first operational position. This can be achieved by making the combined waterline area of the columns 158 lower than the waterline area of the upper buoyancy member 159 and/or lower buoyancy member 157. This also provides advantages when the floating collar 152 moves in waters which may contain sea ice, in that an enhanced ice breaking effect can be achieved. In addition, lowering the floating collar from, for example, a position in which the lower buoyancy member 157 is located at the waterline 201, may also move the roof 155 away from the waterline 201, thereby reducing the likelihood that ice or other debris will contact (and possibly damage) this part of the fish farming system 151.

The fish farming system 151 may be configured between the operational positions by changing the overall weight of the system 151, thereby also altering the buoyancy of the system 151. This may be achieved by adding weighted components to the system 151, or for example by ballasting and deballasting chambers within the system, as has been described in relation to other examples herein.

According to these embodiments, various inventive combinations of features are provided, as outlined in the following numbered E-clauses:
CLAUSE E1. A method of operating a fish farming system (151) comprising a ring- or polygonal shaped floating collar (152) having a lower buoyancy member (157), an upper buoyancy member (159) and a plurality of columns (158) interconnecting the upper and lower buoyancy members (157,159) and an enclosure (153) for fish suspended from and supported by the floating collar (152);
   the method comprising the steps:
   operating the fish farming system (151) in a first operational position in which the upper buoyancy member (159) or the lower buoyancy member (157) is located in the waterline (201),
   in response to sea ice conditions, adjusting the draft of the floating collar (152) to a second operational position whereby the lower buoyancy member (157) in a submerged position and the upper buoyancy member (159) above the waterline (201), and
   operating the fish farming system (151) in the second operational position.
CLAUSE E2. A method according to clause E1, wherein the fish farming system (151) is a fish farming system (151) according to any of clauses B1-B7, C1-C9 or D1-D9.
CLAUSE E3. A method according to clause E1 or E2, wherein the waterline area of the floating collar (152) in the second operational position is lower than the waterline area of the floating collar in the first operational position.
CLAUSE E4. A method according to any of clauses E1 to E3, wherein the floating collar (152) is adjusted to the second operational position in response to an increase in sea ice.
CLAUSE E5. A method according to any of clauses E1 to E4, wherein adjusting the draft of the floating collar (152) comprises increasing the weight of the floating collar (152). CLAUSE E6. A method according to any of clauses E1 to E5, wherein adjusting the draft of the floating collar (152) comprises ballasting or deballasting the floating collar.

In one aspect there is provided a method for operating a fish farm comprising a ring or polygonal shaped floating collar 152 and an enclosure 153 for fish, comprising the step of breaking up sea ice which is in contact with the floating collar by altering the position or orientation of the floating collar 152 by means of at least one ballast tank 212a-d (see Figures 44-45).

In use, ballast tanks 212a-d may enable the buoyancy of the fish farming system 151, or parts of the fish farming system 151, to be selectively altered by a user. A change in buoyancy of the fish farming system 151 may result in motion of the fish farming system 151, as the entire system, or a part of the system 151, sinks lower or rises up in water in which the fish farming system 151 is located. Such motion may be useful for controlling the impact of sea ice on the fish farming system 151, as it may enable the sea ice to be broken up into smaller pieces. Smaller pieces of sea ice may have a reduced impact on the stability and ability to position the system as compared to larger pieces. In addition, smaller pieces of sea ice may be less likely to cause damage to the system 151 as compared to larger pieces.

The motion caused by altering the position of the system 151 may be useful to break up sea ice that has formed on/around the system 151. Changing the draft of the system 151 may therefore permit a user to break up ice in the vicinity of the system 151, as well as permitting a user to configure the system 151 between an operational configuration and a service configuration.

In order to maximise the breakup of ice in the vicinity of the system 151, or prevent build-up of such ice, the buoyancy of the system may be changed repeatedly, for example by repeatedly flowing a ballast fluid (e.g. seawater) into an out of the ballast tanks 212a-d as described in relation to other examples herein. The ballast tanks may be filled and emptied in a cyclical pattern to generate motion of the system.

Illustrated in Figure 44, a "back and forth" motion of the system 151 may be generated by repeatedly pumping water into and out of ballast tanks located in the collar 152 and thus repeatedly changing the roll/pitch of the collar 152. As shown in Figure 44, the collar 152 may comprise four evenly circumferentially spaced ballast tanks 212a-d. By pumping ballast fluid (e.g. water) into one ballast tank (e.g. tank 212a or 212b), while pumping ballast fluid out of the other oppositely located ballast tank (e.g. tank 212c or 212d), and vice versa, then a rocking motion of the collar may be generated. It may be possible to time the pumping of ballast fluid into/out of each of the ballast tanks to resonate with the natural rocking frequency of the collar, thereby accentuating the motion of the collar and facilitating breakup of ice surrounding the system 151, while reducing the work required by a ballast pump system (not shown) located in the collar 152. In addition, this type of motion may be achieved having only one single ballast tank, although may be more effective where two oppositely positioned ballast tanks are present.

As is illustrated in Figure 45, the ballast tanks 212a-d may be sequentially emptied in an anti-clockwise direction (illustrated by anti-clockwise arrows in Figure 45) to create a rolling motion around the circumference of the fish farming system 151. Such a rolling motion may be particularly useful for breaking up ice formed in the vicinity of the system 151, while providing minimal disturbance to the fish in the farming system 151.

Although not illustrated, the collar 152 may comprise at least one, or a plurality, of fluid ports or intakes, which may be in the form of valves. The fluid port(s) may assist to permit inflow and expulsion of a fluid to/from the ballast tanks 212a-d. The water intake may be located on a section of the system 151 that is located below the waterline 201 (and therefore below any likely ice formation) in all drafts of the system 151. One such location may be the lower buoyancy member 157, in particular a lower or downwardly facing surface of the lower buoyancy member 157. This may allow the ballast tanks 212a-d to be selectively filled by a user using seawater as the ballast fluid, which may be readily available during use of the system 151.

Such fluid ports may also be used for the expulsion of ballast fluid from the ballast tanks 212a-d. While permitting reduction of the buoyancy of the overall system 151, expulsion of fluid from the fluid ports may provide the additional advantage in that it may provide a degree of thrust to move pieces of ice or floating debris away from the system 151, as the ballast fluid is expelled from the ballast tanks.

One can such generate a motion of the collar 152 which is advantageous for breaking up or preventing ice. The method is usable for all collar designs, but may be particularly useful for those described elsewhere in this disclosure.

According to these embodiments, various inventive combinations of features are provided, as outlined in the following numbered F-clauses:
CLAUSE F1. A method of operating a fish farming system (151) comprising a ring- or polygonal shaped floating collar (152) and an enclosure (153) for fish suspended from and supported by the floating collar (152), the method comprising the steps:
   preventing or breaking up sea ice which is in contact with the floating collar (152) by altering the position or orientation of the floating collar (152) by means of at least one ballast tank (212a-d).
CLAUSE F2. A method according to clause F1, wherein the step of altering the position or orientation of the floating collar (152) comprises changing the draft of the floating collar (152).
CLAUSE F3. A method according to clause F2, comprising repeatedly changing the draft in a cyclical pattern.
CLAUSE F4. A method according to any of clauses F1-F3, wherein the step of altering the position or orientation of the floating collar (152) comprises changing a roll and/or a pitch of the floating collar (152).
CLAUSE F5. A method according to clause F4, comprising repeatedly changing the roll and/or pitch in a cyclical pattern.
CLAUSE F6. A method according to any of clauses F1 to F5, comprising repeatedly pumping ballast fluid into and out of two or more ballast tanks to create a rocking motion of the floating collar (152)
CLAUSE F7. A method according to clause F6, comprising timing the repeated pumping of ballast fluid such that the rocking motion resonates with the natural rocking frequency of the floating collar (152).
CLAUSE F8. A method according to any of clauses F1 to F7, comprising pumping ballast water in a cyclical pattern through a series of tanks.
CLAUSE F9. The method according to any of clauses F1 to F8, comprising breaking up sea ice in contact with the floating collar (152) by cyclically pumping ballast water into/out of a group of at least three ballast tanks to lower a section of the floating collar (152) and move the lowered section of the floating collar (152) in a circumferential direction.
CLAUSE F10. The method according to clause F9, wherein the group of ballast tanks comprises four ballast tanks.
CLAUSE F11. The method according to clause F9 or F10, wherein the group of ballast tanks are distributed evenly circumferentially about the floating collar (152).
CLAUSE F12. A method according to any of clauses F1-F11, wherein the fish farming system (151) is a fish farming system (151) according to any of clauses B1-B7, C1-C9 or D1-D9.
CLAUSE F13. Use of a method according to any of clauses F1-F12 to prevent or break up sea ice around a collar (152).

Illustrated in Figures 46 to 55 is an embodiment of a fish farming system 151 that comprises a polygonal shaped floating collar 152 and a plurality of enclosures 153a-d for the containment of fish therein. The plurality of enclosures 153a-d are supported by the floating collar 152, and the collar 152 additionally comprises an air pocket 220a-d that is arranged at least partially within the enclosure 153a-d.

According to the example shown in Figures 46 to 52, the collar 152 has a square or rectangular shape, as can be seen clearly in Figure 46. The collar 152 is made up of four side members 152a-d that form a square or rectangular frame. In the centre of the collar 152 formed by the side members 152a-d is a recess, which is divided into quadrants 153a-d. In use, fish are contained within the recess formed by side members 152a-d, and in this example fish may be contained in one, some or each of the four quadrants 153a-d. Each of the four quadrants 153a-d may be separated by a partition, which may be in the form of a net, plate, grid or the like. The partition may be a stiff partition, such as a rigid grid, and/or a flexible partition such as a pliable net structure.

Incorporated in the square/rectangular collar 152 is an air enclosure or air pocket 220a-d which may extend downwardly from the collar, and may provide fish that are contained in the quadrants 153a-d access to a water surface and air also when the collar 152 is in a submerged state and the roof 155 is located a distance below the waterline 201. This may be seen most clearly in Figure 47. The air enclosure may thus hold a bubble of air in a location that is below the waterline 201. The fish farming system 151 may comprise means to replenish the bubble of air, if and when it is depleted, such as an air compressor and appropriate air supply pipes into the air pocket 220a-d.

In Figure 47, there is illustrated a side elevation view of the fish farming system 151 of Figure 46. Here, two of the quadrants 153a, 153b can be seen in their location below the waterline 201. Here, the outer bounds of the quadrants 153a-d may be formed by any appropriate material, such as a net, mesh, plate, etc., and in some cases may be held taught by a weight 228. In Figure 47 it is illustrated that the outer bounds of the quadrants 153a-d may be extended as shown with quadrant 153a, by providing a downwards force on the outer bounds material, for example in the direction of the blue arrow shown. The lower part of the enclosure 153a may be permanently held in a cone shape by a weight suspended below the enclosure 153a. In quadrant 153b is illustrated a means for crowding fish in quadrant 153b, which may involve sweeping a crowding device, such as a net, up from the bottom of the quadrant 153b. A similar principle is illustrated in Figure 48 in quadrant 153b, although in this case the crowding device is swept horizontally through the quadrant 153b.

Illustrated in Figure 49 is a three dimensional structure of the collar 152 of an example of the fish farming system 151. The collar 152 comprises side members 152a-d and air pockets arranged as a part of corner structures 225a-d. There is an area of overlap between each of the air pockets 220a-d and their respective quadrant 153a-d, which may enable any fish or other sealife in the quadrant 153a-d access to the air pocket 220a-d. Similarly, the air pockets 220a-d may provide an operator access to the quadrants, for example for providing food into the quadrant, or for introducing tooling, netting, measurement equipment, medication, or other things into the quadrant.

Also illustrated in Figure 49 are connection members 223, in this example in the form of beams, that connect each of the side members 152a-d together and provide a rigid structure for the collar 152.

Illustrated in Figure 50 is a similar collar 152 to that shown in Figure 49. As such, alike features will not be described again. In the example of Figure 50, the side members 152a-d are connected by cables or ties 223 that are held in tension. The cables or ties 223 may be tightened until each is under sufficient tension to hold the collar 152 together as a rigid structure. Using tension members such as cables 223 as illustrated may provide a cheaper and lighter option for construction of the collar 152 than in other examples.

The air pockets 220a-d illustrated in Figure 50 are located on the lower buoyancy member and are confined to a subsea location under the waterline 201. In the case of Figure 50, a channel or opening may extend through the collar 157 to the air pocket, to permit access to the air pockets 220a-c if necessary. Figure 51 illustrates a further view of one of the air pockets 220 from below the collar 152. It is illustrated that the air pocket consists of a hollow housing in which air may be captured and stored for access by fish in the enclosure 153a-d.

Figure 52 illustrates a further example of a collar 152, having air pocket(s) in the centre of the collar, in a centre structure 222. The air pocket(s) in the centre structure 222 may be a single air pocket accessible from all enclosures 153a-d, or it may be several separate air pockets.

In this example, the four air pockets, which in previous examples were located at each corner of the polygonal collar 152, are now located together in one central structure. Optionally, the collar 152 may have air pockets both in a central structure and along the outer structure of the collar 152.

In all embodiments, the air pocket(s) may have an access point within the collar structure from a position located above the water line 201. This may be used to provide access to the fish farm system 151 below the waterline 201, for example into the quadrants 153a-d. As such, the collar 152 may provide a hatch or opening (not shown) in any of the examples described herein, for such access.

Figures 53 to 55 illustrate a further example of a fish farming system, this time having a collar 152 that is substantially triangular in shape. The collar 152 comprises three sides 152a-c and a centre structure 222. The centre structure 222 is connected to each of the three sides by connection members 223. Together the centre structure 222 and the connection members define three separate enclosures 153a-c. In this example the three separate enclosures 153a-c are separated from one another by netting, which is suspended from the collar 152. In line with previous examples, and although not illustrated in Figure 53, the central structure 222 may comprise an access port such as a hatch or opening through which a user may be able to gain access to each of the enclosures 153a-c, for the provision of food to the enclosures, or for the introduction of tooling into the enclosures 153a-c.

As described in relation to previous examples, the collar may comprise a lower buoyancy member 157 and an upper buoyancy member 159 which are connected together via a plurality of columns 158. The three separate enclosures 153a-c can be suspended from the lower buoyancy member 157.

The centre structure 222 is in this embodiment in the form of a vertically oriented cylinder (i.e. the axis of the cylinder is approximately vertically oriented) and in this example the cylinder has an enclosed upper surface.

The centre structure 222 may be attached to the collar at both the upper buoyancy member 159 and the lower buoyancy member 157 and extends therebetween.

Having a structure as illustrated may permit a fish farming system 151 that has multiple enclosures 153a-d, while also providing a robust collar 152, the structural integrity of which may be reinforced by the centre structure 222, while also permitting secure access to a source of air, without allowing the fish to escape or be exposed to aerial predators.

Illustrated in Figure 55 is an example of a farming system 151 that comprises mooring system, and is held in place by mooring lines 226. In this example, as the collar 157 is triangular in shape, there is a mooring support 224 located at each corner thereof. The mooring support 224 comprises a plurality of vertically extending bars that are attached to both the upper buoyancy member 159 and the lower buoyancy member 157. Mooring lines 226 attach the collar 152 to a location (not shown) which may be on the seabed, thereby restricting the movement of the system 151.

Illustrated in Fig. 56, the connection members 223 may in any embodiment be arranged such as to span a central axis of one or more of the enclosures 153a-d. The central axis means a vertical axis extending from a midpoint of the enclosure or from a lowermost point of the enclosure, such as the tip of a cone-shaped bottom of the enclosure. The lowermost point can be effected by a weight suspended from the enclosure 153a-d, which may be a net structure. Reference is made also to Fig. 47 which shows such a cone-type shape having a lowermost point for the enclosure 153a.

Having the connection members 223, which is this case can be any internal structure arranged in the collar 152 at any height (such as at the same height as the upper or lower buoyancy members 157,159 or at the same height as the columns 158) provides the advantage that access directly above the centrepoint of each enclosure 153a-d can be ensured. For example, it may be desirable to be able to raise or lower equipment directly vertically down to the lowermost point in the enclosure, for example to collect dead fish or to inspect the enclosure 153a-d.

The connection members 223 may be, for example, beams which allow an operator to walk on them, and/or allows equipment to be suspended from them, e.g. by a winch, sheave, or suspension / hang-off point.

Although not illustrated in relation to Figures 46 to 55, the upper and/or lower buoyancy members 159, 157 may comprise ballast tanks, as has been previously described, and therefore the buoyancy of the farming system 151 may be adjusted as necessary. Therefore, the mooring lines 226 may comprise a degree of slack to permit vertical movement of the system 151 without causing damage to the mooring lines 226.

According to these embodiments, various inventive combinations of features are provided, as outlined in the following numbered G-clauses:
CLAUSE G1. A fish farming system (151) comprising:
   a polygonal shaped floating collar (152);
   a plurality of enclosures (153a-d) for fish suspended from and supported by the floating collar (152).
CLAUSE G2. A fish farming system according to clause G1, wherein the floating collar (152) for each of the plurality of enclosures (153a-d) comprises a respective air pocket (220a-d) defined by the floating collar (152) and arranged inside the enclosure (153a-d).
CLAUSE G3. A fish farming system (151) according to clause G1 of G2, wherein each air pocket (220a-d) is arranged in an intersection between two sides (152a-d) of the floating collar (152).
CLAUSE G4. A fish farming system (151) according to any of clauses G1-G3, comprising a centre structure (222), the centre structure (222) spanning the plurality of enclosures (153a-d).
CLAUSE G5. A fish farming system (151) according to the preceding clause, wherein the centre structure (222) comprises an opening into each of the plurality of enclosures (153a-d) for access to the enclosures (153a-d).
CLAUSE G6. A fish farming system (151) according to any of the two preceding clauses, wherein the air pocket (220a-d) is arranged in the centre structure (222).
CLAUSE G7. A fish farming system (151) according to any of the three preceding clauses, comprising at least one connecting portion (223) connecting the centre structure (222) to the sides (152a-d).
CLAUSE G8. A fish farming system according to the preceding clause, wherein the at least one connecting portion (223) is a tension member, advantageously wherein the at least one connecting portion (223) comprises a tensioned cable.
CLAUSE G9. A fish farming system (151) according to any of clauses G1-G8, wherein the enclosures (153a-d) have a rectangular cross-section in the horizontal plane.
CLAUSE G10. A fish farming system (151) according to any of clauses G1-G8, wherein the enclosures (153a-d) have a circular cross-section in the horizontal plane.
CLAUSE G11. A fish farming system (151) according to any one of clause G1-G10, the fish farming system (151) having a lower buoyancy member (157), an upper buoyancy member (159) and a plurality of columns (158) interconnecting the upper and lower buoyancy members (157,159).
CLAUSE G12. A fish farming system (151) according to any one of clause G1-G11, wherein the polygonal shaped floating collar (152) is a triangular collar or a rectangular collar, advantageously wherein the polygonal shaped floating collar (152) is a square collar.
CLAUSE G13. A fish farming system (151) according to any one of clause G1-G12, comprising connection members (223) arranged to span a central axis or central point of one or more of the enclosures (153a-d).

According to these embodiments, various inventive combinations of features are provided, as outlined in the following numbered H-clauses:
CLAUSE H1. A fish farming system (151) comprising:
   a polygonal shaped floating collar (152);
   a plurality of enclosures (153a-d) for fish suspended from and supported by the floating collar (152);
   wherein the floating collar (152) for each of the plurality of enclosures (153a-d) comprises a respective air pocket (220a-d) defined by the floating collar (152) and arranged inside the enclosure (153a-d).
CLAUSE H2. A fish farming system (151) according to clause H1, wherein each air pocket (220a-d) is arranged in an intersection between two sides (152a-d) of the floating collar (152).
CLAUSE H3. A fish farming system (151) according to clause H1 or H2, comprising a centre structure (222), the centre structure (222) spanning the plurality of enclosures (153a-d).
CLAUSE H4. A fish farming system (151) according to clause H3, wherein the centre structure (222) comprises an opening into each of the plurality of enclosures (153a-d) for access to the enclosures (153a-d).
CLAUSE H5. A fish farming system (151) according to any of the two preceding clauses, wherein the air pocket (220a-d) is arranged in the centre structure (222).
CLAUSE H6. A fish farming system (151) according to any of the three preceding clauses, comprising at least one connecting portion (223) connecting the centre structure (222) to the sides (152a-d).
CLAUSE H7. A fish farming system (151) according to any of clauses H1 to H6, wherein the enclosures (153a-d) have:
   a rectangular cross-section in the horizontal plane, or
   a circular cross-section in the horizontal plane.
CLAUSE H8. A fish farming system (151) according to any of clauses H1 to H7, the fish farming system (151) having a lower buoyancy member (157), an upper buoyancy member (159) and a plurality of columns (158) interconnecting the upper and lower buoyancy members (157,159).
CLAUSE H9. A fish farming system (151) according to any of clauses H1 to H8, wherein the polygonal shaped floating collar (152) is a triangular collar or a rectangular collar.
CLAUSE H10. A fish farming system (151) according to any of clauses H1 to H9, comprising connection members (223) arranged to span a central axis or central point of one or more of the enclosures (153a-d).

A third grouping of aspects, as illustrated in Figures 57 to 90 will now be described. As will become evident from the description thereof, similarities exist between this grouping of aspects, and that as previously described.

During the course of fish farming operations, there is often the need to move a number of fish from one location to another. For example, when part of the fish farm need to be cleaned or replace. Additionally, when harvesting fish in a fish farm, the fish must be extracted from their enclosure.

Commonly, nets are used to form the enclosure and the space for the fish in the nets may be reduced, e.g. by squeezing the net structure to force the fish out of their enclosure and into a vessel, for example, where the fish may be taken to a processing centre or to another fish farm, or by forcing the fish out of a first enclosure and into a second enclosure to enable cleaning or repair of the first enclosure. While this approach provides one method of extracting fish from their enclosure, it may harm some or all of the fish as a force may be applied to the fish when reducing the space of the enclosure due to crowding with other fish, in some cases resulting in crush and/or stress induced injuries to, and potentially mortality of, the fish. In cases where the extraction or displacement of only a small number of fish is required, e.g. for sampling of live fish of for harvesting fish that have grown to a large size, this method may result in stress or injury to all fish in the fish farm, as it may not be possible to selectively extract fish from the fish farm or move fish within the fish farm. Therefore the risk of harm and/or injury to all fish in the farm is introduced. This has a negative effect not only on the fish that are desired to be harvested or moved, but also other fish that do not require to be moved or extracted, for example because they may not yet have fully matured, and/or that may be still be small in size. Ideally, such fish are intended to stay in the enclosure, where they may be allowed to grow and mature until a later time when their harvesting may be more economically viable. In some cases, it may be necessary to move a portion of the fish in the fish farm, for example because the capacity of the fish farm (or an enclosure thereof) has been reached. In this case, avoiding any stress to the remaining fish is highly desirable.

Prior to handling operations, transportation and treatment it is common practice in the fish farming industry to starve the fish, as this makes the fish more capable of handling the stress from such operation. The starving period typically lasts a few days depending on factors such as temperature, species and size of fish. Starvation can have a negative impact on fish welfare and also represents a considerable loss for the farmer in the form of lost growth. With current methods, all the fish inside a fish cage must be starved in preparation for an extraction of just a portion of the fish. It is hence an objective to limit starvation to only the fish that will be handled.

This disclosure aims at providing an apparatus and a method to move fish from or within a fish farm without harming them, as well as enabling the selection a desired amount and/or type of fish prior to extraction and facilitate starving of only the selected fish.

Figure 57 shows simplified diagram of a fish farm 1000 according to the present disclosure comprising a first enclosure 1030. The fish farm 1000 is located in a body of water, which may be the sea or ocean. The fish farm 1000 comprises a floating structure 1004 having a positive buoyancy. The floating structure 1004 comprises a lower pontoon collar 1002 which may assist to provide buoyancy to the floating structure 1004. The lower pontoon collar 1002 may be hollow, or comprise a hollow portion thereof, and/or may comprise or be constructed from a buoyant material such as a buoyant foam or plastic, and/or may comprise buoyant members connected thereto, such as buoys or foam flotation members. The lower pontoon collar may additionally comprise means to selectively alter the draft thereof (as well as the draft of the floating structure 1004 of the fish farm), e.g. a fluid inlet and a pump for pumping water into and out of the lower pontoon collar 1002 in a ballast arrangement to alter the height of the lower pontoon collar above the water level. The floating structure 1004 may additionally comprise an upper collar 1003 which may assist to provide additional stability to the fish farm 1000 when located in an offshore location. The upper collar 1003 may have an open top section to permit easy access to the fish farm 1000, or may comprise a cover, net, mesh or the like having a hatch or opening therein through which the fish farm 1000 may be accessed. In addition, the upper collar 1003 may comprise an access structure (not illustrated in Figure 57) to facilitate access to the fish farm 1000 by a user. The access structure may be in the form of a metal frame and/or platform on which a user may be able to stand, balance against, position equipment, secure a floating vessel thereto etc.. The lower pontoon collar 1002 and the upper pontoon collar 1003 are connected by an arrangement comprising columns and/or trusses 1001 in this example. In some examples, the fish farm 1000 may comprise an additional or alternative arrangement to provide stability and buoyancy to the first enclosure 1030, e.g. a system of tensioned ropes or a frame surrounding the first enclosure 1030.

Below the floating structure 1004 a first net 1005 is arranged. In this example the first net 1005 has a cylindrical shape, one end of which is conically shaped. In another example, the first net 1005 may have a different shape, e.g. may be cuboid, conical, frusto-conical, or in the form of some other extruded polygonal. In some examples the first net 1005 may comprise no bottom part 1005a or may comprise a bottom part 1005a of another shape, for example a pyramidal shape, a dome shape or the net may be flat-bottomed, in this case meaning that the bottom part would comprise a circular shape. The first net may comprise or be connected to a top net 1006. The top net 1006 may form one end of the cylindrical shape of the first net 1005, such that the top net 1006 has a circular form. In some examples, the first net 1005 may not be in the form of a cylinder, but another shape (e.g. another extruded shape) and the top net 1006 may be shaped correspondingly so as to form an enclosure in combination with the first net 1005. The shape of the top net 1006 may correspond to the shape of an opening in the first net, such that the top net 1006 is able to close the opening, if necessary. For example, where the first net 1005 has the shape of an extruded pentagon, then the top net 1006 may be pentagonal in shape. The top net 1006 may lie above the water surface, or below the water surface depending on the draft of the fish farm 1000. The first net 1005 and the top net 1006 may together form a first enclosure 1030 for the fish. Located above the top net 1006 in this example is a cover 1012, which in this example is a net or membrane that may be permeable to water. The cover may assist to provide protection to the fish farm, for example from predators such as seabirds and may additionally assist to prevent fish from leaping from the fish farm 1000. A further enclosure may therefore be formed between the top net 1006, the cover 1012 and a peripheral net 1014. In some examples, it may be possible to insert a vertically extending net (not shown) between the cover 1012 and the top net 1006, which may be used to divide the enclosure between the top net 1006 and the cover 1012 into further enclosures.

As illustrated, surrounding the first net 1005 is a second net 1011. The second net 1011 may be arranged as a double barrier to protect against damage to the enclosure 1030 (e.g. to protect against damage to the first net 1005 of the enclosure) and additionally to protect the fish contained in the enclosure 1030 e.g. by keeping predators away or by reducing impact forces of objects hitting the fish cage. The second net 1011 may additionally assist to improve the security of the fish farm 1000 by assisting to prevent escape of fish from the enclosure 1030, should there be a breach in the first net 1005. Provided sufficient spacing between the nets, two independent incidents involving damage to both nets would be required in order for fish to escape, thereby drastically reducing the chances of fish escape.

The first net 1005 and second net 1011 may be secured together by a securing arrangement. For example by using a series of connectors 1013 such as rope or ties that may be held in tension between the nets, thereby restricting the movement of the first net 1005 relative to the second net 1011 which may improve the stability of the fish farm 1000 by preventing erratic movement of the first net 1005 inside the second net 1011. The securing arrangement may be located on the first net 1005 at the interface between the first net 1005 and the bottom part of the first net 1005a, while the securing arrangement may be located on the second net 1011 at the interface between the second net 1011 and a bottom part of the second net 1011a. The securing arrangement may, in some examples, connect the first net 1005 and the second net 1011 together at the interface between each net 1005, 1011 and the respective bottom part 1005a, 1011a thereof. The securing arrangement may comprise a frame structure or two frame structures, and the frame structure or structures may be connected to one or both of the first and/or second nets 1005, 1011. The frame structure may be the same shape as the net to which it is attached, e.g. the same shape as the cross-section of the net 1005, 1011 to which it is attached. In this example, the frame structure may be circular in shape as the first and second nets 1005, 1011 are cylindrical in shape.

In some examples, there may be a weighting element attached to the first and second net 1005,1011, e.g. a metal collar, a collar filled with a weighted material such as cement or any other material with a density greater than that of the surrounding water of the fish farm 1000, a plurality of weighted capsules or other components, etc.. The weighting element may assist to provide tension in the first and second net 1005,1011 in a direction in which the first and second nets 1005, 1011 extend (e.g. in a vertical direction) and reduce deformation or movement of the enclosure 1030 (e.g. of the nets 1005, 1011 in the enclosure) due to external forces such as those caused by wave motion and sea/ocean currents. As such, having a weighted element may assist to improve the stability of the enclosure 1030 of the fish farm by reducing the movement thereof.

The weighted element may be positioned on or connected to either or both of the first and second nets 1005, 1011, and may be located at or towards the lower end of the first and second nets 1005, 1011 at the connection between the first and second nets 1005, 1011 and the pontoon structure 1004 (e.g. the lower pontoon collar 1002). The weighted element may be positioned around the periphery of the first and/or second nets 1005, 1011, and may be positioned in a single plane (e.g. may be positioned at a constant vertical location). The weighted element may, in some examples, comprise a plurality of weighted components, positioned at a plurality of locations on the fish farm 1000. The weighted element may be flexible or may be a rigid continuous structure. In the case of a rigid weighted element, the weighted element may additionally assist to prevent deformation of the nets. The weighted element, or an additional weighted element, may be provided at the interface between the first and/or second net 1005, 1011, and the respective bottom part of one or each of the first and second nets 1005, 1011, thereby assisting to hold the first and/or second nets 1005, 1011 in tension in the water.

At least a part of the conical section of the first enclosure 1030 may be or comprise a reinforced material - in this example, the vertex of the conical section of the first enclosure 1030 comprises a reinforced material. Here, the vertex of the conical section of the first enclosure 1030 is located at the lowermost point of the first enclosure 1030. The vertex of the conical section of the first enclosure 1030 may comprise a mort collection system 1031 for removing mort, i.e. dead fish and optionally other detritus, from the first enclosure 1030 which may naturally sink to the vertex of the bottom part 1005a, being the lowest point in the first enclosure 1030. The mort collection system 1031 may be connected to a fish transport means 2002 which will move the collected mort to a mort processing unit, e.g. by using a flow of water to transport the collected mort. The second net 1011 has a similar shape relative to the first net 1005 comprising a cylindrical shape with a conically shaped end. In another example, the second net 1011 may have a different shape, e.g. cuboid or may have a shape differing from the first net 1005. The bottom of the conical section of the second net 1011 may also be reinforced as shown in Figure 57.

In this example, the fish farm 1000 is fixed to its offshore location by an anchoring system comprising multiple lines 1020a-e such as wires, chains, ropes, or the like, which may be anchored to the seabed or some other static location such as shore, a moored frame or subsea infrastructure.

Figures 58-60 show a side view of a fish farm 1100 which is substantially similar to that as previously described. As such, where possible similar reference numerals are used to describe similar components.

The fish farm 1100 is illustrated comprising a first enclosure 1130 and a second enclosure 1140, Figures 58-60 representing a method of operating the fish farm 1100 according to the present disclosure. Here, the first enclosure 1130 and the second enclosure 1140 are connected by an access unit 1151 which is comprised in an access arrangement 1150. In this example, the fish farm 1100 comprises a third enclosure 1132. Here, the first enclosure 1130 may be substantially similar to the third enclosure 1132, in that both are the same or a similar shape, and both are connected to a floating structure of the fish farm 1100. The third enclosure 1132 is connected to the second enclosure 1140 by second access unit 1152 belonging to the access arrangement 1150, such that in this example the fish farm 1100 may comprise several access units. For example, the number of access units may correspond to the number of enclosures present. The number of access units may be one fewer than the number of enclosures present, or more than this in the case where there is more than one access unit present between any two enclosures. Both the first and the third enclosures 1130, 1132 are completely submerged below the surface of the water 1190, as is the access arrangement 1150. The second enclosure 1140 is located closer to the water surface 1190 in this example, and may not be completely submerged in the water. As such, at least a part of the second enclosure 1140 may be located above the water surface 1190, which may be useful in times when it is required to crowd fish in the second enclosure 1140, as will be described in more detail in the following paragraphs.

In this Figure, the second enclosure is located above the first enclosure 1130 (and the third enclosure 1132), and is located in the floating structure 1104 of the fish farm. It should be noted, however, that the second enclosure 1140 is not required to be located above the first and optionally the third enclosure in all examples. The second enclosure 1140 may be positioned on the same level as (e.g. to the side of) the first and/or third enclosure 1130, 1132, or any other enclosure that may be equivalent to the first/third enclosure. The second enclosure 1140 is secured to the floating structure 1104, in this example by ropes or ties 1158, and here occupies a volume that is smaller than the floating structure 1104. The second enclosure 1140 may be made from a flexible net structure that is supported by ropes or ties 1158, or may be made from a collection of rigid net panels to form a rigid frame structure, with netting located in the frame openings. In some examples, the second enclosure 1140 may be made from rigid panels (e.g. of steel or plastic) which may be water permeable, or in some examples the rigid panels may not be water permeable, in which case a water circulation system may be provided, for example through use of a fluid pump arrangement. The size of the second enclosure 1140 relative to the floating structure 1104 may permit the second enclosure 1140 may be held below the water surface. To illustrate this point by way of example, where the floating structure 1104 is 20 metres in height, the second enclosure may be 10 metres in height, such that it extends half-way up the height of the floating structure 1104, and is located at least 10 metres below the water surface, which may be recognised as being sufficient to assist to protect fish inside the second enclosure 1140 from surface predators, waves, sea lice etc.. In some examples, the second enclosure 1140 may be able to be moved within the floating structure 1104. The second enclosure 1140 may be able to be moved closer to the water surface, which may be useful for removing the second enclosure 1140, for example for cleaning purposes, or when the fish inside the second enclosure 1140 are desired to be removed from the fish farm 1100.

Here, the access arrangement 1150 enables selective access between the first enclosure 1130, the second enclosure 1140 and the third enclosure 1132. Access between the first enclosure 1130 and the third enclosure 1132 may be via the second enclosure 1140, as is the case in this example. Here, the access arrangement 1150 is horizontally oriented, as the second enclosure 1140 is located above the first/third enclosure 1130, 1132. However, in examples where the second enclosure 1140 is located to the side of the first/third enclosure 1130, 1132, then the access arrangement 1150 may be vertically oriented.

The access arrangement 1150 and the selective access between the enclosures 1130, 1140, 1132 will be described in detail referring to Figures 61a-c. In another example, there may be two enclosures, e.g. the first and second enclosure 1130,1140 and the access arrangement 1150 may enable access between these two, comprising only one single access unit 1151. In yet another example, the first and third enclosure 1130,1132 may be present and the access arrangement 1150 may enable direct access between these two, the fish farm 1100 thereby comprising only one access unit 1151 leading directly from the first to the third enclosure 1130, 1132. The access arrangement 1150 comprises entry ports at the enclosures 1130,1132,1140 to connect one enclosure to another enclosure 1130,1132,1140 as will be shown in detail in Figures 61a-c. In addition to an entry port or entry ports, the access arrangement 1150 may comprise a shaft (e.g. a hollow shaft) extending between the entry ports to connect the enclosures 1130,1132,1140 to permit passage between the entry ports, and thereby the enclosures 1130,1132,1140. In other examples the access arrangement 1150 may comprise a tubular or conduit that connects the entry ports, thereby assisting to bridge any gap that may be present between at least two of the enclosures 1130,1132,1140, while still permitting passage of a fish therebetween. In such examples, a shaft, tubular or conduit may enable the passage of fish between two enclosures that are not directly adjacent. In another example, the access arrangement 1150 may be configured such that the entry ports of the different enclosures 1130,1132,1140 are directly connected to one another, for example in cases where at least two of the enclosures 1130,1132,1140 are sufficiently close that no connecting shaft, tubing or conduit is necessary.

The fish farm 1100 of the described example comprises a lure arrangement, the lure arrangement comprising lure units 1145a-c being arranged in the first, second and third enclosure 1130,1132,1140 respectively for the purpose of luring a fish to the lure unit 1145a-c in each of the enclosures 1130,1132,1140. In some examples, there may be multiple lure units 1145a-c in each, any or all of the enclosures 1130,1132,1140 or there may be lure units 1145a-c only in selected enclosures 1130,1132,1140 (e.g. not all enclosures 1130, 1140, 1132 may comprise a lure unit, but only an enclosure where the luring of fish thereto is desired) and in some examples the fish farm may not require any lure arrangements to be contained therein. The lure units 1145a-c may be attached to the nets forming the enclosures 1130,1132,1140, may be attached to the floating structure 1001,1002,1003 introduced in Figure 57, may be connected to the access arrangement 1150 or may be suspended in lines from nets, e.g. those nets forming the enclosures in the fish farm 1100, or suspended from the structure. The lure arrangement 1145 a-c is designed for luring the fish thereto, e.g. by distributing a supply of fish feed, by providing an oxygen supply, by providing access to air for swim bladder adjustment, by shining a light on the fish, on an area of the enclosure or on the water surface, by using sound signals or by releasing an attractive or repulsive smell, or by using a fluid propeller to create a fluid flow, which may lure the fish thereto as a result of a natural desire to swim against a flow of water - the fluid flow may be directed through an access arrangement 1150, for example which may then encourage a fish to swim from one enclosure to another separate enclosure via the access arrangement. For example, the lure arrangement 1145a-c may be in the form of a lamp or light source, for example an ultraviolet light source, to which fish may be attracted. A fish may be attracted directly to a light source, or may be attracted to light from the light source reflecting off a water surface in the fish farm, or to an area inside the fish farm that is lit up. Alternatively, the lure arrangement may be in the form of a supply of fish feed, a pocket of air, or a combination of all of the aforementioned. As well as using attraction to move fish inside the fish farm 1100, the lure arrangement may also use repulsion, or a combination of both attraction and repulsion to move the fish in the fish farm 1100. For example, access to an air supply or air pocket may be blocked or restricted in one enclosure, thereby repelling a fish away from one enclosure into another, where an air supply or air pocket may be more regularly available. Additionally, sound or light may be used that are unpleasant to a fish, thereby encouraging the fish to move away from the vicinity thereof.

In some cases, the fish may be starved for a period of time (e.g. a meal, a day or a few days) in one enclosure in order to increase the efficacy of a lure comprising a fish feeding system located in a separate enclosure. In some examples, a sound may be played to the fish before feeding, thereby training the fish to associate being fed with a sound. As such, the feeding sound may be used itself as a lure, once the fish associate the feeding sound with being fed. The lure arrangement 1145a-c may be able to be selectively activated, to lure fish only when desired. For example, where the lure arrangement 1145a-c is or comprises a light source, a user or a control system may be able to turn the light source on and off if desired. Where the lure arrangement 1145a-c is or comprises a source of fish feed or a pocket of air, selective access may be able to be provided to the fish feed or pocket of air by containing the fish feed and/or air in a selectively accessible compartment, access to which is controlled by a user opening, for example, a door or hatch. The lure arrangement 1145a-c may be able to be remotely activated by a user, for example by using wireless communication, or a wired electrical connection extending to the surface of the fish farm 1100, or may be controllable by mechanical means, such as by pneumatic or hydraulic means actuated by valves, pumps etc. For example, an air pocket may be filled or replenished with air provided in a conduit by mechanical means, or a mechanical feeding device may be operated by provision of hydraulic fluid thereto. In some examples, each enclosure may comprise the same lure arrangement 1145a-c or combination thereof (e.g. a combination of a light source and fish feed) or some or all of the enclosures 1130,1132,1140 may comprise differing lure arrangements 1145a-c.

In the example of Figure 58, the fish are held mainly in the first and third enclosure 1130,1132 - e.g. the fish may be held in the first and third enclosures 1130, 1132 in the long-term, or for a longer period of time, and may only be held in the second enclosure 1140 for shorter periods of time, such as when it is desired to remove some or all the fish from the fish farm 1100, or when there is a desire to starve only a portion of the fish in the fish farm. The second enclosure 1140 is arranged above the first and third enclosure 1130,1132 and has a cuboidal shape, although it should be noted that other shapes may also be possible, such as a cylindrical shape, or any other shape that is desired by the user. The shape of the second enclosure 1140 may be at least partially defined by the floating structure 1104, as in this example the third enclosure 1132 is contained therein, and in cases where a sliding bulkhead is used (as will be described in later sections), it may be beneficial having a shape with at least one uniform cross-section. In some examples, for example when the second enclosure 1140 can be raised to a level above the waterline (e.g. by de-ballasting the support structure) then it may be beneficial to have a shape with a vertically reducing cross-sectional area, such as an inverted pyramid or cone, as this would facilitate crowding the fish towards a single point in the second enclosure for extraction therefrom.

As previously described, the second enclosure may be made from a flexible net structure that is supported by ropes or ties, or may be made from a collection of rigid net panels to form a rigid frame structure, with netting located in the frame openings. In some examples, the second enclosure 1140 may be made from rigid panels (e.g. of steel or plastic) which may be water permeable, or in some examples the rigid panels may not be water permeable, in which case a water circulation system may be provided, for example through use of a fluid pump arrangement. The size of the second enclosure 1140 relative to the floating structure 1104 may permit the second enclosure 1140 may be held below the water surface.

The first and third enclosure 1130,1132 in this example also comprise a cuboidal shape with a pyramidal lower section at their bottom part. However, in another example, the enclosures 1130,1132,1140 may have another shape, such as that described in relation to Figure 57 (e.g. a cylindrical shape). Herein the second enclosure 1140 is formed by a net structure, the net structure being connected with connectors such as ropes to the floating structure 1001,1002,1003 to apply tension to the net structure and hold it in place/shape relative to the floating structure 1104, although in some examples, the second enclosure 1140 may be directly connected to the floating structure 1001, 1002, 1003. Having a second enclosure may permit the fish farm 1100 to be used to separate a portion (e.g. some) of the fish therein, for harvesting, without having to harvest all the fish therein at one time. This may enable the overall size of the fish farm to be increased, as there is no need to harvest all the fish at once and limit the farm to the number of fish which may be harvested on a single vessel. This also means that it is not necessary to starve all the fish in the first enclosure prior to extraction of only a portion of the fish.

Although illustrated is a location above the first enclosure 1130 and the third enclosure 1132, the second enclosure 1140 may also be located to one side of the first enclosure, at the same height thereof. In some examples, the second enclosure, or at least part of the second enclosure may be located adjacent (e.g. at the side of) the first and/or third enclosure, and inside an outer enclosure 1111, e.g. an outer net (illustrated in broken outline in Figure 58) which may be used as a barrier to stop the escape of a fish, should there be a breach in one of the enclosures (similar to the second net 1011 illustrated in Figure 57).

In the example illustrated in the disclosure of Figure 58, fish are grown in the first and third enclosure 1130,1132. The second enclosure 1140 may enable the selection of a number of fish from the first and second enclosure 1130,1132, for grouping the selected fish based on some characteristic thereof and optionally for removing said selected fish from the fish farm 1000. In another example the arrangement of the enclosures 1130,1132,1140 may differ, e.g. the enclosures may be arranged side by side or the function of the enclosures may differ.

Figure 59 illustrates the process of fish being lured into the second enclosure 1140. Here, the access arrangement 1150 is configured to an open position to permit fish access through at least one of the access units 1151, 1152 into the second enclosure 1140. It may be beneficial to be able to open each of the access units 1151, 1152 individually, to permit selective access between the second enclosure 1140 and either one or (if desired) both of the first and third enclosures 1130, 1132. In some examples, it may be beneficial to provide a sequential opening of the access units 1151, 1152, for example to move fish from the first enclosure 1130 to the second enclosure 1140, and then from the second enclosure 1140 to the third enclosure 1132.

The second enclosure 1140 may be smaller than the first and third enclosures 1130,1132 as shown in this example, thereby enabling only some of the fish in the fish farm to move into the second enclosure 1140, effectively selecting those fish from the fish held in the first and third enclosure 1130,1132. After a desired number of fish have been lured into the second enclosure 1140, the access arrangement 1150 may be closed such that it blocks the access through the access units 1151,1152 into the first and third enclosure 1130,1132, trapping the fish in the second enclosure 1140. The fish in the second enclosure 1140 may then be optionally starved and extracted from the fish farm 1100, e.g. for slaughtering or for moving to another fish farm.

Figure 60 illustrates a step in a method of operating a fish farm 1100. In the illustration of Figure 60, after luring the fish into the second compartment 1140 as described in relation to Figure 59, access through the access arrangement 1150 is restricted by a restrictor arrangement 1160 to selectively restrict/permit access of fish between the second enclosure 1140 and the first and third enclosure 1130,1132 (e.g. from the second enclosure 1140 to the first or third enclosure 1130, 1132). The restrictor arrangement 1160 may be configured to allow smaller fish to pass therethrough, for example by providing an opening or openings that are sized to allow only smaller fish to pass therethrough. In an example where fish of any size have been permitted into the second enclosure 1140, using a restrictor arrangement 1160 to permit only fish below a certain size from passing therethrough has the effect of trapping the larger fish in the second enclosure 1140 as shown in Figure 60. This may be useful as it may permit a group of larger fish to be held in the second enclosure 1140, for example for harvesting, while harvesting of fish that are too small is avoided.

The restrictor arrangement 1160 may comprise multiple restrictor units 1161,1162 as shown in Figure 60, herein comprising a unit 1161 at the access unit 1151 and another unit 1162 at the access unit 1152. As shown, the restrictor arrangement 1160 may be located inside the access arrangement 1150. In another example, the restrictor arrangement 1160 may be attached to the access arrangement 1150 e.g. at an opening of the access arrangement or may be located separated from the access arrangement 1150. The restrictor arrangement 1160, more precisely the restrictor unit 1161, is introduced in detail in Figures 61a-c.

The luring arrangement may be utilized to lure the smaller fish back into the first and third enclosure 1130,1132 by disabling the luring unit 1145b and activating the luring units 1145a,c, as well as to lure fish in to the second enclosure 1140, or by changing from an attraction lure to a repulsion lure, thereby encouraging fish that have been lured into the second enclosure 1140 to leave. As shown in Figure 60, then only the larger fish remain in the enclosure 1140 enabling to select fish for extraction by size. This may be beneficial, when extracting only the largest fish from the fish farm 1100 while leaving the smaller fish thereby permitting them further time to grow to a desired size before extraction. The described method may not only enable extraction without harming the fish, as the fish are not physically stressed or forced during the selection process, but also enables the selection of a desired group of fish to be extracted, i.e. the fish which have grown big enough, to prevent extraction of fish which may be too small for further sale/processing, or which may not be able to be sold for a high price.

Figures 61a-c show an access unit 1151 of the access arrangement 1150 and a restrictor unit 1161 of the restrictor arrangement 1160 in further detail. On the left side of each Figure, a sectional side view on the access unit 1151 and the restrictor unit 1061 is illustrated. On the right side of each Figure, an elevation view is provided. The restrictor unit 1161 is arranged inside the access unit 1151. The access arrangement 1150 may comprise multiple access units 1151 similar to that described, or only a single one. The restrictor arrangement 1160 may comprise a restrictor unit 1161 located in each access unit 1151 of the access arrangement 1150, or in some examples, the fish farm 1100 may comprise an access arrangement 1150 or access arrangements 1150 that do not comprise a restrictor arrangement 1160 for cases where access is required, but with no requirement for size restriction.

The access unit 1151 illustrated comprises a first access port 1155 and a second access port 1156 in the example of Figures 61a-e. As described in reference to in Figures 58-60, the first access port 1155 is located in the first enclosure 1130 and the second access port 1156 is located in the second enclosure 1140. Here, the access unit 1151 comprises a hollow shaft that connects the first access port 1155 to the second access port 1156, thereby connecting two enclosures between which the access unit 1151 is located, such as the first and second enclosure 1130,1140. In some examples, the access unit 1151 may be or comprise a pipe or a hose to connect the first and second enclosure 1130,1140, for example in situations where the first and second enclosures are not immediately adjacent.

The restrictor unit 1161 comprises a plurality of restriction members, in this example in the form of rigid bars with spaces therebetween for permitting a fish to pass therethrough. In other examples, the restrictor unit 1161 may comprise a single restriction member, and/or the restriction member or members may be in the form of a panel(s), plate(s) or bar(s). As shown in Figures 61a-e, the restrictor unit 1161 comprises two sets of restriction members 1164,1165, a first set of restriction members 1164 shown in an upper position in Figures 61a-e and a second set of restriction members 1165 shown laterally offset from the first set of restriction members 1164 in a lower position. The sets of restriction members 1164,1165 comprise spaces between the members to permit a fish to pass therethrough. In this example each of the members are the same size and are equally spaced. However, in some examples, the members may not be equally sized and/or may not have equal spacing, such that at least two of the spaces between each of the members may differ. The first set of restriction members 1164 is slidably moveable relative to the second set of restriction members 1165 between an open position and a closed position. To achieve this, either the first or the second set of restriction members 1164, 1165 may be moveable, or both sets of restriction members may be moveable. The open position is shown in Figure 61b, herein the first and second set of rigid bars 1164,1165 are axially aligned, such that the fish may pass through the space between the first and second set of restriction members 1164,1165. The closed position is shown in Figure 61a, in which the first set of restriction members 1164 is aligned with the spaces of the second set of restriction members 1165, thereby preventing passage of a fish therethrough. Shown in Figure 61c is a third configuration, in which the first set of restriction members 1164 has a partial overlap with the second set of restriction members 1165, thereby reducing the space available for passage of a fish therethrough. This third configuration may be used when selecting fish according to their size as described with reference to Figure 60 as a larger fish may be unable to swim through the passage while a smaller fish may be able to do so. In the case where the restriction members 1164, 1165 are in the form of plates, the plates may be oriented at an oblique angle relative to the direction of motion, which may assist to provide a partial overlap between the restriction members 1164, 1165 when a degree of size restriction is required.

In this example the restriction members within each set of restriction members 1164, 1165 are parallel to one another. Similarly the restriction members of the first and second set of restriction members 1164,1165 are parallel to one another. In another example the restriction members may be in a different configuration, e.g. each set of restriction members 1164,1165 may form a grid structure, rather than being elongate and parallelly disposed, or the restriction members may be positioned with the longitudinal axis of one set of restriction members 1164 being oblique e.g. angularly displaced relative to the second set of restriction members 1165. In this example the first set of restriction members 1164 is slidably moveable relative to the second set of restriction members 1165 in a direction perpendicular to the longitudinal axis of the restriction members e.g. such that motion of the first set of restriction members 1164 is parallel to the motion of the second set of restriction members 1165, such as motion located in parallel planes. In some examples, the first set of restriction members 1164 may be moveable relative to the second set of restriction members 1165 in a direction of the longitudinal axis of the restriction members or in both the direction of the longitudinal axis, and in a direction perpendicular to the longitudinal axis as previously described. The first and/or second set of restriction members 1164 may be remotely moveable by a user or may be moveable by a control system controlling the operation of the fish farm 1000. An actuator may be connected to either one or both of the first and/or second set of restriction members 1164, 1165 depending on which of the sets of restriction members are to be moved. The actuator may be in the form of a remotely (e.g. wirelessly) operated motor, or may comprise a mechanical connection to the surface, allowing a user to move the restriction members if necessary.

The access unit 1151 and the restrictor unit 1161 may be arranged in the vicinity of an air pocket structure 1170, and in some cases the air pocket structure 1170 may incorporate a structural engagement with the access unit 1151 and/or restrictor unit 1161. The air pocket structure may comprise an accumulation of air 1171, to be held in a subsurface location, as illustrated by the location of the access units 1151 in the Figures. The accumulation of air 1171 is located in contact with the water 1173 inside the first enclosure 1130 via a water-air-interface 1172. The fish may be able to see the water surface at the interface 1172 and be lured to the accumulation of air 1171 for example as they may feel the need to adjust their swim bladder. By luring the fish to the air pocket structure 1170, the fish will then be located in the vicinity of the access unit 1151, and some fish may swim through the access unit 1151, without the yet the need to utilise the lure arrangement.

In another example the air pocket structure 1170 may be considered to form part of the lure arrangement, and may enhance the efficacy of the lure arrangement in a separate enclosure by encouraging fish to swim towards access to another enclosure, thereby making the fish more likely to be attracted to the lure in another enclosure. The air pocket structure 1170 may be a location that is frequently visited by fish. Therefore, if the air is removed from the air pocket structure 1170, or if access to the air pocket structure 1170 is blocked, the fish may still be likely to swim to the structure, and then may swim through the access unit 1151 in search for an air pocket in an adjacent enclosure. In some examples, a one-way opening may be used, such as an opening with a flapper structure or funnel structure, to prevent fish from returning to the previous enclosure once having moved through the access unit 1151.

Figures 61d and 61e illustrate an example of an air pocket structure 1170 with a sliding panel 1177 that may be placed either over the access arrangement 1151 (Figure 61d) or over access to the air pocket structure 1170 (Figure 61e), in this example by a simple sliding motion. As such, the fish may approach the air pocket structure 1170 seeking access to the air pocket. With access to the air pocket blocked, the fish may swim through the access arrangement 1151 instead.

The fish farm 1100 may comprise a sensor arrangement for measuring the quantity of fish moving through the access arrangement 1150. Herein the sensor arrangement comprises a sensor 1169 configured to count the number of fish passing through the access unit 1151. The sensor arrangement may comprise a sensor at each access unit 1151,1152 of the access arrangement 1150, and thus the sensor arrangement may have a submerged location, as the sensor arrangement comprises a sensor at each access unit 1151, 1152 of the access arrangement 1150. The sensor 1169 may be a camera comprising image processor with a counter to count the number of fish passing through the access arrangement 1150, and/or may comprise a photodetector and optionally a light source. In some examples, the sensor may provide information permitting a processing unit or a user to measure the size and biomass of each fish passing through the access arrangement 1150 to calculate the number or mass of the fish currently passing through the access unit 1151 or approaching the access unit 1151 and for example, into the second enclosure 1140. The sensor 1169 or sensor arrangement may be or comprise an echo sounder for measuring the biomass of fish in the proximity of the sensor arrangement. Preferably the sensor arrangement, herein the sensor 1169, is located adjacent at least one of the first and second access ports 1155,1156 thereby permitting the sensor arrangement to register each fish passing through the access arrangement 1150. This may have the effect of reducing the measurement error when compared to methods that involve the observation (e.g. scanning) of large groups of fish in an enclosure, as the sensor arrangement is able to identify each fish as it passes through the access unit 1151, and measure the mass of fish passing therethrough, thereby giving a better estimate of the biomass of fish in an enclosure. The efficacy of such a system may increase further when used in combination with the described fish farm 1100 comprising at least a first and second enclosure, with the fish being lured from one enclosure to another, as the fish may pass more slowly and/or in a more organised manner than in fish farms that use other methods of moving fish such as physically forcing fish from one enclosure to the next. When fish are forced from one enclosure to the next, large numbers of fish may be pushed together, making counting of such fish difficult as well as estimating the biomass weight of the crowded fish. In the present disclosure, where the fish swim from one enclosure to the next to follow a lure, the fish may move more slowly through an access unit 1151, thereby facilitating counting thereof, and additionally facilitating estimating biomass weight, identifying the ID and identifying the health condition of the fish.

The sensor data provided by the sensor arrangement 1169 may be used by a user or a control system to provide control to the volume of biomass in each of the enclosures in the fish farm 1100, for example in the second enclosure 1140. In one example, the sensor arrangement 1169 may provide an indication of the biomass in an enclosure, such as the second enclosure 1140, such that a control system or a user may be able to operate a restrictor unit 1161 or restrictor units accordingly. This may permit a biomass of fish, or a desired number of fish, to be contained within the second enclosure that is the same as the capacity of a vessel for removing the fish from the second enclosure.

In some examples, a combination of counting, and estimating the average biomass or weight of each fish passing by the sensor arrangement 1169 may be used to calculate the biomass in an enclosure, which may be a quicker or computationally less demanding method of calculating the biomass. In a further example, the weight of each fish may be registered with a view to providing a statistical representation of the size of each fish that is being sensed by the sensor arrangement 1169. In the case that too many fish that are being sensed by the sensor arrangement 1169 are of an undesirable size and/or weight (e.g. are too small) then the restrictor unit 1161 may be configured to prevent further access of fish into an enclosure, or the operation of the lure arrangement 1145 may be changed in order to try to encourage movement of fish of a desired size/weight into the desired enclosure. In cases where the sensor arrangement 1169 is capable of monitoring the health condition of a fish (e.g. where the sensor arrangement comprises a camera and health identification criteria), then the sensor arrangement 1169 may be used to ensure that only fish of a superior health class are permitted entry into an enclosure (e.g. the second enclosure 1140).Figure 62 shows a top view on the fish farm 1100 of Figures 58-60, the fish farm 1100 comprises a number of enclosures, in this example a first enclosure 1130, a third, fourth and fifth enclosure 1136,1137,1138 and a second enclosure 1140 located above the other enclosures 1130,1136,1137,1138. The respective enclosures are connected to the second enclosure via the access arrangement 1150 and the restrictor arrangement 1160 comprising four access units 1151-1154 each with a respective restrictor units (not shown). Also shown are air pocket structures 1170a-d, which may be integrated into the access units 1151-1154, as illustrated. The air pocket structures 1170a-d and the access arrangement 1150 and restrictor arrangement 1160 may be connected to the floating structure 1001,1002,1003. As illustrated, the second enclosure 1140 is located towards the centre of the fish farm 1100, which may assist to protect fish in the second enclosure 1140 from predators, or harsh sea conditions, and ensure that there can be access to the second enclosure 1140 from each of the first, third, fourth and fifth enclosures 1130, 1136, 1137, 1138. It should be noted that, although the second enclosure 1140 is illustrated as a single enclosure, it may be possible to have multiple sub-enclosures in place of one single second enclosure 1140, or have the second enclosure 1140 be formed of multiple parts where each part is an individual enclosure. The parts of the second enclosure 1140 may be located above the first, third, fourth and fifth enclosures 1136, 1137, 1138. In this case, there may be access arrangements positioned between each of the parts comprising the second enclosure 1140, to enable a fish to move between each of the parts of the second enclosure 1140 when necessary.

Figure 63 shows a side view of the fish farm 1100 and in which the fish are being crowded in the second enclosure 1140, which may be in addition to the method as previously described. When a desired number of fish has moved into the second enclosure 1140, the access arrangement 1150 and the restrictor arrangement 1160 may be used to restrict at least some fish from moving back to the first and third enclosure 1130,1132, for example restrict the fish based on their size, as previously described. The second enclosure 1140 may comprise a volume restriction device 1180 for selectively reducing the volume of space available to a fish therein, thereby crowding the fish in the second enclosure 1140 and facilitating extraction therefrom.

Figures 64-70 show an example of a volume restriction device 1180 and component parts thereof which may be installed in the second enclosure 1140. The volume restriction device 1180 in this example is a sliding bulkhead 1182. The second enclosure 1140 comprises a first engagement profile 1184, in this example comprising an elongate engagement member, and the sliding bulkhead 1182 being installed in the second enclosure 1140 comprises a receiving profile 1185 forming the counterpart to the engagement profile 1184, the receiving profile 1185 being in the form of a recess in the bulkhead 1182. The profiles 1184, 1185 are configured to fit together and enable a sliding movement of the sliding bulkhead 1182 through the second enclosure 1140. The sliding bulkhead 1182 may comprise a net material. In some examples, the volume restriction device 1180 may comprise a net or a wall, may be rigid or flexible, and may be permeable to water, while restricting movement of a fish. In some examples, the volume restriction device may be installed in any or all of the enclosures, e.g. the first, second or third enclosure 1130,1132,1140. The first profile 1184 may comprise multiple elongate members arranged in (e.g. along a wall of) the second enclosure 1141 forming a rail for the second profile 1185 to slide along as shown for example in Figure 65. The engagement profile 1184 may comprise a male connector part being connected to and extending from the wall of the second enclosure 1141 being interlockable with a female connector part of the receiving profile 1185 as is shown in Figures 66-68. In other examples, the engagement profile 1184 may be the female profile, while the receiving profile 1185 is the male profile.

Figure 69 shows the volume restriction device 1180 from a side perspective with a wall of the second enclosure 1141 shown. The volume restriction device 1180, herein the sliding bulkhead 1182, may be connected to the wall of the second enclosure 1141 by multiple interlocking profiles 1184,1185 as is illustrated. Preferably, the receiving profile 1185 is large enough compared to the size of a single member of the engagement profile 1184 so that it cannot disengage or fall off the guiding engagement profile 1184 as shown in Figure 70. The sliding bulkhead may have only small openings towards the walls of the second enclosure 1141 to prevent fish from passing through the openings and moving to the other side of the sliding bulkhead 1182. In some examples, the sliding bulkhead 1182 may comprise brushes installed along an edge thereof, at the interface between the bulkhead 1182 and the second enclosure, to close any gaps between the bulkhead 1182 and the walls of the second enclosure 1140, thereby assisting to prevent a fish entering the gap between the bulkhead 1182 and the second enclosure 1140. Although not illustrated, lines may be attached to the sliding bulkhead 1182 to facilitate movement of the sliding bulkhead. The lines may be connected to winches, which may be located on the floating structure 1104, for example. Other means of movement may also be possible, such has having a rack and pinion engagement between the sliding bulkhead and the enclosure, using hydraulic cylinders or a worm gear to move the bulkhead.

In cases where the sliding bulkhead is not in use, or is not needed to crowd the fish, the sliding bulkhead may be positioned within the second enclosure 1140 in order to form a partition in the second enclosure 1140, thereby effectively separating it into two sub-enclosures. The bulkhead may be installed in this position as a temporary measure, or over a longer period of time.

In other cases, the sliding bulkhead may be able to be temporarily installed in an enclosure, such as the second enclosure 1140. For example, where it is known that fish are to be crowded in the second enclosure (e.g. because fish are required to be moved from the second enclosure 1140) then the sliding bulkhead may be temporarily installed in the second enclosure 1140. This has the further advantage that the sliding bulkhead may be uninstalled for repairs or cleaning more easily.

Figures 71-73 show another application of the fish farm 1100 according to the invention. In Figure 71 all fish in the fish farm 1100 are located inside the first enclosure 1130. However, the first enclosure 1130 may require cleaning, repair/replacement of parts of an enclosure, or for another reason the fish might need to be moved to the third enclosure 1132. The fish may be lured from the first enclosure 1130 to the second enclosure 1140 by opening the access unit 1151 and restrictor unit 1161 and activating the luring unit 1145b as shown in Figure 72. When the desired number of fish are inside the second enclosure 1140 (which may be all or some of the fish), the access unit 1151 and restrictor unit 1161 are configured to prevent access between the first and second enclosure 1130,1140. The access unit 1152 and restrictor unit 1162 are opened to enable the fish to swim into the third enclosure 1132. The luring unit 1145b of the second enclosure is deactivated and the luring unit 1145c inside the third enclosure 1132 is activated to lure the fish thereto. Figure 73 shows all the fish having arrived at the third enclosure 1132. The access unit 1152 and restrictor unit 1162 may now be closed to keep the fish in the third enclosure 1132. It should be noted that, while the luring unit 1145b is illustrated as being located on the side wall of each enclosure in Figures 71 to 73, it may alternatively be located in any other appropriate location, such as on the floating structure 1104.

Figures 74 and 75 show different options for extracting the fish from the fish farm 1100 once a desired number of fish has been moved into the second enclosure 1140. The second enclosure 1140 is then able to be separated from the other enclosures 1130,1132 by closing the access arrangement 1150 and the restrictor arrangement 1160 and decoupling the second enclosure 1140 from the remainder of the fish farm. In this example, the second enclosure 1140 may be coupled to the fish farm 1100 by a releasable fastening arrangement such as ties or releasable locks. Then the fish may be extracted from the fish farm by releasing the connection of the second enclosure 1140 to the fish farm 1100 and removing the second enclosure 1140, e.g. by transporting the second enclosure to a nearby vessel. The net of the second enclosure 1140 may be installed after extracting the fish therefrom or another net may replace the removed one, forming another second enclosure 1140 at the fish farm 1100 to enable further operation according to the disclosed methods. In another case the fish may be extracted by a suction pipe or hose 1187, a suction device, an ROV, a robotic fishing arm or the like as shown in Figure 75, leading directly to a storage container on a vessel. In this example, the suction hose 1187 is illustrated as being part of the fish farm 1100, however in other examples the suction hose 1187 may be provided on a vessel. Fish may be transported to the vessel (e.g. via the hose) and removed from the fish farm 1100.

Figures 76 and 77 show methods of crowding the fish prior to extracting the fish from the fish farm 1100. In operation of the fish farm, the enclosures 1130,1132,1140 are preferably below the water surface which may reduce the impact of waves, predators and parasites such as sea lice on the fish population. The enclosures 1130,1132,1140 may for example be five meters or more below the water surface. The enclosures 1130,1132,1140 may be suspended from the floating structure or the floating structure may be itself below the water surface as shown in the illustrated examples. The floating structure, the enclosures 1130,1132,1140 or both may comprise means to selectively alter the buoyancy, enabling to move any of them to the water surface, e.g. for crowding the fish, facilitating construction or facilitating maintenance and cleaning.

In Figure 76 the access units 1151,1052 and restrictor units 1161,1162 comprise extendible or flexible connections between the access ports 1155,1156 at the respective compartments 1130,1132,1140 as introduced in Figures 61a-c. Utilizing the flexible connections, the second enclosure 1140 may be moved towards the water surface, e.g. by lifting the second enclosure 1140 with a hoist or other appropriate lifting device. Upon reaching the water surface, the fish are then able to be crowded between the water surface and the lower end of the second enclosure 1140 as illustrated in Figure 76.

Figure 77 shows an example, wherein the whole fish farm 1100 is moved towards the water surface by changing its buoyancy, e.g. utilizing pumps to pump ballast water out of the floating structure. Consequently, the second enclosure 1140 is close to the water surface and similar to Figure 76 the fish will crowd between the water surface and the lower end of the second enclosure 1140.

As seen in some examples, the fish farm of this disclosure is not limited to a single or two enclosures 1130,1132,1140, but the person skilled in the art will understand to apply the inventive principle to fish farms of various sizes, structures and net arrangements.

Figure 78 illustrates an additional example of a fish farm 1200, or part thereof. In this example, the fish farm 1200 comprises a first enclosure 1230 and a second enclosure 1240 in common with previous disclosures. In contrast with the previous examples, here the entire of the first and second enclosures 1230, 1240 are contained entirely beneath the waterline 1290, both being suspended by a floating structure 1204, which in this example is in the form of a plurality of floating buoys connected to the first and second enclosures 1230, 1240 via mooring lines 1258.

As in previous examples, the first and second enclosures 1230, 1240 may comprise nets, for example nets supported by frames, or may comprise panel members that are affixed together to form the first and second enclosures 1230, 1240, and which may be permeable to water. As in previous examples, the second enclosure 1240 is located above the first enclosure 1230, with the second enclosure 1240 also being smaller than the first enclosure 1230 in this example. Again, in common with previous examples there is an access arrangement 1250, which may comprise a restrictor arrangement, and selectively enable fish to move from the first to the second enclosure 1230, 1240, and vice versa if desired. Here, the first enclosure 1230 is directly connected to the second enclosure 1240 directly, and the two are separated by a top net 1206. Here, there is a lure arrangement 1245a in the first enclosure and a lure arrangement in the second enclosure 1245b which may be used to attract or repel a fish to/from each enclosure 1230, 1240.

Although not illustrated in Figure 78, in this example the fish farm 1200 may comprise a floating collar, which may be positioned at the top of the second enclosure 1240, or at the top of the structure comprising the enclosures in the case that the second enclosure is not positioned at the top of the enclosure structure. The floating collar may be able to be ballasted and de-ballasted, which may be useful if there is a requirement to bring the enclosures 1230, 1240 to the waterline 1290 (for example for removing the second enclosure 1240), or to lower the enclosures 1230, 1240 further below the waterline 1290, for example to provide additional protection against sea lice, waves, surface predators, etc..

As in previous examples, the first and second enclosures 1230, 1240 may comprise vertically oriented nets or permeable panel structures to divide the first and second enclosures 1230, 1240 into sub-enclosures.

The described fish farm 1200 has a much simpler floating structure 1204 as compared to other fish farms. As such, this fish farm 1200 may be cheaper and quicker to construct and maintain than a fish farm 1200 having a more complex structure 1204.

The same fish farm 1200 is illustrated in Figure 79, however in this example rather than being suspended from a floating structure 1204 on the waterline 1290. Instead, in this example the enclosures 1230, 1240 are suspended from below, for example from the seabed, on a cable 1292. The cable 1292 may be connected to a winch which may enable the fish farm 1200 to be raised and lowered in the surrounding fluid. As in the previous example although also not illustrated, a floating collar may be positioned at the top of the second enclosure 1240 (e.g. at the top surface) or at the top of the enclosure structure in the case that the second enclosure 1240 is not located at the top of the structure. In Figure 80 is illustrated a further example of a fish farm 1300. In this example there is a first and a second enclosure 1330, 1340, with the second enclosure 1340 being located above the first enclosure 1330, as in previous examples. Also similar to previous examples, an access arrangement 1350 is positioned between the first and second enclosure 1330, 1340, with the first enclosure being directly connected to the second enclosure. In this example, the lure arrangement is in the form of a lure 1345a in the first enclosure 1330 and a lure 1345b in the second enclosure 1340.

Here, one of the first or the second enclosure 1330, 1340 is connected to a buoyancy structure 1304 (illustrated the second enclosure 1340 is connected) which floats on the water surface 1390. As in previous examples, a top net 1306 separates the first enclosure 1330 from the second enclosure 1340. In this example the top net 1306 may be moveable, so as to vary the volume of space available in the first and second enclosures 1330, 1340. This may be useful to facilitate crowding of fish in either enclosure 1330, 1340, and may also enable the fish to be kept deeper in water if necessary, which may assist in avoiding sea lice or adverse weather/wave conditions. The top net 1306 may be connected to a frame, which may assist to hold the top net 1306 in a rigid configuration. The top net 1306 may then be suspended from the buoyancy structure 1304 by wires, which may be connected to a hoist arrangement for raising and lowering the top net 1306. Alternatively, the top net 1306 may comprise a rack and pinion style engagement with the first and second enclosures 1330, 1340, which may enable movement of the top net 1306 relative thereto. In some examples, the top net may comprise a small motorised arrangement or hydraulic arrangement that may enable a user to move the top net 1306 relative to the first and second enclosures 1330, 1340.

In some examples, rather than raising/lowering the top net 1306, the entire enclosure structure may be raised and lowered 1330, 1340. As such, there may be a section of loose net (e.g. net that is not supported by a frame) along the length of the enclosure structure (e.g. adjacent the floating structure 1304) that may be able to be expanded or contracted as needed. In this example, winches may be provided on the buoyancy structure 1304 and cables may extend along the length of the enclosure structure in order to enable raising and lowering thereof.

Some examples and aspects will now be described in the following numbered, non-limiting, J-clauses:
CLAUSE J1. A fish farm 1100 comprising:
   a first enclosure 1130,
   a second enclosure 1140;
   the first enclosure 1130 being connected to the second enclosure 1140 by an access arrangement 1150 for selectively permitting movement of a fish between the first enclosure 1130 and the second enclosure 1140; and
   the first enclosure 1130 and the access arrangement 1150 being positioned within the fish farm 1100 such that both the first enclosure 1130 and the access arrangement 1150 are fully submergible when positioned in a body of water.
CLAUSE J2. The fish farm 1100 according to clause J1, comprising a restrictor arrangement 1160 in cooperation with the access arrangement 1150 for selectively permitting access between the first and second enclosures 1130,1140.
CLAUSE J3. The fish farm 1100 according to clause J2, wherein the restrictor arrangement 1160 is located in the access arrangement 1150.
CLAUSE J4. The fish farm 1100 according to clause J2 or J3, wherein the restrictor arrangement 1160 comprises a plurality of rigid bars with spaces therebetween for permitting a fish to pass therethrough.
CLAUSE J5. The fish farm 1100 according to any of clauses J2 to J4, wherein the restrictor arrangement 1160 comprises a first and a second set of rigid bars 1164,1165, each set having spaces therebetween for permitting a fish to pass therethrough, the first set of rigid bars 1164 being slidably moveable relative to the second set of rigid bars 1165 between an open position, in which the spaces between the rigid bars of the first and second set of rigid bars 1164,1165 are aligned, and a closed position, in which the rigid bars of the first set of rigid bars 1164 are aligned with the spaces of the second set of rigid bars 1165, thereby restricting passage of a fish therethrough.
CLAUSE J6. The fish farm 1100 of clause J5, wherein the first set of rigid bars 1164 may be positioned relative to the second set of rigid bars 1165 such that the bars of the first set of rigid bars 1164 partially overlap with the spaces of the second set of rigid bars 1165, thereby reducing the space available for passage of a fish therethrough.
CLAUSE J7. The fish farm 1100 according to any of clauses J1 to J6, comprising a sensor arrangement 1169 comprising a counter for counting the number of fish passing through the access arrangement 1150.
CLAUSE J8. The fish farm according to any of clauses J1 to J7, comprising a lure arrangement 1145 for motivating movement of a fish from the first enclosure 1130 to the second enclosure 1140.
CLAUSE J9. The fish farm 1100 according to clause J8, wherein the lure arrangement comprises at least one of: a supply of fish feed, an air pocket, a light, speaker/sound transmitter and a fluid propeller.
CLAUSE J10. The fish farm 1100 according to clause J8 or J9, wherein the lure arrangement is located in each enclosure 1130,1132,1140 of the fish farm 1100.
CLAUSE J11. The fish farm 1100 according to any of clauses J9 to J11, wherein the lure arrangement is able to be selectively activated within an enclosure 1130,1132,1140 of the fish farm 1100.
CLAUSE J12. The fish farm 1100 according to any of clauses J1 to J11, wherein at least one of the first and second enclosures 1130,1140 comprises a volume restriction device 1180 for reducing the volume of space available to a fish therein.
CLAUSE J13. The fish farm 1100 according to any of clauses J1 to J12, wherein both the first and second enclosures 1130, 1140 are contained within an outer enclosure 1111.
CLAUSE J14. A method for managing fish in a fish farm 1100, comprising:
   providing a first enclosure 1130 and a second enclosure 1140 the first enclosure 1130 being connected to the second enclosure 1140 by an access arrangement 1150 for selectively permitting movement of a fish between the first enclosure 1130 and the second enclosure 1140;
   housing a fish in the first enclosure 1130;
   permitting a fish in the first enclosure 1130 access to the second enclosure 1140 by positioning the first enclosure 1130 and the access arrangement 1150 such that both are fully submerged when positioned in a body of water.
CLAUSE J15. The method of clause J14, comprising using the lure arrangement to motivate a fish to move from the first enclosure 1140 to the second enclosure 1132.

Figures 81 to 84 will now be considered in the following paragraphs.

Recent years have seen a considerable growth in the fish farming industry in various countries, and it is projected that fish farming will continue to play a key role in the provision of food in the future. A continual focus on safety, fish welfare and the environmental impacts of fish farming, however, drives a demand for improved methods and solutions for fish farming. Various such improvements have been suggested over the recent years.

For conventional fish farming, there exists several types of fish pens, but the most common technology for salmon farming is to use a floating flexible collar with a suspended net. The fish pens are often moored in a grid mooring system. A nearby feed barge may be used for providing the required support systems for the fish pens.

Due to the continuous increasing demand for sea food and the limited number of sheltered locations suitable for fish farming, there is a need to develop new solutions that can, for example, be used outside these sheltered areas, where environmental influence may be more severe, or which provide advantages in relation to production efficiency, fish welfare, or other parameters.

The spread of illnesses, infections or parasites may be harmful not only to the fish in a fish farm, but also to the humans who are consuming contaminated fish. Therefore, often the examination of dead fish, so called mort, is a regulatory requirement. Offering possibilities to examine the dead fish or even being able to examine living fish is of great advantage for a fish farm, especially when the process may be carried out remotely, partly automatically or even fully automatically. This disclosure aims at providing an apparatus for offering stated advantages.

Referring to Figure 81, a fish farm 2100 comprises a frame, which preferably comprises at least one column 2101, at least one pontoon 2102 and at least one truss structure 2103. Additionally, the frame may comprise corner elements 2104. The structure of the frame is not limiting this disclosure and as fish farms 2100 are widely known, the person skilled in the art may pick a design for a fish farm 2100 he deems suitable for his needs.

The fish farm 2100 is located in a body of water having a water level 2111. Preferably, the floating fish farm 2100 is located on the sea, more preferably, the fish farm 2100 is located offshore.

The fish farm 2100 comprises a fish enclosure 2105. The fish farm 2100 comprises a fish examination system, which comprises a fish retrieval arrangement 2004. The fish retrieval arrangement 2004 is attached to the fish enclosure 2105. The fish enclosure 2105 typically comprises at least one net, preferably with a conical section (e.g. a net cone) at the bottom as shown in Figure 81. The fish enclosure 2105 may be a fish cage to keep the fish therein. The fish retrieval arrangement 2004 comprises a fish collection unit 2001 to collect fish from the fish enclosure 2105 and fish transport means 2002, 2003 to transport the fish from the collection unit 2001 to a buffer arrangement 2010, which is located in an examination room 2099. Preferably the examination room 2099 is located above water level 2111. The examination room 2099 may comprise a single or multiple rooms and may be on the fish farm 2100, on land, on another vessel or distributed amongst any of these if it comprises multiple rooms.

The fish collection unit 2001 is preferably placed at the lowest point in the net structure as dead fish and sedated/stunned fish typically tend to sink and therefore will naturally move towards that point, however it may be placed at any point deemed to be useful by the person skilled in the art. The fish collection unit 2001 may have any shape suitable for leading fish into the fish collection unit 2001, e.g. a hole to let fish pass through it or funnel-shaped, the fish collection unit 2001 then resembling a hopper. The fish collection unit 2001 may be placed inside the bottom of the net cone as shown in Figure 81. Alternatively, the fish collection unit 2001 may be integrated into the net, e.g. with an opening in the net, for example the fish collection unit 2001 as shown in Figure 82. In some examples, a double net system may be used. If a double net system is used, the fish collection unit 2001 may preferably be arranged at the inner net, the outer net functioning as an additional escape prevention mechanism in case of damage to the fish collection unit 2001 or the inner net. As the fish collection unit 2001 typically has some weight to maintain its position in the fish enclosure 2105 and to prevent damage to the fish enclosure 2105 by shearing forces, the fish enclosure 2105 is preferably reinforced in the vicinity of the fish collection unit 2001.

The fish transport means 2002, 2003 may comprise a flexible hose 2002, a rigid piping 2003 or any combination of the two. Preferably, the rigid piping 2003 is used where the fish transport means 2002,2003 may be attached to the fish farm 2100 and the flexible hose 2002 is used to connect to rigid piping 2003 to the fish collection unit 2001 to preserve the flexibility of the fish enclosure 2105. Fish transport means 2002, 2003 are widely known and typically use a water flow through a hose or pipe to transport the fish. The water flow may be created by e.g. pumps, ejectors, vacuum chambers or gas lift systems. The fish transport means 2002, 2003 may be arranged inside the fish enclosure 2105 or outside of the fish enclosure 2105 or a combination of both as shown in Figures 81 and 82. Before the fish reaches the buffer arrangement 2010, the fish may be separated from the transport medium, e.g. by using a dewatering unit 2005 as shown in Figures 83 and 84. The dewatering unit 2005 may be in the form of a platform having an inclined surface relative to the horizontal with openings therein to allow water to pass through the surface of the platform. In such examples, the openings are too small to permit passage of a fish therethrough, and as such said fish moves (e.g. slides or is moved/propelled) along the surface of the dewatering unit 2005. The transport medium (herein water) may then be drained from the dewatering unit 2005 and reused or discharged, e.g. discharged back to sea in case of the transport medium being water.

Other types of fish retrieval arrangements 2004 may also be used, e.g. picking up by a remotely operated vehicle (ROV), actuated brushes, elevator systems or the like. The person skilled in the art is expected to be able to select a fish retrieval arrangement 2004 compatible with the structure of the fish farm 2100 and suitable for retrieving the desired amount of fish from the fish enclosure 2105 and caring for the health status of the fish. In cases where the fish being collected are already deceased, or are to be euthanized, the fish retrieval arrangement 2004 may be required to handle the fish such that a subsequent biopsy or examination is able to be carried out on the fish. As such, the requirements of this fish retrieval arrangement 2004 may differ from another system, for example one in which the fish are intended to be retrieved and transported live from one location to another.

The fish retrieval arrangement 2004 may also consist of several sub-systems of these types.

The fish are transported to the buffer arrangement 2010 by the fish retrieval arrangement 2004 as shown in Figure 84. Optionally, the dewatering unit 2005 separates the fish and the transport medium, which is herein water. As the fish retrieval arrangement 2004 may supply the buffer arrangement 2010 with fish in bursts or batches, the buffer arrangement 2010 is designed to buffer, i.e. store the fish for a short amount of time, until the fish will be picked up one after another by a transport arrangement 2020 for further usage.

The transport arrangement 2020 transports each fish individually from the buffer arrangement 2010 and towards an exit port 2080. The exit port may be or comprise an exit station, such as a container or further conveyor belt. In some examples, the dewatering unit 2005 and optionally the buffer arrangement 2010 may be positioned relatively lower than the rest of the transport arrangement 2020, or at least lower than some parts of the transport arrangement 2020, which may facilitate the draining and returning of water back to the sea. In some examples, the dewatering unit 2005 is arranged slightly above water level to reduce the distance the water and fish have to be moved upwards and to facilitate draining and returning of the water back to the sea. The transport arrangement 2020 may comprise a grabber, conveyor, lifting basket, or the like to select a fish from the buffer arrangement 2010 and move that fish from to the transport arrangement 2020. Having grabber, conveyor, lifting basket, or the like that is able to grab one single fish and move said fish to the transport arrangement 2020 may assist to reduce the likelihood of the transport arrangement 2020 being blocked as a result of multiple fish being placed thereon. However, in some examples, an arrangement may exist (e.g. a grabber, conveyor, basket, etc.) that is able to select and move multiple fish, should the user desire this or should the fish examination system be configured for receiving and processing multiple fish simultaneously. The fish examination system comprises at least one examination station 2030,2040,2050, the transport arrangement 2020 being configured to transport a fish or some fish to at least one of the at least one examination stations 2030,2040,2050.

Alternatively, the transport arrangement 2020 may transport the fish in batches, transporting as many fish as may be suitable for handling by the at least one examination stations 2030,2040,2050. Whether one or several fish are transported at one time to the at least one examination station 2030, 2040, 2050 may be selected by the user.

Preferably, the transport arrangement 2020 is configured to transport the fish to each of the at least one examination stations 2030, 2040, 2050. The at least one examination station 2030,2040,2050 may each have at least one substation to conduct related examinations and/or tasks and the transport arrangement 2020 may be configured to transport the fish to any of these. The transport arrangement 2020 may use a metering means 2021, e.g. a hatch, an opening, a revolving door, a robotic arm, grabber, conveyor, lifting basket or the like, to transport the fish one after another, or in batches with a controllable number of fish, out of the buffer arrangement 2010.

The transport arrangement 2020 may transport the fish passively, e.g. using gravity, water slides or the like in combination with opening and closing sluices, or actively by a controlled conveyor system 2022 or by a combination of both. The controlled conveyor system 2022 may comprise e.g. a belt conveyor, a roller conveyor, horizontal displacement actuators, vertical lifting actuators, robotic arms, etc.

The fish may be transported directly by/on the conveyor system 2022 or in an object such as a box, a bag, a crate, a cage or the like.

The transport arrangement 2020 may comprise means to rotate/flip the fish or its transport object so that all sides of the fish can be examined. A passive system may flip the fish while it is moving by using ramps or the like, while an active system may actively rotate the fish, e.g. using flipping surfaces or grabbing means. Alternatively or additionally, the at least one examination stations 2030, 2040, 2050 may comprise means to rotate the fish or its transport object.

The transport arrangement 2020 may be split in multiple parallel paths or may split into or may merge multiple parallel paths to improve the capacity of the fish examination system. For example, some stations may take longer to carry out their tasks than others, herein multiple of the slower stations may be deployed, with the transport arrangement 2020 delivering the fish to any of the multiple slower stations which is currently not occupied to circumvent the bottleneck. Before or after the slower stations the paths of the transport arrangement 2020 may split or merge to adjust to the number of possible paths to the number of next stations. Or the transport arrangement 2020 may have various routes for fish, for example different routes for fish having different examination results. Some fish may be sent to the exit port 2080 directly, whereas others may have to undergo further and/or deeper examinations. As such, there may exist different paths to enable the fish to be transported accordingly.

The transport arrangement 2020 and the buffer arrangement 2010 are considered part of a fish providing arrangement, the fish providing arrangement providing the fish to the stations of the fish examination system, e.g. the examination stations 2030,2040,2050, the exit port 2080 or a storage system as will be introduced in more detail below. In some examples, the fish providing arrangement may comprise either of the buffer arrangement 2010 and the transport arrangement 2020, e.g. there may be only one examination station 2030,2040,2050 and the buffer arrangement 2010 directly provides fish to the one examination station 2030,2040,2050 or the fish is transported from the fish retrieval arrangement 2004 to the at least one examination station 2030,2040,2050 without buffering the fish. In some examples, the fish retrieval arrangement 2004 may comprise a designated buffering system to buffer the fish, e.g. by retrieving only one fish at a time from the fish farm 2100 with the fish transport means 2002,2003, in this case there may be no buffering unit 2010 present. In some examples, the fish retrieval arrangement 2004 may provide the fish directly to the at least one examination station 2030,2040,2050, with also no transport arrangement 2020 being present. In some examples, there may be no providing arrangement, e.g. the fish may be provided by an operator or a remotely controlled vehicle to the at least one examination station 2030,2040,2050 or the fish retrieval arrangement 2004 buffers the fish and transports the fish to the at least one examination station 2030,2040,2050.

In some examples, the fish examination system may not be connected to a fish retrieval arrangement 2004 retrieving fish from a fish farm 2100, but may receive fish by other means, e.g. the fish may be provided in containers to the fish examination system, e.g. by depleting the fish from the container into the buffer arrangement 2010, by using the transport arrangement 2020 to move the fish out of the container to the fish examination system or by directly providing the fish from the container to the examination stations 2030,2040,2050.

The fish examination system comprises at least one examination station 2030, 2040, 2050 to conduct examinations of the fish. Not all of the illustrated examination stations 2030, 2040, 2050 may be required in every case. For example, the fish examination system may be modular, and not all of the various examination stations 2030, 2040, 2050 may be required in every example. For example, one of the examination stations 2030, 2040, 2050 may be replaced by another arrangement depending on the tests that are required by the user, which may include official authorities or a fish farmer. The purpose of the at least one examination station 2030,2040,2050 may be to examine the fish and acquiring any information desired by the fish farmer, advantageously satisfying any regulatory requirements related to fish and especially mort examination. The fish may be examined in a way to identify symptoms of known diseases, damages, deformities, parasites, poisoning or the like. Alternatively or additionally, the fish may be investigated to evaluate production parameters such as e.g. size, meat colour, fat content, omega 3 content, etc. Additionally, the number of fish entering the fish examination system may be determined to be able to calculate a morbidity and/or mortality rate.

The transport arrangement 2020 transports the fish to an initial check station 2030, wherein at least one first non-invasive check is conducted. The initial check station 2030 may comprise multiple sub-stations 2031, 2032, 2034 conducting the same or advantageously different checks. The check results of each sub-station are gathered and the examination data may be stored and/or processed.

The initial check station 2030 may comprise at least one scale 2031 to weigh the fish. Additionally or alternatively, the initial check station 2030 may comprise at least one camera station 2032 comprising at least one camera 2033a,b,c to take photos of each fish. The photos may be taken from different angles using multiple cameras, a moving camera or by moving the fish. The photos may be examined manually or by computerized image processing. A grid/ruler may be integrated on the conveyor system 2022 surface or the camera to determine the length, height and/or width of the fish, and against which the fish may be photographed to provide accurate information to a user. Alternatively, the length may be determined using laser measurements, a calliper or the like. Additionally or alternatively, the initial check station 2030 may comprise means for X-ray imaging to check the bone structure, hyperspectral imaging to check contamination, 3D scanning, ultrasonic probing, IR imaging and/or electrical conductivity measurements to find deformities or anomalies. Additionally or alternatively, the initial check station 2030 may comprise motion detection means, e.g. a camera or measurements using electrical stimulation. The initial check station 2030 may take many measurements (e.g. may be programmed to take many measurements) of a single fish, which may be able to be decided by a user. The measurements taken by the initial check station 2030 may be able to be stored in a suitable location, such as digitally in a database, for reference by a user.

Fish may be equipped with systems for individual fish monitoring such as a simple ID mark attached to the fish, a transmitter inside the fish or any other tag or instrumentation of individual fish. Such tags and sensors should be identified and/or removed from the fish before the fish may be examined and/or ground and ensilaged, to read the tag/sensor, to register the tagged/instrumented examination data of the fish, to register the fish as dead if applicable, to reuse the tag/sensor and to avoid non-biological content in the ensilage. The required system to identify tags/sensors depends on the type of tags/sensors used, for example a metal detector or and RFID scanner, etc. The initial check station 2030 may comprise a tag scanner 2034, which herein is a metal detector.

Alternatively or additionally, each fish may be identified using optical recognition such as facial recognition, or recognition of some other distinguishing feature of each fish. Therefore, the fish may be monitored with cameras while inside the fish enclosure 2105 and a profile may be created and stored in a database to provide identification details for each fish. Using the cameras of the initial check station 2030 and face recognition software having access to the database of the fish profiles, the individual fish may be identified, enabling an identification of the fish without needing to tag the fish with any markers/tags.

To investigate parameters that cannot be detected from non-invasive examinations, it may be required to take biopsy samples of the fish, e.g. tissue samples, blood samples, etc. The fish examination system may be equipped with an autonomous, semi-autonomous or remotely operated sample station 2040 for collecting and storing samples. Samples should preferably be taken from dead fish only, therefore the initial check station 2030 may be configured to obtain and provide information about whether the fish is alive or dead. The samples may be extracted from all fish, randomly selected fish, a selection based on the examination results of the initial check station 2030, manual selection or a combination of any of these. Samples may be extracted and put into a sample tube 2041, the sample tube 2041 may be stored in a storage container 2042 with a suitable medium. In one example the sample tubes 2041 have an integrated cutting mechanism and require an actuator 2043, e.g. robotic arm or similar means, to be used upon the fish, such that a biopsy sample is able to be taken from a fish using the sample tube 2041 alone (e.g. without the need to provide a separate cutting tool). The storage container 2042 may be configured to be handled by a robotic device, such as a robotic arm, as is illustrated. The robotic device that is handling the storage container 2042 may have a storage compartment with multiple storage devices therein 2042, and into which a storage device or multiple storage devices 2042 may be held after use. In such examples, the robotic device may be able to take many samples from a fish in quick succession, without having to move to place a used storage device 2042 e.g. in a holder, and/or without having to retrieve a new storage device 2042. Such a robotic device may be considered to have a magazine-style compartment in which storage devices 2042 may be stored. In another embodiment, the biopsy sample may have to be cut from the fish using a cutting tool to cut the biopsy sample from the fish and collected into the sample tube 2041. The actuator 2043 may be guided using cameras or other sensors to take the sample at the desired location. The actuator 2043 may be controlled remotely by an operator, who is conducting the biopsy of the fish using the sample station 2040. Alternatively, the transport arrangement 2020 may comprise positioning means that are suitable for positioning the fish underneath the sample tube 2041 such that the actuator 2043 may be required to provide only a vertical movement of the sample tube 2041. Alternatively, the actuator 2043 may comprise means to extract samples from different angles, e.g. by comprising a robotic arm, a joint or a rotational actuator.

The fish examination system may comprise a selection station 2045, wherein each fish is considered and optionally selected for autopsy. The fish may each be considered independently and may be selected based upon user input, the examination results of the initial check station 2030, the examination results of the sample station 2040, a predetermined pattern (e.g. every second, third, fourth, fifth, or the like, fish may be selected) or randomness. The selected fish may then be moved to an autopsy station 2050, either by the transport arrangement 2020, which will split in multiple paths, or by the selection station 2045, if the selection station 2045 comprises its own actuators 2046 to move the fish to the autopsy station 2050 as shown in Figure 83. The selection station 2045 may comprise a device for moving a fish to the autopsy station 2050, which may be the actuator or actuators 2046. The actuator or actuators 2046 may be a pushing device (e.g. an extendable rod or bar) or a grabbing or lifting mechanism, which functions to physically push the fish to the autopsy station 2050. Alternatively either or both of the transport arrangement 2020 and the selection station 2045 may comprise hatches, trap-doors or other means to select individual fish, e.g. for autopsy, which may then be moved to the autopsy station 2050. Alternatively, the autopsy station 2050 may comprise means to move the fish from the transport arrangement 2020 to the autopsy station 2050.

The autopsy station 2050 may be used for more advanced sample extraction, e.g. to precisely take samples of specific organs or of specific locations. The autopsy station 2050 may be used for a general autopsy to look for internal damages, etc. Additionally, the autopsy station 2050 may be used to remove objects, for example tags and sensors from the fish.

The autopsy station 2050 may comprise at least one robotic arm 2051, which may be controlled remotely, operate autonomously or operate in a combination of both. The at least one robotic arm 2051 may be equipped with one or more permanent and/or exchangeable tool such as cutting tools as e.g. knives, water cutting tools, laser cutting tools, saws, scissors, nippers, etc., manipulation tools as e.g. spatulas, tweezers, grabbers, etc., cleaning tools as e.g. air blower, water jet or a vacuum cleaner, etc., sensor tools as e.g. light, cameras, etc. or other tools as sampling tools, tools for injection of liquids or gasses in flesh or cavities. Additionally, the autopsy station 2050 may comprise cameras and other instrumentation to provide guidance for the operator or a control system of the autopsy station.

The obtained autopsy samples or the rest of the fish may be stored for future analysis, depending on specimen and/or desired future analysis method the person skilled in the art will select a fitting storing method, e.g. freezing or cooling in a freezer or refrigerator or using a chemical solution as e.g. formalin, alcohol or a Bouin solution or drying the sample for storage. Preferably, the samples will be labelled e.g. by putting them in labelled containers or bags. More preferably, the sensors and tags possibly removed by the autopsy will also be stored and/or reused.

The fish examination system may therefore comprise a freezer 2060, which may be a container held at a freezing temperature into which the autopsy samples or the rest of the fish are then stored for future analysis. For example, when any of the examination stations 2030,2040,2050 has downtime, the freezer 2060 may store the fish until the examination stations 2030,2040,2050 are back online to proceed with the examination of the fish. The transport arrangement 2020 may comprise one or multiple actuators 2061 to move the fish to the freezer 2060. In other examples the transport arrangement 2020 may use a conveyor belt or robotic arm to move the fish into the freezer 2060. In another example, the at least one robotic arm 2051 of the autopsy station 2050 may move the fish into the freezer 2060.

After investigation by the initial check station 2030, optionally the sample station 2040 and further optionally the autopsy station 2050, the transport arrangement 2020 may transport the fish to an exit port 2080. The exit port 2080 may e.g. lead to storing means to store the fish, to further transport means to transport the fish or to a grinding and ensilaging unit. The storage means may be or comprise a freezer, which may be used to store a fish for future analysis. The exit port 2080 may comprise selection means for selectively freezing or grinding/ensilaging a fish. The selection means may be or comprise a moveable section of conveyor which may selectively place a fish into either a freezer or a grinder/ensilaging unit. Although not shown, the exit port 2080 may therefore lead to two separate locations in some examples. In other examples, only one or other of a freezer or grinding/ensilaging unit may be present. Grinding and ensilaging units are known and widely used and may for example comprise: a grinder for grinding of fish, a mixing system for mixing grinded fish with formic acid, a measurement system for measuring the pH number of the ensilage and adjust the dosing of acid with the mixing system, storage tanks for storing the ensilage wherein the storage tanks comprise agitators to stir the ensilage, further measurement systems and mixing systems for monitoring and adjusting pH number if required, a pumping system for the ensilage from the storage tanks.

The fish examination system of this example additionally comprises a control system, wherein the control system is designed to coordinate and synchronize the execution of the tasks of the other systems 2004,2010,2020 and stations 2030,2040,2045,2050 of the fish examination system. In particular, the control system may coordinate the movement of the fish, which may be carried out by the fish retrieval system 2004 and the transport arrangement 2020, and the examination and/or selection processes of the stations 2030,2040,2045,2050 in order to prevent jams. The control system may handle the start and stop of the fish examination system. The start signal may be given by a human operator, may be given by sensor readings, preferably inside the fish enclosure 2105, e.g. a camera detecting fish movement in the fish collection unit 2001, or may be based on regular or random time intervals (e.g. each day). In case of manned operation, the control system may give the human operator advice on when to start the fish examination system. To stop the fish examination system, the control system may be given a stop signal by a human operator, by sensor readings or by regular predetermined or random time intervals (e.g. 5 minutes). Preferably, the control system runs the fish examination system for a predetermined period of time after receiving the start signal and checks whether at least one fish has entered the fish examination system in the given time period. If no fish have entered the fish examination system in the predetermined time period, the control system may understand this as the stop signal, or as being equivalent to a stop signal provided by a user. If at least one fish entered the fish examination system in the predetermined time period, the control system may then continue operation for another predetermined time period, and check whether fish have entered the fish examination system during this other predetermined time period. The control system may then continue operation until such a time as no new fish enter the fish examination system in a predetermined time period. It may be possible to vary the length of the predetermined time periods, e.g. to increase the check frequency if the initial set time is fairly large, or alternatively to decrease the check frequency.

The control system may detect whether the fish examination system shall be started or stopped by sensors inside the fish collection unit 2001, e.g. cameras, motion sensors, touch sensors, etc., or may use any sensors of the other systems 2004,2010,2020 and stations 2030,2040,2045,2050 to check if a fish is currently under examination by the fish examination system. Preferably, each system and station is equipped with at least one sensor, whose sensor output is accessible by the control system, to enable the control system to determine where fish in the system are and coordinate the fish transportation and the examination and sorting processes as well as the start and stop of the fish examination system. Alternatively or additionally, the control system may take into account the storage capacity of the buffer arrangement 2010, running the fish retrieval system 2004 if there is both space in the buffer arrangement 2010 and there are fish in the fish collection unit 2001 and not running the fish retrieval system 2004 if any of these conditions is not fulfilled. The control system may then run the transport arrangement 2020 and all of the stations 2030,2040,2045,2050 until there are no more fish in the buffer arrangement 2010 and the last fish has finished examination and has exited the fish examination system through the exit port 2080 or has been stored for future investigation.

As the time it takes each of the stations 2030,2040,2045,2050 to carry out their individual tasks may vary, the control system preferably adjusts the rates at which the fish arrive at the individual stations 2030,2040,2045,2050 to prevent jams and ensure a steady flow of fish in the fish examination system. As previously mentioned, it may be possible that at least one of the stations 2030,2040,2045,2050 is duplicated or is visited multiple times per fish, with the transport arrangement 2020 connecting these in multiple possible routes for the fish between the buffer arrangement 2010 and the exit port 2080. Herein the control system may control the transport arrangement 2020 to deliver the fish to the desired station, out of the selection of the stations 2030,2040,2045,2050, preferably to a station that is currently not yet occupied if there are multiple stations of these type of station present. The control system may also increase or decrease the dosing frequency and/or the transport speed of the transport arrangement 2020 to ensure a steady flow of fish in the fish examination system.

Additionally, the control system may be designed to count the number of fish that are examined by the fish examination system. Counting the number may be important to derive a fraction of infected or dead fish or to derive a statistic for the status, e.g. healthiness, size, weight, etc., of the fish, which the control system may also be designed for. Counting may be achieved by an optical sensor, for example an optical sensor positioned at any one of the aforementioned stations 2030,2040,2045,2050.

The control system may be equipped with software to process and analyse the examination data from the initial check station 2030, e.g. with image processing means to recognize possible cause of death, injuries, defects, symptoms of known diseases, parasites like sea lice or size, age, weight or other health conditions.

The control system may autonomously analyse the examination data and decide whether/which additional test or tests should be conducted, i.e. use the transport arrangement 2020 to transport the fish to the respective examination stations 2030,2040,2050 and use said respective examination stations 2030,2040,2050 to conduct the selected additional tests. The control system may autonomously analyse the examination data and decide to store fish for later examination or to consult a human specialist for analysis. Alternatively, the control system may randomly select fish for additional tests, storage or human examination not taking into account the examination data or use a combination of analysation results and chance.

In case of manned or remote operation, the control system may provide decision support to the human operator. The control system may propose alternatives for possible cause of death to the operator based on the examination data, may give warnings in case of symptoms for diseases, injuries or defects, may give recommendations and guiding for where to store samples, e.g. in which specific slot of the storage container 2042 to store biopsy samples (e.g. tissue samples), or give recommendations on the storage of fish. As such, the control system may comprise a communication means, for example a screen, for indicating such information to a user and may comprise input means, for example a keyboard or a mouse, to receive input from the operator.

Alternatively or additionally, the control system may store the examination data, any sensor data, the data comprising the examination result and the data of its start and stop signals. The control system may process these data and create reports or statistics and may save the reports to a storage and/or visualize the reports to a human operator on a screen or communication means. The control system may save the raw data to a storage and let another system/program/human do the data analysis.

The control system may also comprise a database storage of fish sample data. The control system may compare the fish sample data with the fish examination data to be able to identify whether the fish shows signs of diseases, deformities, deficiencies or the like. The control system may use the identification of diseases, deformities, deficiencies, or the like, to guide operation of the other systems 2004,2010,2020 and stations 2030,2040,2045,2050 of the fish examination system and/or to provide a human operator with an indication of the decision of the control system. The decision of the health status of the fish may be provided to the user for information purposes, or to enable the user to confirm the health status of a fish, for example where it is desired to highlight a particular health status to a user, or where the control system lacks sufficient certainty in the decision. The control system may also comprise a list of commands for various health statuses of the fish for the other systems 2004,2010,2020 and stations 2030,2040,2045,2050 of the fish examination system to be able to drive the other systems 2004,2010,2020 and stations 2030,2040,2045,2050 of the fish examination system according to the decision on the health status of the fish.

The control system may comprise several sub-systems each designed for another single or multiple of the described tasks.

The fish retrieval arrangement 2004 of the fish examination system may be suitable for collecting alive and dead fish and therefore both alive and dead fish may be transported to the examination stations 2030,2040,2050. The examination of live fish may yield relevant results, for example results relating to the fish growth in the fish farm 2100. Live fish should not undergo biopsy (i.e. sampling), autopsy and grinding as intended for dead fish, and therefore in cases where live fish may be retrieved by the fish retrieval arrangement 2004 the control system may be configured to identify whether a fish is alive or deceased. If the fish retrieval arrangement 2004 retrieves a live fish, a suitable action may be taken based on the fact that the fish is living. For example, the fish may be freed immediately, the fish may be measured in length and weight, non-invasive examinations may be performed on the fish or the fish may be euthanized in an appropriate manner and to enable further properties to be examined. For example, the fish may be alive, but infected with a virus, bacteria and/or parasite, and further examination of said fish may be necessary.

In the case of a live fish management system (i.e. a system configured to retrieve live fish), the system may check whether each live fish is capable of surviving on its own in the open sea or if the fish is alive but carries a disease, has injuries, defects or parasites. If the fish is capable of surviving on its own in the open sea and is healthy, the fish may be released to the open sea. If the fish is healthy but may not live in the open sea (e.g. due to local wildlife protection regulations), then the fish may be sent back into the fish enclosure 2105. If the fish has any diseases, injuries, defects or parasites, the fish may be euthanized prior to further examination and/or disposal (e.g. by grinding). Alternatively, a healthy fish may be euthanized and examined to gather information on the properties of alive fish in the fish enclosure 2105. The live fish management system may be in communication with, and use the check results from, the initial check station 2030 to identify whether the fish is alive or deceased. Alternatively, the live fish management system may comprise its own detection means, e.g. cameras, motion detection, electrical conductivity etc., to determine if the fish is alive or deceased and may comprise its own processing unit for determining what should next happen to the fish. Alternatively, a human operator may receive information provided by the live fish management system and make a decision regarding what should happen to the fish based on the provided data. Live fish may also be stored in live fish holding tanks comprising a life support system (e.g. a system ensuring habitable conditions for the fish in the holding tanks, such as sufficiently oxygenated water, an acceptable temperature, etc.) to store the live fish for short periods of time to allow a human operator to then manually handle them at an appropriate time. In an alternative example, all fish retrieved by the live fish management system may be euthanized, and in such examples there may be no mechanism by which the fish are returned to the fish farm, or to the open sea. The live fish management system may be installed after the initial examination station 2030 (i.e. such that the live fish management system receives fish from the initial examination station 2030). In such examples, the live fish management system may be in communication with the initial examination station 2030 to enable usage of the initial examination data by the live fish management system. Alternatively, the live fish management system may be installed sequentially before the initial examination station 2030, and may be configured to conduct an independent test to check whether the fish is alive or deceased or, may be configured to perform a euthanization process on each fish without testing whether the fish is alive or deceased. The live fish management system may be installed at the fish retrieval arrangement 2004 to directly receive fish therefrom. In some examples, at least part of the live fish management system may be installed at the fish collection unit 2001. For example the live management system may comprise a transport means such as a suction tube for transportation of a fish directly to the live fish management system.

There are several methods of euthanizing the fish, depending on what are recommended and allowable methods in the country/region in which the fish farm 2100 is located, these recommended and allowable methods may of course change over time. The fish may be sedated/stunned prior to being euthanized, e.g. by using a chemical bath or injection, low temperature, a CO2 bath, application of a swift physical force, administration of drugs, electrocution, or the like. One or more of the methods of sedation may be used in combination, e.g. a chemical bath prior to applying a swift physical force.

After sedating/stunning the fish, the fish may be euthanized swiftly, for example by cutting gills or arteries. In other cases it may be acceptable to perform grinding of the fish and thereby killing the fish after the fish has been sufficiently sedated/stunned.

In the case of handling weakened fish, i.e. mostly weak, sick or injured fish, inside the fish enclosure 2105, the fish examination system may comprise additional means inside the fish enclosure 2105 to sedate/stun the weakened fish. These means may be a remotely operated vehicle, at least one sedation station inside the fish enclosure 2105, which is able to detect and sedate weakened fish or the like (e.g. by an camera that is able to recognise characteristics of a weakened fish and take action, such as alerting a user, or retrieving or sequestering the weakened fish by automated means). The at least one sedation station may also comprise the cameras used for individual fish facial recognition. After sedating/stunning the weakened fish, the sedated weakened fish may then sink to the bottom of the fish enclosure 2105 and for retrieval by the fish retrieval arrangement 2004 ultimately getting the treatment from the fish examination system and the live fish management system. The at least one sedation station may use injection of a chemical or drug, stunning by electrocution or application of a swift physical force or may apply a sedative in the surrounding water or through feed.

The at least one sedation station may alternatively or additionally comprise means to not only sedate but additionally or alternatively euthanize the fish, thereby also resulting in the fish sinking to the bottom of the fish enclosure 2105 and being retrieved by the fish retrieval arrangement 2004.

Should the fish be sedated but not euthanized, a live fish management system may also be installed as living fish should be treated differently to those that are deceased (for example, it may not be possible to take a biopsy or perform an internal examination of a living fish). In cases where the at least one sedation station is additionally required to euthanize the fish, then no live fish management system may be necessary.

The fish examination system may comprise a storage system to store fish after examination and/or biopsy and/or autopsy for future analysis thereof. The storage system may be used to store the whole fish. The storage system may function as a buffer system in case there is downtime of the examination stations 2030,2040,2050 and/or in the case that a main depository for fish (e.g. an ensilaging unit) is full. Euthanization of fish prior to storage may assist to provide a system that is more efficiently able to store the fish than if the fish were attempted to be stored alive. Live fish that are desired to be examined may be stored in live fish holding tanks comprising life support means. The fish may be marked or tagged before storage, such that there is traceability between stored fish, reason for storage and examination data and pictures of the stored fish. The fish may be tagged directly or the fish may be placed in a container, e.g. a plastic bag or box or a compartment, which may then be tagged. If the fish already has been tagged, the already existing tag may be used.

For long term storage of fish for future examination, a storage system configured to preserve deceased fish may be used, e.g. a deep freezer or a chemical bath such as alcohol or formalin. For short term storage of fish for future examination other methods may additionally be appropriate, e.g. an ice bath, super-chilling, a refrigerated storage or a storage tank without chilling. Such a storage system may be located below sea level in order to more easily achieve lower temperatures than may be achieved above sea level - for example because sea water may more easily be accessible for use as a coolant fluid.

Storage may be required, for example, during downtime of the examination stations 2030, 2040, 2050. Preferably, a storage tank comprises a refrigeration and ventilation system.

The storage system may be connected at various points to the transport arrangement 2020 of the fish examination system, for easy access thereof. For example, the storage system may be connected to the transport arrangement 2020 both before the initial check station 2030 and before the exit port 2080. Alternatively, the storage system may be connected after the exit port 2080. Alternatively, the storage system may be connected to the buffer arrangement 2010 enabling fish to be stored directly from the buffering unit 2010. Any appropriate connection between the storage system and the transport arrangement 2020 may be used.

The storage system may comprise a system for emptying the storage, for example an automated system for emptying the storage. The storage system may be emptied, for example, to transport the fish to another location.

The floating fish farm 2100 may comprise a cleaning and disinfection system to avoid unhealthy conditions, avoid spread of diseases and maintain a good working environment for service and inspection personnel. Cleaning and disinfection may be a manual task, may be done by an external system, or may be integrated in the fish examination system. An integrated cleaning and disinfection system may operate autonomously, e.g. based on algorithms considering the number of examined fish, the days since last cleaning, sensor readings, suspicion of contagious diseases, etc., at fixed time intervals, e.g. once a day or once a week, after each operation of the fish examination system, or based on the decision from a human operator. The cleaning and disinfection system may therefore comprise a central processing unit, configured to control e.g. the intensity and frequency of cleaning and disinfection of the fish farm 2100. The central processing unit may be capable of monitoring, for example, the time between cleans, and/or may be in contact with a network of sensors positioned on the fish farm 2100 and configured to measure the purity of water therein, or the volume of deposits of dirt, silt, detritus, or the like from the fish farm 2100. The control system may then be able to decide whether the fish farm 2100 should be cleaned or not.

Typically cleaning refers to the process of removing soils, particles and germs, while disinfecting typically refers to killing germs (e.g. bacteria and virus). The fish examination system may comprise only a cleaning system, only a disinfection system or both of them. There may be separate cleaning and disinfection systems or combinations, wherein typical cleaning methods include: rinsing, brushing degreasing, using soap, high pressure cleaning steam and air flow and typical disinfection methods include: using acid, alcohol or other chemicals e.g. hydrogen peroxide or hypochlorite, applying high temperature or ultraviolet light. If the fish examination system is formed by temperature resistant equipment, the whole examination room 2099 or all rooms belonging to the examination room 2099 of the fish examination system may be disinfected by raising the temperature, e.g. by using steam.

Preferably, cleaning and disinfection agents (if used) should be harmless or have minimal impact on the fish, on other marine life and on humans. The cleaning and disinfection system may be equipped with a system for collection of drain water, i.e. cleaning fluids, its storage and/or its discharge to sea. If chemicals are used, the drain water may be neutralized before discharge, diluted before discharge, discharged at a distance from the fish or a combination. There may also be separate systems, so that dangerous chemicals can be kept at an isolated circulation.

The fish examination system may also comprise a condition monitoring system, which will monitor the operation and function of the fish examination system, detect failures and may check whether any rooms of the examination room 2099 are free from humans before e.g. cleaning and disinfection starts. The condition monitoring system may be connected to the control system, may be part of the control system or vice versa, both may exchange any data or they may be independent systems. The condition monitoring system may comprise at least one CCTV camera at various places inside the at least one room of the examination room 2099 of the fish examination system, e.g. at the outlet of the fish retrieval arrangement 2004, at the transport arrangement 2020, at the buffer arrangement 2010, at the exit port 2080, at various drains, etc. The condition monitoring system may comprise at least one of an air temperature sensor, a temperature sensor on any of the systems 2004,2010,2020 and stations 2030,2040,2045,2050, a thermal camera to monitor the at least one room of the examination room 2099 of the fish examination system and the systems 2004,2010,2020 and stations 2030,2040,2045,2050, a vibration sensor, a humidity sensor, a pressure sensor, a gas detection sensor, a pH sensor e.g. mounted at a drain to monitor drain water, a motion detection sensor, a weighing cell to estimate the amount of fish in the system and detect clogging. The condition monitoring system may comprise motion detection means, image processing means, the manual use of CCTV or the usage of thermal cameras to detect fish falling off the fish examination system. The condition monitoring system may store surveillance data, create reports and/or statistics and may transmit its results and/or raw data to a user interface or an external data storage.

Herein a floating fish farm 2100 has been used for the depicted embodiments, however, the person skilled in the art will understand that this principle is also applicable to fish farms in a pond, lake, any artificial water compartment for fish farming or the like.

Some examples and aspects will now be described in the following numbered, non-limiting, K-clauses:
CLAUSE K1. A fish examination system for a fish farm 2100, the fish examination system comprising:
   a fish retrieval arrangement 2004 for retrieving a fish from an external location and providing the fish to the fish examination system;
   at least one examination station comprising a primary check station 2030 for conducting at least one non-invasive examination of a fish;
   an exit port 2080 for receiving a fish from the primary check station 2030;
   a control system for receiving and storing examination data from the at least one examination station.
CLAUSE K2. The fish examination system according to clause K1, wherein the at least one examination station additionally comprises a sample station 2040 for extracting a physical sample from the fish and optionally performing an internal examination of a fish.
CLAUSE K3. The fish examination system according to clause K1 or K2, wherein the fish examination system comprises a fish positioning system comprising at least one of:
   a buffer arrangement 2010 for temporary storage of a fish,
   a transport arrangement 2020 for moving a fish in the fish examination system.
CLAUSE K4. The fish examination system according to clause K3, wherein operation of the fish positioning system is conditional on the examination data stored by the control system.
CLAUSE K5. The fish examination system according to any of clauses K1 to K4, wherein the control system is configured to count the number of fish retrieved by the fish retrieval arrangement 2004.
CLAUSE K6. The fish examination system according to any of clauses K1 to K5, wherein the control system is configured to compare the examination data with a database of fish sample data.
CLAUSE K7. The fish examination system according to any of clauses K1 to K6, wherein the at least one examination station additionally comprises an autopsy station 2050 comprising a robotic autopsy device 2051 for performing an autopsy on the selected fish.
CLAUSE K8. The fish examination system according to clause K7, wherein the robotic autopsy device 2051 is a robotic arm.
CLAUSE K9. The fish examination system according to clause K7 or K8, wherein the autopsy station 2050 comprises:
   a selection station 2045, wherein each fish is considered and optionally selected for autopsy;
CLAUSE K10. The fish examination system according to any of clauses K1 to K9, wherein the exit port 2080 is or comprises a grinding and ensilaging system.
CLAUSE K1 1.The fish examination system according to any of clauses K1 to K10, wherein the fish examination system comprises a freezer 2060 or a storage arrangement to store the fish for future examination.
CLAUSE K12.The fish examination system according to any of clauses K1 to K11, wherein the sample station 2040 comprises a storage container 2042 to store extracted samples.
CLAUSE K13.The fish examination system according to any of clauses K1 to K12, wherein the fish providing system, the at least one fish examination station and the exit port 2080 are arranged in an examination room 2099.
CLAUSE K14.The fish examination system according to clause K13, wherein the examination room 2099 is located on a fish farm 2100.
CLAUSE K15.The fish examination system according to any of clauses K1 to K14, wherein the fish examination system comprises a cleaning and disinfection system.
CLAUSE K16.The fish examination system according to any of clauses K1 to K15, wherein the control system is configured to autonomously conduct the examination process of the fish examination system.
CLAUSE K17.The fish examination system according to any of clauses K1 to K16, wherein the external location is a fish farm.
CLAUSE K18.A method for examining the health status of a fish, the method comprising:
   retrieving a fish from a fish farm 2100;
   providing the retrieved fish at an examination station;
   conducting a first non-invasive examination of the fish at the examination station;
   providing the fish at an exit port;
   storing examination data received from the examination station in a control system.
CLAUSE K19. The method of clause K18, wherein the method comprises extracting a sample from the fish.
CLAUSE K20.The method of clause K18 or K19, comprising conducting the method autonomously.
CLAUSE K21.The method of any of clauses K18 to K20, comprising using data stored in the control system to assist in conducting the method autonomously.
CLAUSE K22.The method of any of clauses K18 to K21, wherein the method comprises grinding and ensilaging the fish at the exit port.
CLAUSE K23.The method of any of clauses K18 to K22, wherein the method comprises providing the retrieved fish at an examination system for conducting an autopsy of the fish. Figures 85 to 90 will now be considered in the following paragraphs.

For a variety of reasons, some fish in fish farms may become injured, diseased, or may grow otherwise malformed. So called loser fish or weakened fish may be desirably extracted from the fish farm 3100 to prevent further suffering of the fish, before they infect other fish, or before they become deceased and expose the remaining fish in the fish farm to disease (e.g. bacterial and/or fungal diseases). Some fish may be extracted for examination to determine the health status of fish, and this procedure may be performed on both healthy and unhealthy fish, for example a random selection of fish. This disclosure aims at providing an apparatus to facilitate extraction of fish from a fish farm, preferably to automatically extract faint fish from the fish farm and enable selective extraction of such fish.

Figure 85 shows a fish farm 3100 schematically illustrated in a sectional view. The fish farm 3100 comprises a frame, the frame comprising at least one pontoon structure 3102 and at least one column structure 3101. Additionally, the fish farm comprises a fish enclosure 3105 wherein at least a portion or all of the fish in the fish farm 3100 are located, stretching further to the bottom and right of the drawing and two boundary lines of which being indicated by dashed lines. The fish enclosure 3105 is located below the water surface 3111 and may comprise a lid or cover 3005 to keep the fish below the water surface 3111, the cover 3005 being indicated with dashed lines. The cover 3005 can be of a net material or any other material. The fish enclosure 3105 comprises a net structure being permeable to water, but additionally with some degree of flexibility and toughness. In some examples, the fish enclosure 3105 may be a rigid enclosure, while in others it may be a flexible enclosure or may be a combination of both. In some examples, the fish enclosure 3105 may extend above the water surface 3111. The fish enclosure 3105 may be a fish cage or net to keep the fish therein.

Some fish may need to adjust their swim bladder regularly, e.g. physostomes, and may therefore swim to accumulations of breathable air, such as air pockets. A fish may be able to detect the location of such accumulations, as the amount of oxygen in the water is higher closer to these accumulations, or because the fish may be able to see the surface of the water at the boundary with the air, particularly if there is a light located at or near the surface of the water. It is known that weakened fish may be more attracted to and may cluster at the accumulations of air, for example as these fish may feel the need for adjusting their swim bladders more often, or because these fish may benefit from the increased levels of dissolved oxygen in the water near to these air accumulations. As such, a volume of breathable air may be used as a lure, particularly a lure for weakened fish which may be more attracted to this lure than fish that are well. In some cases, the fish may habitually return to a pocket of air in the fish farm 3100, for example because they need to adjust their swim bladders regularly (e.g. every day, every week etc). Therefore, the fish may naturally move towards the air pocket, and therefore this part of the fish farm may have a predictably number of fish therein, which may facilitate extraction of the fish in this location. Installing a fish extraction system 3000 which uses these insights to lure and collect the fish may facilitate the extraction and removal of weakened fish in particular, or may enable to extract any randomly selected healthy fish for examination. It is also known that some species of fish have a natural tendency to swim against a flow of water, and as such flows of water may be established within a fish farm, also with the purpose of luring a fish to a specific location.

The fish farm 3100 comprises a fish extraction system 3000 for luring fish thereto. The fish extraction system 3000 may permit a fish to enter the fish extraction system 3000, but prevent said fish from exiting the fish extraction system 3000. As such the fish extraction system 3000 may effectively trap a fish therein to enable extraction of the trapped fish. The fish extraction system 3000 comprises a separation compartment 3001 into which a fish may swim, or may be lured. The separation compartment 3001 may be selectively accessible from the fish farm 3100, and may lead to an extraction compartment 3031 where fish may be collected for later extraction. The separation compartment 3001 is intended to permit fish to gather close to the extraction compartment 3031, preferably luring a selection of fish, e.g. weakened fish, close to the extraction compartment 3031 to facilitate to lure or force the fish into the extraction compartment 3031. The fish extraction system 3000 may comprise means to extract the fish from the extraction compartment 3031, e.g. a hatch or an opening to provide access to the extraction compartment 3031, a collection and transport unit as a robotic arm, a conveyor system or the like.

The separation compartment 3001 is illustrated as extending vertically from the fish enclosure 3150 to an extraction compartment 3031 that is located above the water surface 3111. However, in other examples, the separation compartment 3001 may extend diagonally from the fish enclosure towards the water surface 3111 (e.g. at an oblique angle relative to the water surface 3111) where there may be located the extraction compartment 3031. In some examples, the separation compartment may extend in a horizontal direction from the fish enclosure 3105. The extraction compartment 3031 may be located above or below the water surface 3111. In cases where the extraction compartment 3031 is located below the water surface 3111, then there may be an access shaft or other access arrangement to enable access thereto.

The separation compartment 3001 may be flexible or, preferably, have solid walls. The separation compartment 3001 may be arranged inside the fish enclosure 3105, and in some examples may be partially defined by the fish enclosure 3105, and/or by the fish farm 3100. The separation compartment 3001 may be attached to, or form part of, the frame of the fish farm 3100, and may comprise an access port 3003 by which to access the separation compartment 3001. The access port 3003 may comprise a restriction arrangement 3004, e.g. a door, moveable panel or cover, that may be selectively moved by a user (e.g. by a remote actuation means) in order to selectively provide access to the separation compartment 3001. In this example, the restriction arrangement 3004 comprises a moveable cover. The access port 3003 may simply be an aperture or entry to a recess in a wall of the fish enclosure 3105, or it may comprise a section of pipe or tubing to connect the separation compartment 3001 to the fish enclosure 3105. The restriction arrangement 3004 may be permeable to water, and may only obstruct movement of a fish. In some other examples, the restriction arrangement 3004 may be impermeable to water, and may provide a seal at the access port 3003, permitting further flow of water therethrough when the restriction arrangement 3004 is restricting access to a fish through the access port 3003.

Although not illustrated in detail, the restriction arrangement 3004 may comprise a size-grading system. The size grading system may be the form of a plurality of bars that cover the access port 3003. The bars may be selectively spaced apart to permit only fish of a desired size to pass through, thereby preventing larger fish from swimming through. In some examples, the spacing between the bars may be adjustable by a user, thereby allowing the user to choose the size of fish that swim through the restriction arrangement 3004. In some examples, the user may initially permit fish of all sizes to swim through the restriction arrangement, before adjusting the size grading system to permit only smaller fish to return to the fish farm 3100, thereby enabling only larger fish to be held in the extraction compartment 3031 if this is desired. Where only smaller fish are desired to be held in the extraction compartment 3031, the user may simply adjust the size grading system to permit only smaller fish to pass therethrough.

In some examples, the access port 3003 may be considered to selectively isolate the separation compartment 3001 from the fish enclosure 3105, particularly in cases where the separation compartment 3001 is at least partially defined by the fish enclosure 3105. The separation compartment 3001 may be part of any column 3101 or pontoon 3102 structure and may be part of multiple of the column 3101 and pontoon 3102 structures. The compartment 3001 may also be attached to any of the column 3101 and pontoon 3102 structures. As shown in Figure 85, the separation compartment 3001 is partially located in the pontoon structure 3102 and partially located in the column structure 3101, and may be defined by either or both of these structures 3101, 3102.

In addition to the separation compartment 3001, the fish farm 3100 also comprises an extraction compartment 3031. In this example, the extraction compartment 3031 is defined by the column 3101. The extraction compartment 3031 may be useable to extract fish from the fish farm 3100, more precisely from the fish enclosure 3105. Although the column structure 3101 illustrates the compartments 3001,3031 therein as having a vertical column structure, in some other examples, the compartments 3001,3031 therein may extend diagonally through the column structure 3101. In another example the compartments 3001,3031 may be arranged to extend in a horizontal direction.

The extraction compartment 3031 is accessible via the separation compartment 3001. In the example of Figure 85, the extraction compartment 3031 and the separation compartment 3001 are connected via a connection port 3020. The connection port 3020 may comprise a fish trap so as to permit a fish to travel from the separation compartment 3001 to the extraction compartment 3031 but not in reverse, for example the connection port 3020 may permit a fish to travel in only one direction therethrough, thereby preventing a fish from re-entering the separation compartment 3001 once the fish has entered the extraction compartment 3031. The fish trap may be in the shape of a flexible sleeve, held open at one end, thereby enabling a fish to swim through easily in one direction, or a hinged door that opens only in one direction. Although not illustrated, there may be other fish traps located in the separation compartment 3001 (e.g. at the access port 3003) or in the extraction compartment 3020.

In this example, a part of the extraction compartment 3031 is located above the sea level 3111 enabling extraction and handling of the fish above sea level 3111, as well as permitting access to an air source 3011 from the extraction compartment 3031, which may function as a lure, as previously described. In some examples, the air source 3011 may be an arrangement to bubble oxygen through the water, e.g. by bubbling oxygen into the water using pipes or having pipes with openings to dissolve oxygen in the water. In some examples pure oxygen may be bubbled through the water, in other examples, multiple gases or a combination of gases and fluids may be bubbled into the water, e.g. air. It should be noted that in some other examples, the air source 3011 (e.g. the accumulation of breathable air) may be an air pocket of air that is artificially provided, or it may be naturally occurring air from the atmosphere. The extraction compartment 3031 may comprise a vent or air inlet/outlet for permitting air to enter and exit the extraction compartment 3031.

The extraction compartment 3031 may comprise an extraction port 3010 to permit a user access to the extraction compartment 3031, and which may also permit a flow of air into and out of the extraction compartment 3031. In another example, the extraction port 3010 may permit automatic extraction and collection by an extraction and collection arrangement, e.g. comprising robotic arms to take the fish out of the water and collect it in a container, allowing further treatment like examination or transportation outside the extraction compartment 3031.

The extraction compartment 3031 may comprise an air source 3011 (herein an accumulation of air) for luring. In another example, the extraction compartment 3031 may be completely filled with water and the air source 3011 may comprise means to enrich the water with oxygen, e.g. tubing pumping oxygen into the water. In another example, there may be no air source 3011, but the fish may be lured into the extraction compartment 3031 by a supply of feed. In some examples, the extraction compartment 3031 may comprise a flow of water therethrough. The flow of water through the extraction compartment 3031 may be constant, or may be selectively operable such that it is only present when fish are able to access the extraction compartment 3031. As such, the extraction compartment 3031 may comprise a fluid pump for pumping a fluid from the extraction compartment 3031 to the fish enclosure 3105, via the access port 3003. The pump may be located in the extraction compartment 3031, or may be located separate to the extraction compartment 3031, or may be fluidly connected to the extraction compartment 3031 by a fluid conduit, or the like. In addition to providing a flow of fluid, the pump may assist to provide the extraction compartment 3031 with a flow of oxygenated water (e.g. of a higher oxygenation than the water present in the extraction compartment 3031). A fish or fish may reside in the extraction compartment 3031 for a considerable length of time (e.g. several hours or days) and therefore it may be important to ensure that conditions in the extraction compartment 3031 are habitable e.g. are sufficiently supplied with oxygenated water. The pump may provide water of a desired temperature to the extraction compartment 3031 to ensure that the compartment remains habitable (e.g. within a desirable temperature range, free from ice, etc.). Water pumped into the extraction compartment 3031 may be taken from the surrounding environment, or may be taken from a supply tank of water, which may have been treated, for example).

In addition, the extraction compartment may require to be kept habitable for a fish thereon. For example the extraction compartment may comprise a supply of oxygen, e.g. in the form of oxygen being bubbled through the water, which may assist to increase the volume of dissolved oxygen in the water, and may additionally assist to remove dissolved carbon dioxide from the water, which may be harmful to the fish in large quantities. The water may also comprise a filter, such as an ammonia filter and which may be a mechanical and/or biological filter, in order to filter ammonia from the water and may comprise a UV light source which may be used to kill bacteria or other pathogens that reside therein, thereby increasing the habitability of the extraction compartment 3031. Additionally or alternatively, water that is pumped into the extraction compartment 3031 may be treated by exposure to UV light prior or oxygen to entry into the extraction compartment 3031, thereby ensuring that fewer pathogens are introduced into the extraction compartment 3031 with the provided water.

Shown in Figure 86, the fish farm 3100 comprises an air pocket structure 3034. In normal usage, the air pocket structure 3034 may comprise an air pocket 3032, and may form a part of the fish enclosure 3105. The volume in the air pocket structure 3034, which is not occupied by the air pocket 3032, is preferably filled with water. The fish in the fish enclosure 3105 may have access to the air pocket 3032 in the air pocket structure 3034, and may use the air in the air pocket 3032 to fill their swim bladders, for example. The air pocket structure 3034 comprises an entry port 3033 which in this case is defined by the fish enclosure 3105. The entry port 3033 enables fish to swim from the fish enclosure 3105 to the air pocket structure 3034 and vice versa. The entry port 3033 may be an aperture, an opening or a removed wall of the air pocket structure 3034 as shown in Figure 86. The entry port 3033 may comprise a pipe or tubing, intermediate tanks, sections with a larger cross-section or may directly connect the air pocket structure 3034 to the fish enclosure 3105 as shown in Figure 86. Additionally, the entry port 3033 may comprise apertures or other restriction device or devices to control the rate at which fish may pass through the entry port 3033. In some examples, the air pocket structure 3034 may be completely submerged and may be arranged close to the fish enclosure 3105 wherein the fish are farmed. Thereby the distance for the fish to travel to the air pocket structure 3034 is lowered and the lure potential of the air pocket structure 3034 may be increased. The submerged air pocket also means that the fish enclosure 3105 may be completely submerged in the fish farm 3000, which may permit the fish to be located further below the surface, thereby providing benefits in terms of reduced sea lice infestations, and protecting the fish from the impact of adverse weather/wave conditions. Having a submerged air pocket structure 3034 requires a compartment with sidewalls and a top wall which are non-permeable to air.

The air pocket structure 3034 is arranged such that the entry port 3033 enabling access from the air pocket structure 3034 to the fish enclosure 3105 and vice versa is in the vicinity of the access port 3003 connecting the fish enclosure 3105 to the separation compartment 3001. This may assist fish to be lured to an air pocket 3032 in the air pocket structure 3034 and then into the separation compartment 3001. Therefore, the access port 3003 may be strategically located in the fish enclosure 3105 (e.g. strategically located near to an existing air pocket) so as to encourage fish, in particular weakened fish, to swim nearby thereto.

The fish extraction system 3000 may comprise means for varying the volume of air in the air pocket structure 3034 and changing the size of the air pocket 3032. The means may be a vent or valve that may be integrated into a compartment (e.g. into the extraction compartment 3031) that is able to remove air, or force air into the air pocket structure 3034, thereby increasing the air pressure of the air pocket 3032, and permitting an expansion of the volume of the air pocket 3032. Otherwise described, these means may selectively adjust the ratio of air and water in the air pocket structure 3034 as the air pocket structure 3034 will be filled with a volume of water for every volume of air that is removed therefrom and pumping air into the air pocket structure 3034 will remove water from the air pocket structure 3034 accordingly. Rephrased, the air pocket structure 3034 comprises the air pocket 3032, whose size is adjustable by the means for varying the volume of air, and the rest of the volume of the air pocket structure 3034 is filled with water.

In some examples, the fish may be lured into the air pocket structure 3034, which in this example comprises an air pocket 3032, which is held within the fish enclosure 3105. The air may be removed from the air pocket 3032, which may encourage the fish to swim to the nearest air source or accumulation of air, which is accessible from the extraction compartment 3031, and which therefore requires the fish to swim through the separation compartment 3001 and into the extraction compartment 3031, where the fish may be extracted by a user. This may be advantageous for example in cases where the air source 3011 of the extraction compartment 3031 is located above water level 3111 and far from the fish enclosure 3105, then the fish in the fish enclosure 3105 may be more receptive towards the air pocket 3032. Luring the fish first to the air pocket 3032 in the air pocket structure 3034 whilst removing the air pocket 3032 from the air pocket structure 3034 afterwards may then encourage the fish to move towards the now-closer air source 3011 of the extraction compartment 3031, thereby facilitating movement of fish from the fish enclosure 3105 into the extraction compartment 3031.

Alternatively or additionally, some air may be left in the air pocket 3032 in the air pocket structure 3034, in order to deliberately select few fish for extraction. This may be beneficial in cases where a relatively small number of randomly selected fish are to be extracted and/or examined.

In this example, the separation compartment 3001 and the extraction compartment 3031 are directly connected such that they form one single compartment. The separation compartment 3001 is selectively accessible from the fish enclosure 3105 and the restriction arrangement 3004 may be used to selectively control the access thereto. If fish has moved inside the separation compartment 3001 and extraction compartment 3031, the restriction arrangement 3004 may be closed to restrict the movement of the fish from the extraction compartment 3031 back to the fish enclosure 3105.

Figure 87 shows another example, wherein the separation compartment 3001 is directly connected to the extraction compartment 3031 such that they form one single compartment. In this example, there is an access port 3003 connecting the separation compartment 3001 to the fish enclosure 3105. Herein, the access port 3003 connects the main body of the fish enclosure 3105 with the air pocket structure 3034 to the separation compartment 3001. In this embodiment the fish may directly swim from the air pocket structure 3034 to the separation compartment 3001 which may assist to increase the number of fish entering the separation compartment 3001 and increase the efficiency of the fish extraction system 3000 overall. As in the previous example, the access port 3003 comprises a restriction arrangement 3004 to selectively permit access therethrough. As such access to the separation compartment 3001 is via the restriction arrangement.

Shown in Figure 88, the separation compartment 3001 may comprise a plurality of access ports 3003a,b from the fish enclosure 3105. As shown in the embodiment of Figure 88, one of the plurality of access ports 3003a may connect the fish enclosure 3105 directly to the separation compartment 3031 while another of the access ports 3003b may connect the separation compartment 3001 to the air pocket structure 3034. Such a configuration may permit an increased number of fish to enter the separation compartment 3001, and may permit fish to continue to enter the separation compartment 3001, for example, in situations where the water level in the air pocket structure 3034 is too low to permit access from the access port 3003 in the air pocket structure 3034. The plurality of access ports 3003a,b each comprise a restriction arrangement 3004 to selectively permit access to the separation compartment 3001. As can also be seen in Figure 88, an access port 3003a may also be arranged on a horizontal surface. Here, the access port 3003a is oriented in a substantially horizontal orientation. The access ports 3003a,b may be arranged on a horizontal surface in a horizontally orientation, on a vertical surface in a vertical orientation or in another orientation.

Figure 89 shows the example as illustrated in Figure 87 and illustrates how a fish may be lured into the fish extraction system 3000. Here, the fish starts its journey in the fish enclosure 3105 and may swim through the entry port 3033 into the air pocket structure 3034, e.g. because it feels the need to adjust its swim bladder and is lured by the air pocket 3032. From the air pocket structure 3034 the fish may swim through the access port 3003 into the separation compartment 3001 being lured by the access port 3010 to the air source 3011. When the fish is inside the separation compartment 3001 the restriction arrangement 3004 may be used to prevent the fish from swimming back into the fish enclosure 3105 enabling extraction of the fish from the separation compartment 3001 - for example, once a desired number of fish have entered the separation compartment 3001, the cover may be selectively configured from an open configuration to a closed configuration by a user, thereby preventing the fish from swimming through the access port 3003 and into the fish enclosure 3105. Once in the separation compartment 3001, the fish may be lured into the extraction compartment 3031 (not illustrated in Figure 89) due to a supply of air therein. Once in the extraction compartment 3031, the fish may be extracted by a user. Although illustrated as a single structure, the term "compartment", i.e. "separation compartment" and "extraction compartment" may refer to the bottom and top of a structure.

Figure 90 shows another example bearing similarities to the previously described examples. In this example, there are illustrated two restriction arrangements 3004a, 3004b. One of the restriction arrangements 3004a is similar to that as previously described in that the restriction arrangement 3004a is configurable to restrict or permit access form the fish enclosure 3105 to the separation compartment 3001. A second of the restriction arrangements 3004b is located at the entry port 3033 to the air pocket structure 3031. Herein the restriction arrangement 3004b is a sliding cover movable in horizontal direction, which may be used to provide selective access to the air pocket structure 3031. In another example the restriction arrangement 3004b may be a hatch, a valve, a revolving door or any other means enabling to temporarily block the connection 3033 from the air pocket structure 3034 to the fish enclosure 3105. The restriction arrangement 3004b may be non-permeable to both water and fish or may be only non-permeable to the fish allowing water to pass, e.g. comprising holes, slits or a net. In some examples, the restriction arrangements 3004a,b may be a solid hatch or may be a hatch having holes therein to enable water permeability. In some examples the restriction arrangements 3004a,b may be or comprise a net structure with a drawstring arrangement. The net structure may comprise an opening therein that is surrounded by a drawstring, and which may be closed/tightened or opened/loosened by operation of the drawstring. Pulling the drawstring moves the net surrounding the opening closer together and prevents fish from swimming through the opening. To re-open the conduit, the net structure may comprise an actuator or the net structure may tend to open itself when there is no tension applied to the drawstring, e.g. because a water current applies a force onto the net structure. The cover may be actuated by a user, for example via a remote actuating mechanism.

In this example, the separation compartment 3001 comprises the air pocket structure 3034, and the restriction arrangement 3004b, enabling selective access to the separation compartment 3001 from the fish enclosure 3105, and enabling access to the extraction compartment 3034 via the access port 3003. It may be possible to remove the air pocket structure 3034 from the separation compartment. As explained previously, the fish may continue to swim towards the location of the air pocket structure 3034 out of habit, or because they feel safe in doing so. Finding that the air pocket has been removed, a fish may continue to seek air, which may result in the fish swimming to the nearby extraction compartment 3034.

In some examples, the restriction arrangement 3004b may provide little or no restriction to the movement of fish, and in some examples the access port 3003 may be permanently open.

Additionally, the fish extraction system 3000 may comprise shifting arrangements 3007,3037 to move the fish, shown by arrows and broken lines (i.e. broken dot-dash lines) in Figure 90. The separation compartment 3001 may comprise shifting arrangement 3007 to move the fish inside the separation compartment 3001, herein in a horizontal direction, and the extraction compartment 3031 may comprise shifting arrangement 3037 to move the fish inside the extraction compartment 3031, herein in a vertical direction. These shifting arrangements 3007,3037 may be used to move the fish in the respective compartment 3001,3031 enabling to not only rely on the fish being lured to the air source 3011 but rather enabling to move the fish from the air pocket 3032 in the air pocket structure 3034 in the separation compartment 3001 to the extraction port 3010 in the extraction compartment 3034. The shifting arrangements for moving the fish 3007,3037 may comprise separate systems or may be combined in a single system. The shifting arrangements for moving the fish 3007,3037 may move the fish into the fish traps 3020a,b.

The shifting arrangements for moving the fish 3007,3037 may move the fish by creating water currents, air flows or using water pressure or air pressure as well-known live fish transportation systems use. Alternatively or additionally, the shifting arrangements 3007,3037 for moving the fish may reduce the space in the compartments accessible to the fish, e.g. by moving a piston, a moveable wall, a panel or a net, thereby forcing the fish to swim to the remaining space. The shifting arrangements 3007,3037 for moving the fish may be permeable to water, thereby reducing the energy needed to move the shifting arrangements 3007,3037 and preventing from creating pressures in the compartments 3001,3031.

The shifting arrangements 3007, 3037 may be in the form of moveable bulkheads. The moveable bulkheads may be in the form of a frame having a net spanning the openings therein, or a solid panel comprising plastic and/or metal which may be permeable to water. The moveable bulkhead 3037 may be oriented vertically and moveable horizontally within the air pocket structure 3034 in order to crowd fish in the air pocket structure 3034 towards the access port 3003, and thereby closer to the extraction compartment 3031. Similarly, there may be a moveable bulkhead in the separation compartment 3001, which may be horizontally oriented and vertically moveable to physically move fish towards the extraction compartment 3031.

In one example, the restriction arrangement 3004b is opened, luring fish to the air pocket 3032 in the air pocket structure 3034 of the separation compartment 3001. After collecting a sufficient number of fish in the separation compartment 3001, the restriction arrangement 3004b may be closed and the restriction arrangement 3004a may be opened, enabling the fish collected in the separation compartment 3001 to swim into the extraction compartment 3031 but preventing the fish from returning into the fish enclosure 3105. The shifting arrangement 3037 may be used to move the fish into the extraction compartment 3031, e.g. by forcing the fish to swim in this direction due to a net, wall etc. pushing them towards the access port 3003. When the fish have been moved to the extraction compartment 3031, the restriction arrangement 3004a may be closed, thereby trapping the fish in the extraction compartment 3031. The shifting arrangement 3007 may be used to move the fish in the extraction compartment 3031 towards the extraction port 3010, e.g. upwards as the fish may be collected at a higher elevation. As the fish moves towards the extraction port 3010, it may pass through fish traps 3020a,b, which may have the effect of preventing movement of the fish back to the bottom of the extraction compartment 3031. The shifting arrangement 3037 may be moved back to its starting position indicated in Figure 90, e.g. retracted, and the restriction arrangement 3004b may be opened to enable another cycle of fish extraction from the fish enclosure 3105.

Alternatively or additionally, the extraction compartment 3034 may comprise means to selectively adjust the water level in the extraction compartment 3034. E.g. the extraction compartment 3034 may be hermetically sealed and a pressure may be created in the extraction compartment 3034 to adjust the water level in the extraction compartment 3034. The extraction compartment 3034 may comprise a pump or the like to adjust the water level in the extraction compartment 3034. Thereby the fish in the extraction compartment 3034 may be aggregated at the respective water level or the water level may be reduced to shift the water level close to the access port 3003 increasing the luring potential of the air source 3011 for the fish in the fish enclosure 3105.

Additionally or alternatively, the separation compartment 3001 may comprise an own air source to lure fish from the fish enclosure 3105 or an air pocket structure 3034 to the separation compartment 3001 and therefrom to the extraction compartment.

Some examples and aspects will now be described in the following numbered, non-limiting, L-clauses:
CLAUSE L1. A fish extraction system 3000 for extracting fish from a fish enclosure 3105, the fish extraction system 3000 comprising:
   a separation compartment 3001 for separating at least one fish from a farmed fish group, the farmed fish group being in a fish enclosure 3105, the separation compartment 3001 being selectively accessible from the fish enclosure 3105;
   an extraction compartment 3031 for extracting a fish therefrom, the extraction compartment 3031 being accessible from the separation compartment 3001 and comprising an extraction port 3010 accessible by a user to extract a fish therefrom;
   a restriction arrangement for restricting movement of a fish from the fish extraction compartment 3031 and to the fish enclosure 3105.
CLAUSE L2. The fish extraction system 3000 of clause L1, wherein the extraction compartment 3031 comprises a lure therein for attracting a fish thereto.
CLAUSE L3. The fish extraction system 3000 of clause L2, wherein the lure is an air source 3011.
CLAUSE L4. The fish extraction system 3000 of any of clauses L1 to L3, wherein the separation compartment 3001 is directly connected to the extraction compartment 3031 such that they form one single compartment.
CLAUSE L5. The fish extraction system 3000 of any of clauses L1 to L4, wherein the separation compartment 3001 is integrated into the fish farm 3100.
CLAUSE L6. The fish extraction system 3000 of any of clauses L1 to L5, wherein the separation compartment 3001 comprises an air pocket structure 3034 having an air pocket located therein and functions to selectively provide access to the air pocket 3032.
CLAUSE L7. The fish extraction system 3000 of clause L6, wherein access to the extraction compartment 3031 from the separation compartment 3001 is selectively controllable by a user, and access to the air pocket 3032 in the separation compartment 3001 is restricted when access to the extraction compartment 3031 is permitted.
CLAUSE L8. The fish extraction system of clause L6 or L7, wherein the air pocket structure 3034 comprises means for varying the volume of the air pocket 3032.
CLAUSE L9. The fish extraction system 3000 of any of clauses L1 to L8, wherein the restriction arrangement 3004 comprises a selectively openable cover positioned in at least one of the extraction compartment 3031 and the separation compartment 3001.
CLAUSE L10. The fish extraction system 3000 of any of clauses L1 to L9, wherein the restriction arrangement 3004 permits unidirectional movement therethrough.
CLAUSE L11. The fish extraction system 3000 of clause L10, wherein the restriction arrangement 3004 comprises a hinged cover.
CLAUSE L12. The fish extraction system 3000 of any of clauses L1 to L11, wherein the extraction compartment 3031 comprises a waterline.
CLAUSE L13. The fish extraction system 3000 of any of clauses L1 to L12, wherein at least part of the extraction compartment 3031 is located above the water level 3111 of the body of water in which the fish farm 3100 is located.
CLAUSE L14. The fish extraction system 3000 of any of clauses L1 to L13, wherein the separation compartment 3001 comprises a shifting arrangement 3037 for moving a fish from the separation compartment 3001 to the extraction compartment 3034.
CLAUSE L15. The fish extraction system 3000 of clause L14, wherein the shifting arrangement 3037 comprises a moveable wall or panel for physically moving a fish from the separation compartment 3001 to the extraction compartment 3031 by gradual reduction of the space available in the separation compartment 3001 to the fish.

Aspects of the present disclosure relate to a fish farming installation with a semi-submersible floating collar for a submersible fish pen. This installation may operate on two or more operational drafts such that the top of a net cage can be in a surface or near-surface position, or completely submerged. The top of the net cage can, for example, be submerged to a depth of 5-10 meters or more below the water surface, in order to reduce the exposure to, for example, sea lice, algae, and jellyfish and also reduce the environmental loads from ocean currents and waves or from impacts from floating objects. The installation may optionally be designed for deeper submergence to further reduce environmental loads.

The fish farming system may be designed with a favourable ratio between water line area and displacement to provide an effective construction for handling bending moments from waves and ocean currents, less movement of the floating collar during bad weather conditions. Since the effect of waves tends to be less in deeper water, less movement will be transferred from the floating collar to the net cage, which in turn reduces the chance of damage to the net cage and escape of fish.

A semi-submersible fish-farming system, such as a fish pen, according to aspects described herein may be operable between at least two different semi-submerged positions, a first position and a second position, by ballasting and de-ballasting. The system may comprise a rigid floating collar comprising a ring-shaped or polygonal lower buoyancy member, a ring-shaped or polygonal upper buoyancy member, a plurality of columns connecting the buoyancy members, a net cage suspended from the floating collar and a net roof closing off the top of the net cage, the net cage with the net roof forming an enclosure for fish.

Fig. 91a is a principle drawing showing some elements of a fish farming system according to an aspect and Fig. 91b is a cross-section of the system shown in Fig. 91a. In a preferred embodiment, the system comprises a fish pen 4001 with a floating collar 4002 comprising a lower buoyancy member 4007, an upper buoyancy member 4009 and a plurality of columns 4008 which are mounted to the lower buoyancy member 4007 and the upper buoyancy member 4009. The columns 4008 connect the lower and upper buoyancy members 4007,4009. The upper and lower buoyancy members 4007,4009 and columns 4008 are preferably made of a rigid material, such as steel. For additional stiffness, for example to restrict torsion, bending or shear, tie struts or plates may be placed between some of the columns. The upper and/or the lower buoyancy members 4007,4009 can, for example, have a circular or polygonal shape.

The lower buoyancy member 4007 is a continuous, closed pontoon encircling the central portion of the fish pen 4001 in which a net cage 4003 is suspended, the net cage 4003 forming an enclosure 4003 for the fish and the net cage 4003 being supported by the floating collar 4002. The enclosure 4003 is defined by sides 4004 and a bottom 4044, either or both of which can be flexible, such as a pliable net, or a stiff or semi-stiff construction. Further, the enclosure 4003 can have a closed roof 4005, arranged to close a top section of the enclosure 4003, thereby preventing fish from leaving the enclosure 4003 and/or preventing predators from entering the enclosure 4003. The roof 4005 may be a net, grid, or other suitable arrangement. The roof 4005 may be of the same material as the sides 4004 and/or bottom 4044. Even if phrased a "net" here, this does not preclude other types of materials used in the roof 4005, sides 4004 or bottom 4044. These elements can be separate elements or an integrated construction. The enclosure 4003 may also comprise a bottom ring 4026, which may be temporarily or permanently installed and which can be pulled towards the surface using winches and wires or other mechanical means for example for fish crowding. The bottom ring 4026 may also provide weight to keep the enclosure 4003 in a desired form (e.g. keeping the sides 4004 substantially vertical), and it may be arranged semi-stiff or stiff in order to assist keeping the shape and form of the enclosure 4003 in the case of water currents or other loads.

The bottom ring 4026 may be connected to an outer net, an inner net, or both an outer and an inner net defining the enclosure 4003, described in further detail below. In such a case, the bottom ring 4026 may be arranged to support either the outer net or the inner net, or both the outer net and the inner net.

The lower buoyancy member 4007 can, for example, have a circular, square, hexagonal or octagonal design. The cross-section of the lower buoyancy member can for instance be circular, square or have another form. The interior of the lower buoyancy member 4007 can, for example, be divided into one or more sections by means of partition walls. Further, the cross-section area and shape of the lower buoyancy member 4007 does not need to be uniform. The upper buoyancy member 4009 may have any of the above stated configurations and may also have a different design compared to the lower buoyancy member 4007. The upper buoyancy member 4009 and/or the lower buoyancy member 4007 may be arranged with dedicated space for storage, operational equipment or the like. Such space may, for example, be in one or more partitioned sections in the structure.

The cross-section of the columns 4008 can be circular, square or any other shape. Further, the columns 4008 can each be identical or have different sizes and cross-sections. The distance between the columns 4008 can be uniform or varying. The distance from a column 4008 to the centre of the fish pen 4001 can also be uniform or varying. The interior of at least some of the columns 4008 is preferably in fluid communication with the interior of the lower buoyancy member 4007. For trimming, water may be supplied or removed from the interior of the lower buoyancy member 4007 and possible also the interior of some or all the columns 4008. There may, optionally, be not multiple, but only one single column connecting the lower buoyancy member 4007 and the upper buoyancy member 4009.

The interior of one or more of the columns 4008 may be may be arranged with dedicated space for storage, operational equipment or the like. One or more of the columns 4008 can, for example, be divided into one or more sections by means of partition walls for this purpose. Such space may, for example, be in one or more partitioned sections in the structure.

To lower the fish pen 4001 to an operational or submerged position 4016, wherein the water line at the operational or submerged position 4016 is indicated, water can be pumped into the interior of the lower buoyancy member 4007 and possibly also into whole or parts of some or all of the columns 4008, until the desired draft is achieved. The interior of the upper buoyancy member 4009 and/or the columns 4008 or parts thereof can, if desirable, be closed and filled with air or a foam material that provides buoyancy when the fish pen 4001 is submerged. In this position, the roof 4005 of the enclosure 4003 can be kept at a certain depth to avoid or reduce the exposure to sea lice, jellyfish and algae. By submerging the enclosure 4003, also the environmental impact of waves and currents can be reduced, since these impacts in general are more pronounced at or near the water surface and are reduced with increasing depth. By submerging the enclosure 4003 a distance below the water surface, the movements transferred to the enclosure 4003 from the collar 4002 can also be reduced and the risk for damaging the enclosure 4003 and escape of fish be reduced, due to less movement of the floating collar 4002 and consequently less movement of the enclosure 4003.

In order to raise the fish pen to a service position 4015, wherein the water line at the service position 4015 may be as indicated in Fig. 91b, water can be pumped out of the lower buoyancy member 4007 and/or the columns 4008. The service position 4015 may be a position wherein the lower buoyancy member 4007 is at or near the water surface. In the service position 4015, the floating collar 4002 may then be floating with the lower buoyancy member 4007 on the water surface such that the roof 4005 of the enclosure 4003 can be at or above the water surface. By removing the roof 4005 (or parts thereof) of the enclosure 4003 when the floating collar 4002 is in service position 4015, access to the enclosure 4003 can be obtained for inspection, maintenance and different operations such as crowding and delousing. The upper buoyancy member 4009 can function as support for travelling cranes, winches, personnel basket to facilitate operations in enclosure 4003. All necessary tubes, hoses, cables etc. can be connected to the upper buoyancy member 4009, led down the columns 4008 to the lower buoyancy member 4007 and out into the enclosure 4003.

Consequently, there is no need to take the enclosure 4003 to surface for inspection or connection and the operation is not relying on divers/ROV.

The construction of the fish pen 4001 may be so robust and strong that it is possible to utilize a direct-coupled mooring system 4022 and it is not necessary to use a frame mooring, such as used for conventional systems with flexible plastic rings. This involves that each individual fish pen 4001 can move independent of each other, if more fish pens 4001 are placed in the same area, and the distance between each fish pen can be larger for increased safety and improved water quality.

Fish farming systems as known in the state of the art may comprise means to change the operating position of the fish farming system, especially the draught, e.g. by changing the buoyancy of the fish farming system. In some examples, the fish farming system may be installed offshore and may be subject to strong winds, waves and other harsh weather conditions. The fish farming systems are therefore in need of systems to change the buoyancy and to increase the stability of the fish farming system in harsh weather conditions. Preferably, the system should consume few energy, as an offshore fish farming system may not be connected to the grid system and may therefore have to operate with a limited amount of energy.

It is an object of the present disclosure to mitigate, alleviate or eliminate one or more of the above-identified deficiencies and disadvantages in the prior art and there is provided a variable buoyancy arrangement therefor, in line with the following description.

The soft tank may be connected to the ballast tank.

Both the ballast fluid port and the passive fluid port may be configurable to be placed in fluid communication with a fluid source to permit the fluid propulsion means to flow a fluid into and/or out of the ballast tank via the ballast fluid port, so as to change the buoyancy of the ballast tank.

A change in buoyancy of the ballast tank induces a fluid flow through the passive fluid port when the passive fluid port is selectively opened, thereby resulting in a change in buoyancy of the soft tank.

In use, having a buoyancy arrangement with both a ballast tank and a soft tank may permit a user more flexibility and control when varying the buoyancy of the buoyancy arrangement, for example the ability to control/vary the centre of gravity and the moment of inertia of the fish farm. Further, having a soft tank with a passive fluid port may permit the buoyancy of the arrangement to be varied with a reduced load requirement for the fluid propulsion means (which may be a fluid pump, for example), thereby reducing the energy requirement and the level of wear on the fluid propulsion mechanism for each loading event. By placing both the ballast fluid port and the passive fluid port in fluid communication with a fluid source, it may be possible to transfer fluid to and from the fluid source (e.g. in some examples the fluid source may rather function a fluid sink, or be capable of functioning as both a fluid source and a fluid sink).

Figure 92 shows parts of a floating fish farm 4200. The fish farm 4200 may be a fish farm having a principle design such as that shown in Figs 91a and 91b. The floating fish farm 4200 comprises at least one pontoon 4202, which may form a lower buoyancy member, and at least one column 4201 forming the frame of the floating fish farm 4200. The floating fish farm 4200 is located in a body of water 4110 having a water level 4111, preferably, the floating fish farm 4200 is located offshore.

A ballasting system in this application is to be understood as a system being capable of not only adding ballast to the structure it is attached to, but also to reduce ballast, i.e. the ballasting system is able to both increase and decrease the buoyancy of the structure to which it is attached. Increasing the buoyancy of the structure may be useful during some operations, for example maintenance and installation. Decreasing the buoyancy may have the effect of lowering the structure, such as a fish farm, in the water, thereby increasing the stability of the structure, which may be useful in cases of bad weather, for example. The person skilled in the art will understand that such a ballasting system will have an upper and a lower buoyancy limit, inter alia depending on the size of the ballasting system.

In this example, the pontoon 4202 is illustrated as being submerged below the water level 4111 in the body of water 4110. The pontoon 4202 may have a generally flat planar shape, and is suspended in the body of water 4110 in a horizontal configuration. The planar shape of the pontoon 4202 may assist to secure the stability of the floating fish farm 4200, as the planar shape may be less affected by currents or tidal/wave motion than some other shape of pontoon 4202. The pontoon 4202 may assist to secure other features of the floating fish farm 4200 thereon, such as a ballasting system, as will be later described. The pontoon 4202 may perform the function of indirectly connecting many elements of the fish farm together.

In order to permit a change in the buoyancy of the floating fish farm 4200, the floating fish farm 4200 comprises a ballasting system. The ballasting system comprises at least one ballast tank 4305, the or each of the at least one ballast tank 4305 comprising a ballast fluid port equipped with at least one fluid propulsion means (e.g. a fluid pump) to flow (e.g. pump) water into or out of the at least one ballast tank 4305 via the ballast fluid port to change the water level 4315 in the ballast tank 4305, and therefore the buoyancy thereof. The at least one ballast tank 4305 may form part of any structural element of the floating fish farm 4200, e.g. the at least one ballast tank 4305 may be located in, or defined at least partially by, the at least one column 4201 or the at least one pontoon 4202, or they may be connected or coupled thereto. In some examples, the at least one ballast tank 4305 may be externally attached to any structural element of the floating fish farm 4200, e.g. clamped, welded, bolted or the like, such as the at least one column 4201 or the at least one pontoon 4202. As illustrated in Figure 92, the at least one column 4201 of the ballasting system is oriented at right angles to the pontoon 4202 which may, in use, assist to provide a high degree of stability of the floating fish farm 4200 against tidal/wave motion.

Additionally, the floating fish farm 4200 comprises at least one soft tank 4301. By soft tank 4301 a compartment or a container for a fluid, is to be understood in this application, the compartment comprising passive means to adjust its water level 4311 as will be described in the next paragraph. In contrast thereto, a ballast tank 4305 is to be understood in this application as a compartment or container for a fluid comprising active means to adjust its water level, e.g. by fluid propulsion by a pump, a fan or a pressurized water piping comprising a valve.

The at least one soft tank 4301 comprises fluid communication means 4303. The fluid communication means 4303 refers to a passive fluid port. A passive fluid port may be one that does not comprise means for propelling fluid through the fluid port (e.g. may not comprise a fluid pump, but may comprise an opening in a wall of the at least one soft tank 4301). The fluid communication means 4303 may function to connect the water in the soft tank 4310 with the sea, or any other external location such as a lake, ocean, or any large body of water 4110. This fluid connection means 4303 between the soft tank 4301 and a surrounding body of water 4110 permits a supply of water to be provided inside or outside of the soft tank 4301, thereby facilitating adjustment of the water level 4311 of the soft tank 4301 to the water level 4111 of the surrounding body of water 4110. The soft tank 4301 may have the same water level 4311 as the water level 4111 of the body of water 4110 as long as the soft tank 4301 is not fully submerged or fully above the water level 4111 of the body of water 4110, and provided that fluid communication between the soft tank 4301 and the surrounding body of water 4110 is possible.

Although in this example, the soft tank 4301 is illustrated as being directly connected to the column 4201, or being partially defined by the column 4201, there may be some examples in which the soft tank 4301 is not directly connected to the column 4201, and instead may, for example, be indirectly connected or coupled via the pontoon 4202. Also in this example, the soft tank 4301 is illustrated as partially extending into the pontoon 4202. As such, the pontoon may comprise a recess or profile into which the soft tank 4301 may fit. Although not shown, the fish farm 4200 may comprise a ballast tank 4305 that extends partially into the pontoon 4202, and may extend into the pontoon 4202 to the same extent as the soft tank 4301, which may assist to balance and/or stabilise the fish farm 4200 in use.

In some examples, there may be multiple soft tanks 4301. Such multiple soft tanks 4301 may be independent of one another, (e.g. they may not be in fluid communication with each other, and optionally may be controlled independently as will be explained in the following paragraphs), the such multiple soft tanks 4301 may be interconnected (e.g. the multiple soft tanks 4301 may be in fluid communication with one another) such that the multiple soft tanks 4301 effectively form a larger soft tank, e.g. a soft tank may be formed by the column 4201 and another soft tank may be formed by the pontoon 4202 and these may be in fluid connection. The person skilled in the art will understand that both the at least one soft tank 4301 and the at least one ballast tank 4305 may be part of the same structural part, e.g. they may be located in, defined by and/or form part of at least one column 4201.

Although only one column 4201 with one soft tank 4301 attached thereto or integrated therein is shown in Figure 92, there may be more than one column 4201 (which may be similar or the same as the illustrated column 4201). The more than one column 4201 may be arranged symmetrically around a vertically extending axis of the pontoon 4202 (in the orientation as shown in Figure 92) or the fish farm 4001,4200. As such, the columns 4201 may assist to ensure that the pontoon remains stable in the body of water 4110. In some examples, it may be possible to alter the buoyancy of a column 4201 or more than one column 4201 selectively in order to correct an imbalance on the fish farm 4200 (e.g. a weight/loading imbalance).

The floating fish farm 4200 may comprise other stabilising equipment (e.g. weights, balancing arms, buoyancy tanks etc.) to assist in providing stability to the floating fish farm 4200 during operation. In some examples, the pontoon 4202 of the floating fish farm 4200 may comprise stabilising features or equipment, and in some examples the stabilising equipment may be integrated into the pontoon 4202.

Preferably, the fluid communication means 4303 of the soft tank 4301 comprise at least one fluid control means 4304 which may be selectively opened and closed by a user to either permit (or at least restrict) fluid communication between the soft tank 4301 and the surrounding body of water 4110 as shown in Figure 93. For example, the at least one flow port 4304 may be or comprise a valve which may be selectively opened or closed by a user to thereby open and close the fluid communication means 4303, thereby allowing or preventing, respectively, fluid flow through the fluid communication means 4303. Advantageously, the soft tank 4301 comprises safety measures in case any of the at least one fluid control means 4304 has a malfunction or any of the fluid propulsion means of the at least one ballast tank 4305 has a malfunction and the buoyancy of the floating fish farm 4200 needs to be adjusted.

When opening the at least one fluid control means 4304, for example where there is a valve present that requires to be opened and closed (e.g. by a user), or when there is no valve (or any other means for selectively opening and closing the fluid communication means 4303 such as by plugging) but rather simply a fluid communication means 4303 (such as an open fluid port) present, then the water level 4311 of the soft tank 4301 will change accordingly with the water level 4111 as shown in Figure 94. Although the water in the soft tank 4301 is illustrated as being at the same level as the water level 4111 of the surrounding body of water 4110, this may not necessarily be the case. The fluid control means 4304 may simply function to permit the flow of water therethrough based on a pressure difference on either side of the fluid control means 4304. While, in some examples, this may result in the water level 4311 of the soft tank 4301 being the same as the water level 4111 of the surrounding body of water 4110, in other examples this may not be the case. For instance, illustrated at the top of the soft tank is an air pocket 4312, which may be in communication with a vent (not shown) in the wall of the soft tank 4301 to permit pressure equalisation within the soft tank 4301 as fluid flows in or out. However, in some examples it may be possible to block or restrict the air vent, or there may be no air vent at all. In such examples pressure equalisation, or lack thereof, within the soft tank 4301 may result in a water level 4311 that is different to that of the water level 4111 of the surrounding body of water 4110 - as a result of the pressure on either side of the soft tank 4301 equalising and therefore no further fluid flow being possible.

The fluid control means 4304 may, optionally, be arranged at an upper portion of the soft tank 4301, for example at a top surface 4301' (see Fig. 93) of the soft tank 4301, and wherein the soft tank 4301 has a permanent opening at a lower portion of the tank (i.e. lower than the upper portion). In this case, the fluid control means 4304 may, for example, control an amount of air present in an air pocket 4312 (see below) in the soft tank 4301.

It should be understood that, although only one fluid communication means 4303 (and optional corresponding fluid communication control means 4304) is illustrated in the figures, there may be any number of fluid communication means 4303 (and optional corresponding fluid communication control means 4304) incorporated into or defined by each soft tank 4301 that forms part of the floating fish farm 4200, and that multiple smaller soft tanks 4301 may be connected to effectively form a larger soft tank 4301 in which fluid is freely permitted to flow through and between each of the smaller soft tanks 4301 (e.g. flow is not restricted or prevented by a valve or valves). Alternatively or additionally, one or each of the soft tanks 4301 may have fluid communication means 4303 on various sides/surfaces (e.g. an upper surface, a lower surface, or a laterally-facing surface) and/or at varying vertical locations to facilitate water flow and/or to control the rate at which water is able to flow into the at least one soft tank 4301, and thereby the rate of change of the water level 4311 in the at least one soft tank 4301 from its present level to the water level 4111 of the surrounding body of water 4110.

The ability of the soft tank 4301 to empty may be dependent on the number and location of fluid communication means 4303. For example, having more fluid communication means 4303, and/or fluid communication means 4303 located towards the lower side (e.g. the lower half) of the soft tank 4301 may allow the soft tank 4301 to empty more quickly than other configurations.

The soft tank 4301 may only be permitted to empty as far as the lowest located fluid communication means 4303. As such, there may be a fluid communication means 4303 located at the lowest point in the soft tank 4301, or at the bottom or towards the bottom of the soft tank 4301, to allow the soft tank 4301 to be entirely, or substantially entirely emptied. In some examples, the fluid communication means 4303 may extend through the pontoon 4202, and/or the pontoon 4202 may comprise a channel permitting fluid communication between a fluid communication means 4303 of the soft tank 4301 and the body of water 4110. Similarly, the ballast tank 4305 may comprise fluid propulsion means to adjust its water level 4315, which extend through the pontoon 4202, and/or the pontoon 4202 may comprise a channel therein permitting fluid communication between the body of water 4110 and the ballast tank 4305, through the pontoon 4202.

The fluid communication means 4303 may have a means for connection of an external component thereto. The means may be in the form of a nozzle, or a connection fixture. Such a nozzle or fixture may permit a section of conduit, or a container, to be attached to the fluid connection means 4303. The nozzle or fixture may enable filling from, or emptying to, of the soft tank 4301 to an external source. This may be useful, for example for cleaning the soft tank 4301, or for any time when it is desired to fill or empty the soft tank 4301 by a specific amount, or with a fluid other than water from the body of water 4110.

In common operation the floating fish farm 4200 may need to be submerged or lifted into the body of water 4110 for operation, maintenance, fish retrieval or the like. Additionally, the floating fish farm 4200 may be needed to be submerged or lifted in case of an emergency, or in case of operation during adverse weather conditions, damage to a part of the fish farm 4200.

The buoyancy of the floating fish farm 4200 may be changed through use of the at least one ballast tank 4305, each of the at least one ballast tank 4305 being equipped with at least one fluid propulsion means to adjust its water level 4315. When changing the buoyancy of the floating fish farm 4200, the at least one soft tank 4301 may assist to reduce the power needed to change the buoyancy, i.e. to reduce volume the water that is required to be pumped in order to change the buoyancy of the fish farm 4200 by a desired amount - for example to raise or lower the fish farm by a desired height. If the at least one soft tank 4301 comprises any fluid control means 4304, e.g. a valve, located at the fluid communication means 4303, then the fluid control means 4304 may need to be configured to an open position, or a position in which fluid flow through the fluid communication means 4303 is permitted, before the ballast tanks 4305 are filled/emptied. When the at least one ballast tank 4305 is filled/emptied, for example by utilizing the at least one equipped fluid propulsion means for adjusting the water level 4315 of the at least one ballast tank 4305, the buoyancy of the floating fish farm 4200 changes. Accordingly, the water level 4311 in the at least one soft tank 4301 adjusts such that the water level 4111 outside the soft tank 4301 affects the water level 4311 inside the soft tank 4301 (e.g. such that the water level 4311 inside the soft tank 4301 is the same, or similar to, the water level 4111 outside the soft tank 4301). Provided that the fluid control means 4304 of a soft tank 4301 is open and in fluid communication with the body of water 4110, then reducing or increasing the buoyancy of the ballast tanks 4305 by using their fluid propulsion means will raise or lower the floating fish farm 4200, thereby also having an effect on the position of the soft tank or tanks 4301, thereby causing a change in the volume of water therein. In this case, fluid (e.g. the surrounding water) flows into or out of the soft tanks 4301 as a result of a pressure difference of the fluid on either side of the fluid communication means 4303 in the soft tanks 4301. This fluid flow through the fluid communication means 4303 is able to happen without the need for any fluid propulsion means (such as a fluid pump), and therefore the use of the soft tanks 4301 reduces the volume of water needed to be pumped into/out of the ballast tanks 4305.

Alternatively or additionally, the soft tanks 4301 may be used to selectively alter the buoyancy, stability and/or moment of inertia of the floating fish farm 4200, e.g. to reduce the effect of wave motion on the floating fish farm 4200, thereby also reducing the likelihood of the floating fish farm 4200 becoming damaged or difficult to operate due to wave motion of the surrounding body of water 4110.

Figure 95 shows an embodiment of the floating fish farm 4200, wherein the at least one soft tank 4301a,b and the at least one ballast tank 4305a,b are both part of the respective at least one column 4201a,b, and in this embodiment define at least a part of their respective columns 4201a,b.

The water levels 4315a,b in the ballast tanks 4305a,b and the water levels 4311a,b in the soft tanks 4301a,b may be adjusted to selectively alter the buoyancy, stability and/or moment of inertia of the floating fish farm 4200. The water levels 4315a,b in the ballast tanks 4305a,b may be changed with the equipped at least one fluid propulsion means, e.g. a pump. The water levels 4311a,b in the soft tanks 4301a,b may be adjusted by lifting/lowering the floating fish farm 4200 to a desired water level by adjusting the water levels 4315a,b in the ballast tanks 4305a,b, permitting fluid flow through the at least one fluid communication means 4303 by opening the at least one fluid control means 4304 (e.g. by opening a valve) and letting the water levels 4311a,b in the soft tanks 4301a,b adjust to the water level 4111 of the surrounding body of water 4110. Then the at least one fluid control means 4304 may be closed and the ballast tanks 4305a,b may be filled/emptied by a desired amount to obtain a desired buoyancy and position relative to the water level 4111 of the floating fish farm 4200 in the body of water 4110 with the desired water levels 4311a,b in the soft tanks 4301a,b and the desired water levels 4315a,b in the ballast tanks 4305a,b.

By selectively altering the water levels 4311a,b in the soft tanks 4301a,b and the water levels 4315a,b in the ballast tanks 4305a,b, the buoyancy, stability and/or moment of inertia of the floating fish farm 4200 may be changed. For example, the floating fish farm 4200 has the same buoyancy in Figures 95 and 96, but the water levels 4311a,b in the soft tanks 4301a,b and the water levels 4315a,b in the ballast tanks 4305a,b are different. The configuration of Figure 95 has higher water levels 431 1a,b in the at least one soft tank 4301a,b and lower water levels 4315a,b in the at least one ballast tank 4305a,b. Due to the symmetrical loading about the vertical axis in the orientation of Figures 95 and 96, the centre of mass of both configurations is on the vertical axis of the floating fish farm 4200. However, due to the differing distribution of water in the at least one soft tank 4301a,b and in the at least one ballast tank 4305a,b the centre of mass of the configuration shown in Figure 95 is higher than the centre of mass in the configuration of Figure 96. Therefore, the moment of inertia of the floating fish farm 4200 differs between the configurations of Figure 95 and 96 which also has an effect on the stability of the floating fish farm 4200. In this example, it may be faster for an operator to configure the floating fish farm 4200 as in Figure 96 than in Figure 95, as no opening/closing of the fluid control means 4304 to allow/prevent fluid flow through the fluid communication means 4303 into/out of the soft tanks 4301a,b is necessary, and filling/emptying of the ballast tanks 4305a,b and soft tanks 4301a,b may be done simultaneously. In contrast, Figure 95 presents an example that requires opening/closing of the fluid control means 4304 to prevent fluid flow through the fluid communication means 4303 into/out of the soft tanks 4301a,b, and also requires the ballast tanks 4305a,b to be emptied to move the floating fish farm 4200 to a higher water level compared to the surrounding body of water to adjust the water levels 4311a,b in the soft tanks 4301a,b to the shown water levels 4311a,b of the soft tanks 4301a,b of Figure 95, and then to fill the ballast tanks 4305a,b again to adjust the water levels 4315a,b in the ballast tanks 4305a,b to the water levels 4315a,b of the ballast tanks 4305a,b shown in Figure 95. As the water levels 4311a,b in the soft tanks 4301a,b and the water levels 4315a,b in the ballast tanks 4305a,b may be selectively adjusted, the operator may select a configuration suitable to his needs, e.g. based on whether it is necessary to accommodate for weather conditions and/or waves, or based on whether changing the buoyancy quickly is particularly advantageous. Having higher water levels 4315a,b in the ballast tanks 4305a,b may have the effect of an increase of the moment of inertia of the floating fish farm 4200 shown in these embodiments and may increase the stability of the floating fish farm 4200 which is affected by tidal motion. Having more water in the higher elevations of the at least one soft tank 4301a,b or ballast tank 4305a,b may call for more structural stability which will be addressed later in this disclosure.

In some examples the at least one soft tank 4301a,b or ballast tank 4305a,b may be arranged differently to that shown in Figures 95 and 96, e.g. the at least one soft tank 4301a,b may be arranged on the outer side of the at least one ballast tank 4305a,b, (e.g. the side of the ballast tank 4305a,b further from the central, vertical axis of the floating fish farm 4200). In such a case, it may be beneficial to have higher water levels 4315a,b in the at least one ballast tank 4305a,b in order to e.g. increase the stability of the floating fish farm 4200.

The water levels 4311a,4315a also do not have to be the same in the left side tanks 4301a,4305a compared to the water levels 4311b,4315b in the right side tanks 4301b,4305b. The operator may choose to adjust the buoyancy of the floating fish farm 4200 by selectively increasing/decreasing the water levels 4311a,4315a,4311b,4315b in the tanks on one side of the floating fish farm 4200. This may be useful if the floating fish farm 4200 is experiencing an uneven loading, for example if there is equipment placed thereon.

The soft tanks 4301a,b may also be used to soften the tidal motion of the floating fish farm 4200 by opening the at least one fluid control means 4304 to enable fluid flow through the fluid communication means 4303 into the soft tanks 4301a,b. As the floating fish farm 4200 is rocked by tidal motion of the body of water in which it is located, there will be a lag in the rocking motion of the floating fish farm 4200 as compared to the water in which it is located. During this lag, the at least one soft tank 4301a,b on the respective side of the floating fish farm 4200 may begin to fill/empty with water, thereby adjusting the buoyancy of the floating fish farm 4200. This may reduce the effect of the forces acting on the floating fish farm 4200 as a result of the rocking motion by effectively serving to dampen the rocking motion.

Figure 97 shows an advantageous embodiment, wherein the cross sectional area of the soft tank 4301 reduces at a higher elevation. In this example, the width w1 of the soft tank 4301 at a higher elevation is smaller than the width w2 of the soft tank 4301 at a lower elevation, thereby also corresponding to a smaller cross-sectional area at the higher elevation as compared to the lower elevation. Having a soft tank 4301 as described may have the effect of lowering the centre of gravity of the soft tank 4301, by permitting a larger volume of water to be held lower in the soft tank 4301. Since the soft tank 4301 is coupled/attached to a pontoon 4202 at a lower end thereof (according to the orientation of Figure 97) then lowering the centre of gravity of the soft tanks 4301 may reduce the structural stresses acting at the junction between the soft tank 4301 and the pontoon 4202 and/or the column 4201 by reducing the magnitude of the bending moments acting at this location. As such, providing the soft tanks 4301 with the shape as described permits the user an option of altering the buoyancy while inducing reduced structural stress on the floating fish farm 4200. In an alternative example, the ballast tank 4305 (i.e. a tank equipped with fluid propulsion means for controlling fluid flow into/out of the tank, e.g. a fluid pump) may have the illustrated configuration of having a smaller cross-sectional area at a higher elevation.

Figure 98 shows an alternative embodiment, wherein the soft tank 4301 does not extend the full height of the column 4201, but only has a height h1, which is smaller than the height of the column. Thereby the soft tank 4301 does not create as large forces at the point of connection between the column 4201 or pontoon 4202 as a higher soft tank 4301 does, thereby reducing the risk of structural failure.

Figure 99 shows another advantageous embodiment, wherein the at least one soft tank 4301 comprises a varying cross-section at the water level 4111 of the body of water 4110 to accommodate for the structural stability. Herein, the cross-section at the water level 4111 of the body of water 4110 when the floating fish farm 4200 is in an operational mode, i.e. is lowered into the water for production of fish, changes linearly (although it should be understood that other deviations in cross-section are possible, such as non-linear deviations) with elevation to reduce the structural stress by reducing the volume of water that is able to be stored at higher elevations. Additionally, the changing cross-section (e.g. the linearly changing cross-section) may arrange for increased buoyancy with increased loading to compensate for varying loading conditions, e.g. consumables and growth.

Any of the mentioned improvements for structural strength, e.g. aspects from Figures 97-99, may additionally have an effect on the stability of the floating fish farm 4200. When the floating fish farm 4200 tilts or rocks due to the effects of tidal motion, the water in any tanks may adjust to the tilt, which will affect the stability of the fish farm 4200, in some cases in an undesirable way. Reducing the cross-sectional area of the tanks lessens this negative impact of the water in the tanks. Additionally, blade like structures may be included in the tanks to created separate compartments in the tanks as is done at oil tankers to further reduce this effect and therefore improve the stability of the floating fish farm 4200. Preferably, the outside shape of the at least one soft tank 4301 and/or the at least one ballast tank 4305 may be rectangular, which is beneficial for hydrodynamic behaviour.

The person skilled in the art would be able to alter the size and the shape of the at least one soft tank 4301 and the at least one ballast tank 4305 according to their needs, and may use the variability in the shape of each of the soft tank 4301 and the ballast tank 4305 to design a structure that is suited to their specific needs.

Figure 100 shows another advantageous embodiment, which comprises the benefits of varying cross-sections disclosed in Figure 97 and a wave energy converter 4308, which converts the energy of the oscillating tidal water motion in any of the at least one soft tank 4301 or any of the at least one ballast tank 4305 into energy. The wave energy converter 4308 may be a turbine or propeller, which may function in any or both of air and water. The wave energy converter 4308 may be installed anywhere in the soft tank 4301 or the ballast tank 4305, and in this example is illustrated on top of the soft tank 4301 to harness the energy of the vented air or at the fluid connections 4303 directly harnessing the energy of the incoming/outgoing water. Preferably, the geometry inside the tank 4301,4305 may be optimized for energy production, i.e. facilitating the tidal water motion inside the tank to not waste energy of the water overcoming obstacles.

The person skilled in the art will understand that multiple of these advantageous embodiments according to the disclosure may be combined, e.g. the turbine for power generation of Figure 100 may be combined with the varying cross-section at sea level of Figure 99 or the cross-section may have various cross sectional areas at different elevations as in Figure 97 and cross-section varies at sea level as in Figure 99.

Some examples and aspects will now be described in the following numbered, non-limiting, M-clauses:
CLAUSE M1. A variable buoyancy arrangement for a floating fish farm 4200, comprising:
   at least one ballast tank 4305 comprising a ballast fluid port and a fluid propulsion means for flowing a fluid into and out of the ballast tank 4305;
   at least one soft tank 4301 comprising a passive fluid port 4303 to permit fluid flow into and out of the soft tank 4301.
CLAUSE M2, The variable buoyancy arrangement according to clause M1, wherein the passive fluid port 4303 is selectively openable and closable.
CLAUSE M3. The variable buoyancy arrangement according to any of clauses M1 or M2, the soft tank 4301 being connected to the ballast tank 4305;
CLAUSE M4. The variable buoyancy arrangement according to any of clauses M1-M3, wherein
   both the ballast fluid port and the passive fluid port 4303 being configurable to be placed in fluid communication with a fluid source to permit the fluid propulsion means to flow a fluid into and/or out of the ballast tank 4305 via the ballast fluid port, so as to change the buoyancy of the ballast tank 4305; and
   wherein the change in buoyancy of the ballast tank 4305 induces a fluid flow through the passive fluid port 4303 when the passive fluid port 4303 is selectively opened, thereby resulting in a change in buoyancy of the soft tank 4301.
CLAUSE M5. The variable buoyancy arrangement according to any of clauses M1-M4, wherein the ballast tank 4305 is directly connected to the soft tank 4301.
CLAUSE M6. The variable buoyancy arrangement according to any of clauses M1-M5, wherein a wall of the ballast tank 4305 is connected to a wall of the soft tank 4301.
CLAUSE M7. The variable buoyancy arrangement according to any of clauses M1-M6, wherein a wall of the ballast tank 4305 is additionally a wall of the soft tank 4301.
CLAUSE M8. The variable buoyancy arrangement according to any of clauses M1-M7, wherein the ballast tank 4305 is integrally formed with the soft tank 4301.
CLAUSE M9. The variable buoyancy arrangement according to any of clauses M1-M8, comprising a plurality of ballast tanks 4305 and a plurality of soft tanks 4301.
CLAUSE M10. The variable buoyancy arrangement according to any of clauses M1-M9, wherein the number of ballast tanks 4305 is equal to the number of soft tanks 4301.
CLAUSE M11. The variable buoyancy arrangement according to any of clauses M1-M10, comprising at least one ballast tank 4305 and at least one soft tank 4301, and wherein the volume of the at least one ballast tank 4305 and the at least one soft tank 4301 is the same.
CLAUSE M12. The variable buoyancy arrangement according to any of clauses M1-M11, wherein at least one of the ballast fluid port and the passive fluid port 4303 is located in the bottom half of their respective tanks 4305,4301 in an orientation intended for operation.
CLAUSE M13. The variable buoyancy arrangement according to any of clauses M1-M12, wherein both of the ballast fluid port and the passive fluid port 4303 are located in the bottom half of their respective tanks 4305,4301 in an orientation intended for operation.
CLAUSE M14. The variable buoyancy arrangement according to any of clauses M1-M13, wherein at least one of the ballast fluid port and the passive fluid port 4303 comprises a means for connection of a fluid source, such as a nozzle.
CLAUSE M15. The variable buoyancy arrangement according to any of clauses M1-M14, wherein the passive fluid port 4303 comprises a valve 4304 therein for permitting the passive fluid port to be selectively opened and closed.
CLAUSE M16. The variable buoyancy arrangement according to any of clauses M1-M15, wherein the valve 4304 is remotely controllable.
CLAUSE M17. The variable buoyancy arrangement according to any of clauses M1-M16, wherein the valve is arranged at an upper portion of the soft tank 4301, for example at a top surface 4301' of the soft tank 4301.
CLAUSE M18. The variable buoyancy arrangement according to any of clauses M1-M17, wherein the soft tank 4301 has a permanent opening at a lower portion of the soft tank 4301.
CLAUSE M19. The variable buoyancy arrangement according to any of clauses M1-M18, wherein the volume of at least one of the soft tank 4301 and the ballast tank 4305 in the lower half thereof is greater than the volume in the upper half thereof, in an orientation intended for operation.
CLAUSE M20. The variable buoyancy arrangement according to any of clauses M1-M19, wherein the volume of at least one section of the soft tank 4301 and the ballast tank 4305 linearly decreases with increasing height, in an orientation intended for operation.
CLAUSE M21. The variable buoyancy arrangement according to any of clauses M1-M20, comprising a support structure, with both the ballast tank 4305 and the soft tank 4301 being connected to the support structure.
CLAUSE M22. The variable buoyancy arrangement according to any of clauses M1-M21, wherein at least a part of the support structure is planar in shape and horizontally disposed relative to an orientation intended for operation.
CLAUSE M23. The variable buoyancy arrangement according to any of clauses M1-M22, installed on a floating fish farm 4200.
CLAUSE M24. The variable buoyancy arrangement according to any of clauses M1-M23, wherein the floating fish farm 4200 comprises a ring- or polygonal shaped floating collar 4102 and an enclosure 4103 for fish suspended from and supported by the floating collar 4102.
CLAUSE M25. The variable buoyancy arrangement according to any of clauses M1-M24, wherein the variable buoyancy arrangement comprises a plurality of soft tanks 4301 disposed about the floating collar 4102, for example wherein four soft tanks are disposed at 4190 degrees intervals about the floating collar 4102.
CLAUSE M26. The variable buoyancy arrangement according to any of clauses M1-M25, the floating collar 4102 having a lower buoyancy member 4107, an upper buoyancy member 4109 and a plurality of columns 4108 interconnecting the upper and lower buoyancy members 4107,4109, wherein the soft tank 4301 or plurality of soft tanks 4301 is/are arranged in the columns 4108.
CLAUSE M27. A method for varying the buoyancy of a floating fish farm 4200, comprising
   providing a ballast tank 4305 and a soft tank 4301 on the floating fish farm 4200;
   flowing water to and/or from the ballast tank 4301 via a fluid propulsion means to vary the buoyancy of the ballast tank 4305 and the associated floating fish farm 4200, such that a flow of water is induced through a passive fluid port 4303 in the soft tank 4301.
CLAUSE M28. The method of clause M27, comprising flowing water into the ballast tank 4305 via the fluid propulsion means to induce a flow of water into the soft tank 4301, thereby decreasing the buoyancy of the soft tank 4301.
CLAUSE M29. The method of clause M27 or M28, comprising flowing water out of the ballast tank 4305 via the fluid propulsion means to induce a flow of water out of the soft tank 4301, thereby increasing the buoyancy of the soft tank 4301.

The person skilled in the art realizes that the present disclosure is not limited to the preferred embodiments described above. The person skilled in the art further realizes that modifications and variations are possible within the scope of the appended claims. For example, ballast tanks described in relation to one example may be used in relation to another example. Additionally, variations to the disclosed embodiments can be understood and effected by the skilled person in practicing the claimed disclosure, from a study of the drawings, the disclosure, and the appended claims.

The invention is not limited by the embodiments described above; reference should be had to the appended claims.

## Claims

1. A fish farm (1100) comprising:
a first enclosure (1130),
a second enclosure (1140);
the first enclosure (1130) being connected to the second enclosure (1140) by an access arrangement (1150) for selectively permitting movement of a fish between the first enclosure (1130) and the second enclosure (1140); and
the first enclosure (1130) and the access arrangement (1150) being positioned within the fish farm (1100) such that both the first enclosure (1130) and the access arrangement (1150) are fully submergible when positioned in a body of water.

2. The fish farm (1100) according to claim 1, comprising a restrictor arrangement (1160) in cooperation with the access arrangement (1150) for selectively permitting access between the first and second enclosures (1130,1140).

3. The fish farm (1100) according to claim 2, wherein the restrictor arrangement (1160) is located in the access arrangement (1150).

4. The fish farm (1100) according to claim 2 or 3, wherein the restrictor arrangement (1160) comprises a plurality of rigid bars with spaces therebetween for permitting a fish to pass therethrough.

5. The fish farm (1100) according to any of claims 2 to 4, wherein the restrictor arrangement (1160) comprises a first and a second set of rigid bars (1164,1165), each set having spaces therebetween for permitting a fish to pass therethrough, the first set of rigid bars (1164) being slidably moveable relative to the second set of rigid bars (1165) between an open position, in which the spaces between the rigid bars of the first and second set of rigid bars (1164,1165) are aligned, and a closed position, in which the rigid bars of the first set of rigid bars (1164) are aligned with the spaces of the second set of rigid bars (1165), thereby restricting passage of a fish therethrough.

6. The fish farm (1100) of claim 5, wherein the first set of rigid bars (1164) may be positioned relative to the second set of rigid bars (1165) such that the bars of the first set of rigid bars (1164) partially overlap with the spaces of the second set of rigid bars (1165), thereby reducing the space available for passage of a fish therethrough.

7. The fish farm (1100) according to any of claim 1 to 6, comprising a sensor arrangement (1169) comprising a counter for counting the number of fish passing through the access arrangement (1150).

8. The fish farm according to any of claims 1 to 7, comprising a lure arrangement (1145) for motivating movement of a fish from the first enclosure (1130) to the second enclosure (1140).

9. The fish farm (1100) according to claim 8, wherein the lure arrangement comprises at least one of: a supply of fish feed, an air pocket, a light, speaker/sound transmitter and a fluid propeller.

10. The fish farm (1100) according to claim 8 or 9, wherein the lure arrangement is located in each enclosure (1130,1132,1140) of the fish farm (1100).

11. The fish farm (1100) according to any of claims 9 to 11, wherein the lure arrangement is able to be selectively activated within an enclosure (1130,1132,1140) of the fish farm (1100).

12. The fish farm (1100) according to any of claims 1 to 11, wherein at least one of the first and second enclosures (1130,1140) comprises a volume restriction device (1180) for reducing the volume of space available to a fish therein.

13. The fish farm (1100) according to any of claims 1 to 12, wherein both the first and second enclosures (1130, 1140) are contained within an outer enclosure (1111).

14. A method for managing fish in a fish farm (1100), comprising:
providing a first enclosure (1130) and a second enclosure (1140) the first enclosure (1130) being connected to the second enclosure (1140) by an access arrangement (1150) for selectively permitting movement of a fish between the first enclosure (1130) and the second enclosure (1140);
housing a fish in the first enclosure (1130);
permitting a fish in the first enclosure (1130) access to the second enclosure (1140) by positioning the first enclosure (1130) and the access arrangement (1150) such that both are fully submerged when positioned in a body of water.

15. The method of claim 14, comprising using the lure arrangement to motivate a fish to move from the first enclosure (1140) to the second enclosure (1132).
